# EUROPÄISCHE PATENTANMELDUNG

(11) **EP 4 450 410 A1**
(43) Veröffentlichungstag der Anmeldung: **23.10.2024**
(21) Anmeldenummer: 24166799.7
(22) Anmeldetag: 27.03.2024
(51) Int. Cl.: B65D 1/02

(54) **KUNSTSTOFFBEHÄLTNIS MIT ABGEFLACHTEN STANDFÜSSEN UND BLASFORMEINRICHTUNG**

(30) Priorität: 18.04.2023 DE 102023109675
(71) Anmelder: Krones AG, 93073 Neutraubling (DE)
(72) Erfinder: Knapp, Peter, 93073 Neutraubling (DE); Tissmer, Bastian, 93073 Neutraubling (DE)
(74) Vertreter: Bittner, Bernhard

(57) **Zusammenfassung**

Kunststoffbehältnis (1), insbesondere für Getränke, mit einem Bodenbereich (2), einem sich in Längsrichtung (L) des Kunststoffbehältnisses (1) an diesen Bodenbereich (2) anschließenden Grundkörper (50) und einem sich in der Längsrichtung (L) an diesen Grundkörper (50) zumindest mittelbar anschließenden Mündungsbereich (6) mit einer Behältnismündung (8), wobei der Bodenbereich (2) wenigstens drei Standfüße (22) aufweist, wobei jeder dieser Standfüße (22) wenigstens einen sich in Umfangsrichtung (U) in Bezug auf die Längsrichtung (L) über einen Standbereich-Umfangswinkel (ass) erstreckenden Standbereich (24) mit jeweils wenigstens einer, insbesondere im Wesentlichen ebenen, Standfläche (23) zum aufrechten Stehen des Kunststoffbehältnisses (1) aufweist, wobei zwischen zwei, insbesondere benachbarten, dieser Standfüße (22) wenigstens eine Nut (30) mit einem als Zugband wirkenden Nutgrund (32) angeordnet ist, welcher sich in radialer Richtung (R) des Kunststoffbehältnisses (1) nach außen verbreitert, wobei die wenigstens drei Standfüße in Umfangsrichtung (U) von jeweils wenigstens einem Fußseitenbereich (26) und in eine radiale Richtung (R) nach außen hin von einem Fußaußenbereich (28) begrenzt sind. Erfindungsgemäß weisen die wenigstens drei Standfüße in einem Eckbereich (E) der Standfüße, in welchem der Standbereich (24), der Fußseitenbereich (26) und der Fußaußenbereich (28) aufeinandertreffen, wenigstens einen Abflachungsbereich (40) auf, welcher eine Abflachung des jeweiligen Standfußes (22) in dem Eckbereich (E) bewirkt.

## Beschreibung

Die vorliegende Erfindung bezieht sich auf ein Kunststoffbehältnis, bevorzugt ein PET-Kunststoffbehältnis und/oder auf eine Kunststoffflasche. Insbesondere bezieht sich die vorliegende Erfindung auf ein Kunststoffbehältnis für Getränke. Daneben ist die Erfindung auch auf eine Bodenstruktur für ein derartiges Kunststoffbehältnis gerichtet. Kunststoffbehältnisse werden im Stand der Technik üblicherweise durch Blasformvorgänge und insbesondere Streckblasvorgänge erzeugt. Dazu werden insbesondere erwärmte Kunststoffvorformlinge innerhalb von Blasformen zu Kunststoffbehältnissen bzw. zu Kunststoffflaschen expandiert.

Aus dem Stand der Technik sind sogenannte Petaloid-Flaschenböden bekannt. Behältnisse mit einem Petaloid-Flaschenboden weisen eine Vielzahl von Standfüßen, oftmals fünf Standfüße auf. Beispielsweise tragen die Behältnisböden das Gewicht der gefüllten Flaschen und sind daher relativ hohen Belastungen ausgesetzt. Aus dem Stand der Technik ist bekannt, dass zwischen diesen Standfüßen Nute verlaufen.

Für das Design der PET-Petaloid-Flaschenböden in heißen Regionen wird im Stand der Technik ein sogenanntes Zugband verwendet, wofür aus dem Stand der Technik die Verwendung einer rotierten Fläche als Zugband zwischen den (Stand-)Füßen bekannt ist, welche mehr Material sammelt, um ähnlich einem "Sicherheitsgurt" das Bodenzentrum auch unter Innendruck und Temperatureinwirkung in Position zu halten.

Aus der DE 10 2013 110 139 A1 ist ein Kunststoffbehältnis mit einem Petaloidboden bekannt, bei welchem zwischen jeweils zwei benachbarten Standfüßen ein Zugband als Nutgrund ausgebildet ist, welches nach außen gewölbt ist und in Umfangsrichtung gesehen eine konstante Krümmung aufweist. Die Bodenwandung des Behältnisses ist damit insbesondere im Bereich eines Nutgrundes und insbesondere in dem Bereich einer geometrischen Mutter des Nutgrundes nach außen gewölbt, vergleichbar mit einem Bereich einer Kugeloberfläche. Außerdem ist beschrieben, dass die Zugbandfläche durch eine Rotation um eine Rotationsachse erzeugt wird.

Um Kunststoffbehältnisse mit einem derartigen Petaloidboden herzustellen, werden die Kunststoffvorformlinge mit einem unter einem (Fertig-)Blasdruck von über 20 bar stehenden Blasluft (und/oder fluidem Blasmedium) beaufschlagt. Nachteilig ist zur Herstellung ein vergleichsweise hoher Druck der Blasluft zur Ausformung des Behältnisses erforderlich, welcher sich in den Herstellungskosten niederschlägt.

Der Fertigblasdruck, d.h. der Druck, mit dem der Kunststoffvorformling vollständig ausgeformt wird, stellt einen maßgeblichen Anteil des Energiebedarfs des Blasformvorgangs dar, so dass dieser möglichst gering sein sollte. Entscheidend für die Höhe des Fertigblasdrucks ist dabei insbesondere die Ausprägung der letzten Ecken des Behältnisses, insbesondere in den Eckbereichen der Standfüße beispielsweise eines Petaloidbodens.

Der vorliegenden Erfindung liegt die Aufgabe zugrunde, die aus dem Stand der Technik bekannten Nachteile zu überwinden und ein Kunststoffbehältnis sowie eine Blasformeinrichtung zur Herstellung dieser Kunststoffbehältnisse bereitzustellen, die eine energieeffiziente Herstellung erlauben, so dass die Herstellungskosten des Behältnisses und damit auch die Energiekosten reduziert werden können. Zugleich ist es Aufgabe, eine hohe Bodenstabilität des Behältnisses zu erreichen sowie eine möglichst optimale Verteilung des Kunststoffmaterials bei der Herstellung des Kunststoffbehältnisses (etwa in einem Streckblasverfahren, in welchem ein Kunststoffvorformling mittels Beaufschlagung mit fluidem Medium gegen eine Blasform, welche eine Bodenform aufweist) zu bieten.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Ein erfindungsgemäßes Kunststoffbehältnis, insbesondere für Getränke, weist einen Bodenbereich, einen sich in Längsrichtung des Kunststoffbehältnisses an diesen Bodenbereich anschließenden Grundkörper und einen sich in der Längsrichtung an diesen Grundkörper zumindest mittelbar anschließenden Mündungsbereich mit einer Behältnismündung auf.

Dabei weist der Bodenbereich wenigstens drei Standfüße, bevorzugt wenigstens fünf und besonderes bevorzugt genau fünf Standfüße auf. Bevorzugt ist der Bodenbereich als Petaloid-Boden ausgestaltet.

Bei der Längsrichtung handelt es sich insbesondere um eine Richtung entlang einer Mittelachse des Kunststoffbehältnisses. Die Mittelachse des Kunststoffbehältnisses erstreckt sich insbesondere (mittig) durch die (Öffnung der) Behältnismündung (und auch insbesondere mittig durch einen Bodenbereich des Behältnisses und/oder durch ein Bodenzentrum des Bodenbereichs, insbesondere durch einen Anspritzpunkt). In (aufrecht) stehender Position des Behältnisses erstreckt sich die Mittelachse insbesondere parallel zu einer vertikalen Richtung. Bevorzugt verläuft die Längsrichtung von einem Bodenbereich (entlang der Mittelachse) in Richtung des Mündungsbereichs des Kunststoffbehältnisses.

Unter einer Umfangsrichtung ist bevorzugt eine Drehrichtung um die (als Drehachse gewählte) Mittelachse (bzw. Längsrichtung) des Behältnisses zu verstehen.

Unter einer radialen Richtung (bezogen auf die Längsrichtung und/oder die Mittelachse) wird im Folgenden eine Richtung bezogen auf die Längsrichtung (bzw. die Mittelachse des Behältnisses) verstanden, welche senkrecht auf die Längsrichtung (bzw. die Mittelachse) steht und welche insbesondere sich von dieser (insbesondere von der Mittelachse) ausgehend (geradlinig und insbesondere in eine Richtung senkrecht zur Mittelachse) entfernt.

Jeder dieser (wenigstens drei) Standfüße weist wenigstens einen sich in Umfangsrichtung in Bezug auf die Längsrichtung über einen Standbereich-Umfangswinkel (sowie in radiale Richtung in Bezug auf die Längsrichtung) erstreckenden Standbereich mit jeweils wenigstens einer, insbesondere im Wesentlichen ebenen, Standfläche zum aufrechten Stehen des Kunststoffbehältnisses auf. Mit anderen Worten bildet die Standfläche eines Standfußes in auf einer Standebene (aufrecht bzw. auf seinem Bodenbereich bzw. auf seinen wenigstens drei Standfüßen) stehendem Zustand die Kontaktfläche des Standfußes zwischen dem Standfuß und der Standebene.

Bevorzugt ist der Standbereich-Umfangswinkel ausgewählt aus einem Winkelbereich zwischen 5° und 15°, bevorzugt zwischen 7° und 12° und besonders bevorzugt zwischen 8° und 10° und besonders bevorzugt im Wesentlichen bei 9°.

Bevorzugt erstreckt sich die Standfläche über den gesamten Standbereich-Umfangswinkel. Bevorzugt erstreckt sich der Standbereich von dem Bodenzentrum (insbesondere dem Anspritzpunkt) bis hin zum Grundkörper. Bevorzugt erstreckt sich der Standbereich im Wesentlichen entlang dessen vollständiger radialer Erstreckung über den im Wesentlichen vollständigen Standbereich-Umfangswinkel. Mit anderen Worten erstreckt sich der Standbereich in jedem Abstand von der Mittelachse über den nahezu selben Winkel, dem Standbereich-Umfangswinkel. Bevorzugt ist der Standbereich im Wesentlichen in Umfangsrichtung gesehen gleich konstruiert bzw. gleich ausgestaltet (zumindest eine Haupterstreckungsfläche des Standbereichs).

Bevorzugt weist jeder Standfuß genau eine Standfläche auf. Bevorzugt ist die Standfläche (jeweils) kreisringsegmentförmig ausgebildet.

Unter dem Umfangswinkel wird bevorzugt ein Winkel in Umfangsrichtung um die Mittelachse nach einer Projektion in eine Ebene senkrecht zur Mittelachse verstanden. Insbesondere wird der Standbereich-Umfangs, über welchen sich der Standbereich erstreckt, gemessen (als Winkel in Umfangsrichtung um die Mittelachse) an der Projektion des Standbereichs in eine Ebene senkrecht zur Längsachse.

Dabei ist zwischen (insbesondere jeweils) zwei, insbesondere benachbarten, dieser Standfüße wenigstens eine Nut mit einem - bevorzugt als Zugband (insbesondere zwischen einem Bodenzentrum, etwa ein Anspritzpunkt, des Bodenbereichs und dem Grundkörper) wirkenden - Nutgrund angeordnet. Bevorzugt verbreitert sich der Nutgrund in radialer Richtung des Kunststoffbehältnisses nach außen. Bevorzugt erfolgt die Verbreiterung (bevorzugt stetig und besonders bevorzugt linear) mit steigendem Abstand zur Mittelachse und/oder zum Bodenzentrum. Unter Verbreiterung wird insbesondere verstanden, dass sich eine Breite des Nutgrundes (wobei unter Breite eine Ausdehnung in Umfangsrichtung verstanden wird) in einer radialen Richtung des Behältnisses nach außen vergrößert.

Denkbar ist auch, dass der Nutgrund (insbesondere ab einem vorgegebenen Abstand zur Mittelachse), insbesondere im Wesentlichen) dieselbe Breite aufweist, also insbesondere (wobei unter Breite eine Ausdehnung in Umfangsrichtung verstanden wird). So könnte beispielsweise mit Ausnahme eines Anfangsbereichs des Nutgrunds, in welchem sich der Nutgrund (noch), insbesondere kontinuierlich und/oder stetig, verbreitert, nach Erreichen des vorgegebenen Abstands die Breite des Nutgrunds bzw. die Ausdehnung des Nutgrunds in Umfangsrichtung (im Wesentlichen), insbesondere über den gesamten übrigen Bereich des Nutgrunds und/oder über den gesamten übrigen Bereich des Nutgrunds ausgenommen eines Endabschnitts, konstant bleiben. Bevorzugt ist der vorgegebene Abstand zur Mittelachse bei wenigstens zwei, bevorzugt bei wenigstens drei, bei wenigstens vier und besonders bevorzugt bei allen Nutgründen (im Wesentlichen) gleich.

Bevorzugt erstreckt sich der Nutgrund in Umfangsrichtung über einen (vorgegebenen) Nutgrund-Umfangswinkel. Dabei wirkt der Nutgrund als Zugband. Bevorzugt bildet der Nutgrund (im Wesentlichen vollständig und bevorzugt vollständig) das Zugband aus. Insbesondere ist der Nutgrund über den (vorgegebenen) Umfangswinkel derart ausgestaltet (insbesondere durch dessen Form), dass dieser als Zugband wirkt bzw. geeignet ist, als Zugband zu wirken. Bevorzugt folgt der Nutgrund im Wesentlichen einem halbkugelförmigen und/oder einem ellipsoiden Verlauf. An die Geometrie einer Kugel (bzw. Halbkugel) angenäherte Verläufe bieten den Vorteil einer besonders stabilen Kräfteübertragung von dem Bodenzentrum zum Grundkörper, um die auf das (in auf einer Standebene aufrecht stehendem Zustand des Kunststoffbehältnisses die Standebene nicht berührende) Bodenzentrum wirkende Gewichtskraft (des Füllguts) auf die Behältniswandung (insbesondere des Grundkörpers) zu verteilen.

Bevorzugt kontaktiert das Bodenzentrum (insbesondere der Anspritzpunkt, welche bevorzugt das Bodenzentrum bildet) in auf einer Standebene aufrecht stehendem Zustand des Kunststoffbehältnisses die Standebene nicht sondern ist hiervon - um die sogenannte Bodenfreiheit - von der ebenen Standfläche beabstandet. Bevorzugt berühren einzig die (Standflächen der Standbereiche der) Standfüße die Standebene.

Weiterhin ist das Behältnis bevorzugt einteilig ausgebildet.

Insbesondere wird der Nutgrund-Umfangswinkel, über welchen sich der Nutgrund erstreckt, gemessen (als Winkel in Umfangsrichtung um die Mittelachse) an der Projektion des Nutgrunds in eine Ebene senkrecht zur Längsachse.

Dabei sind die wenigstens drei Standfüße (jeweils) in Umfangsrichtung (und entgegen der Umfangsrichtung) von jeweils wenigstens einem Fußseitenbereich und in eine radiale Richtung nach außen hin von einem Fußaußenbereich begrenzt.

Mit anderen Worten ist an (im Wesentlichen) jedem Punkt des Fußaußenbereichs die Haupterstreckungsrichtung eines Normalenvektors in radiale Richtung (nicht aber in oder entgegen der Umfangsrichtung und/oder in oder entgegen der Längsrichtung) gerichtet.

Unter Haupterstreckungsrichtung des Normalenvektors wird insbesondere diejenige Richtung ausgewählt aus den Richtungen (in oder entgegen) der Umfangsrichtung, (in oder entgegen) der radialen Richtung und (in oder entgegen) der Längsrichtung verstanden, in welcher die Komponente des Normalenvektors am größten ist. Dies gilt insbesondere für eine die Grundform des Standfußes bildenden Fußaußenbereich, welcher darüber hinaus noch zusätzlich dekorative Elemente, wie etwa Vertiefungen und/oder Erhebungen und/oder Rillen, aufweisen kann (bevorzugt aber keine weiteren Elemente aufweist, sondern im Wesentlichen glatt ausgebildet ist).

Bevorzugt ist an (im Wesentlichen) jedem Punkt des Fußseitenbereichs die Haupterstreckungsrichtung eines Normalenvektors in (oder entgegen der) Umfangsrichtung (nicht aber in oder entgegen der radialen Richtung und/oder in oder entgegen der Längsrichtung) gerichtet.

Bevorzugt ist an (im Wesentlichen) jedem Punkt der Standfläche des Standbereichs die Haupterstreckungsrichtung eines Normalenvektors in oder entgegen der Längsrichtung (nicht aber in oder entgegen der radialen Richtung und/oder in oder entgegen der Umfangsrichtung) gerichtet.

Bevorzugt grenzt der Fußaußenbereich an den Standbereich an und/oder überlappt sich bevorzugt bereichsweise mit dem Standbereich, nämlich in dem Bereich, in welchem die Haupterstreckungsrichtung des Normalenvektors des Standbereichs in radiale Richtung zeigt. Der Standbereich weist insbesondere ebenfalls Bereiche auf, in welchen der Normalenvektor eines jeden Punkts des Standbereichs eine Haupterstreckungsrichtung in radiale Richtung aufweist.

Bevorzugt ist der Fußaußenbereich (zumindest abschnittsweise) in der Art und/oder ähnlich eines Bereichs einer Mantelfläche eines Zylinders ausgebildet. Der Fußseitenbereich erstreckt sich hingegen nur innerhalb eines sehr schmalen Winkelsegments und erstreckt sich nahezu über die vollständige (maximale) radiale Ausdehnung des Kunststoffbehältnisses und/oder erstreckt sich (im Wesentlichen oder nahezu) von dem Bodenzentrum bis (nahezu) hin zu einer maximalen radialen Ausdehnung des Bodenbereichs auf derselben Höhe in Bezug auf die Längsrichtung.

Mit anderen Worten sind die Haupterstreckungsrichtungen des Fußseitenbereichs die radiale Richtung und die Längsrichtung. Mit anderen Worten sind die Haupterstreckungsrichtungen des Fußaußenbereichs die Umfangsrichtung und die Längsrichtung. Die Haupterstreckungsrichtungen der Standfläche sind bevorzugt in Umfangsrichtung und in radiale Richtung.

Erfindungsgemäß weisen die wenigstens drei Standfüße, bevorzugt die wenigstens fünf Standfüße, in einem Eckbereich der Standfüße, in welchem der Standbereich, der Fußseitenbereich und der Fußaußenbereich aufeinandertreffen, (jeweils) wenigstens einen Abflachungsbereich auf, welcher eine Abflachung des jeweiligen Standfußes in dem Eckbereich bewirkt. Insbesondere ist der Eckbereich zwischen dem Standbereich (und/oder der Standfläche), dem Fußseitenbereich und dem Fußaußenbereich angeordnet.

Die Erfindung wird nachfolgend (meist) in Bezug auf einen Standfuß und (wenigstens) eine hieran angrenzenden und/oder benachbarte Nut (und deren Nutgrund) beschrieben. Bevorzugt sind alle weiteren Standfüße der wenigstens drei und/oder der wenigstens fünf Standfüße und bevorzugt alle weiteren Standfüße des Bodenbereichs in derselben Weise ausgestaltet. Bevorzugt sind alle Standfüße und/oder jede Nut und/oder jeder Nutgrund identisch ausgestaltet.

Unter einer Abflachung ist bevorzugt zu verstehen, dass dieser Bereich eine weniger stark ausgeprägte Wölbung bzw. Krümmung aufweist als ein angrenzender Bereich. Insbesondere weicht der den Abflachungsbereich aufweisende Eckbereich von einer Kugel(-segment)form ab. Bevorzugt ist der Abflachungsbereich im Wesentlichen mittig und/oder zentral in dem Eckbereich angeordnet.

Der Abflachungsbereich weist bevorzugt eine gekrümmte und/oder gewölbte Außenfläche auf. Bevorzugt ist der (im Wesentlichen) gesamte Abflachungsbereich und/oder Eckbereich (insbesondere jeweils in beide Hauptkrümmungsrichtungen hin) nach außen gewölbt und/oder konvex ausgebildet.

Unter "nach außen gewölbt" ist dabei insbesondere zu verstehen, dass die Wandung des Behältnisses in dem jeweiligen Bereich zum Behältnisäußeren hin gewölbt ist. Unter "nach außen gewölbt" ist insbesondere zu verstehen, dass die Behältniswandung, insbesondere die Außenoberfläche des Behältnisses in dem jeweiligen Bereich konvex ausgebildet ist (wobei hier "konvex" insbesondere meint, dass eine gerade Strecke zwischen beliebig wählbaren Punkten dieser Fläche (dieses Bereichs) komplett im Behältnisinneren (insbesondere komplett im Inneren des Bodenbereichs) und/oder nicht außerhalb des Behältnisses verläuft).

Bevorzugt ist der Fußseitenbereich des Standfußes und/oder der Eckbereich und/oder der Abflachungsbereich nicht nach innen gewölbt. Bevorzugt sind der Eckbereich und/oder der Abflachungsbereich zusammenhängende Bereiche.

Unter "nach innen gewölbt" ist entsprechend insbesondere zu verstehen, dass die Wandung des Behältnisses in dem jeweiligen Bereich zum Behältnisinneren (also beispielsweise zum Flascheninneren) hin gewölbt ist. Unter "nach innen gewölbt" ist insbesondere zu verstehen, dass die Behältniswandung, insbesondere die Außenoberfläche des Behältnisses in dem jeweiligen Bereich konkav ausgebildet ist (wobei hier "konkav" insbesondere meint, dass eine gerade Strecke zwischen beliebig wählbaren Punkten dieser Fläche bzw. dieses Bereichs komplett außerhalb der Behältniswandung und/oder komplett außerhalb des Behältnisses und/oder nicht im Behältnisinneren verläuft).

Unter einem in beide Hauptkrümmungsrichtungen konvex gekrümmten Bereich des Behältnisbodens wird insbesondere verstanden, dass die Tangentialebene in einem beliebigen Punkt des Bereichs wenigstens in dem den Punkt umgebenden Tangentialebenenbereich außerhalb des Behältnisses und/oder nicht im Behältnisinneren verläuft bzw. angeordnet ist.

Unter einem in beide Hauptkrümmungsrichtungen konkav gekrümmten Bereich des Behältnisbodens wird insbesondere verstanden, dass die Tangentialebene in einem beliebigen Punkt des Bereichs wenigstens in dem den Punkt umgebenden Tangentialebenenbereich nicht im Behältnisinneren und/oder (vollständig) außerhalb des Behältnisses verläuft bzw. angeordnet ist.

Der Eckbereich stellt dabei insbesondere einen Übergangsbereich zwischen dem Standbereich (und/oder der Standfläche), dem Fußseitenbereich und dem Fußaußenbereich dar. Durch die Abflachung wird insbesondere bewirkt, dass ein Übergang zwischen dem Standbereich und dem Fußseitenbereich, zwischen dem Standbereich und dem Fußaußenbereich und/oder zwischen dem Fußseitenbereich und dem Standbereich (und/oder der Standfläche) nicht in im Wesentlichen einem Eckpunkt aufeinandertreffen.

Mit anderen Worten wird durch das Vorsehen eines Abflachungsbereich (und der Abflachung des Eckbereichs) erreicht, dass der Behältnisboden in diesem Bereich näher an dem Zugband bzw. Nutgrund angeordnet sind und/oder während des Blasprozesses des Kunststoffvorformlings von diesem besser erreicht wird. Der Abflachungsbereich bietet den wesentlichen Vorteil, dass ein deutlich geringerer Blasdruck zum Ausformen des Eckbereichs bzw. der Standfüße erforderlich ist.

In aufwändigen Testversuchen hat die Anmelderin durch Vergleich mit einem Bodenbereich der Ausgestaltung ohne Abflachungsbereich, beispielsweise dem in der Patentanmeldung DE 10 2013 110 139 A1 beschriebene Bodenbereich der Anmelderin, festgestellt, dass durch die Abflachung ein wesentlich niedrigerer Blasdruck zur Herstellung eines in allen Bereichen gleichmäßig ausgeformten Kunststoffbehältnisses erforderlich ist. Insbesondere werden auch bei niedrigerem Blasdruck die jeweiligen Eckbereiche bzw. die äußeren Bereiche der Standfüße (durch das Vorsehen des Abflachungsbereichs) gut ausgeformt.

Dies bietet den Vorteil einer wesentlich energiesparenderen Herstellung des Kunststoffbehältnisses.

Betrachtet man einen als Fußuntenbereich bezeichneten Bereich des Standfußes, welcher den Standfuß entgegen der Längsrichtung begrenzt und/oder in welchem die Haupterstreckungsrichtung des Normalenvektors entgegen der Längsrichtung zeigt, lassen sich ein Kantenbereich zwischen dem Fußuntenbereich und dem Fußaußenbereich, ein Kantenbereich zwischen dem Fußaußenbereich und dem Fußseitenbereich und ein Kantenbereich zwischen dem Fußseitenbereich und dem Fußuntenbereich definieren. In den Kantenbereichen sind die Komponenten des Normalenvektors in jeweils zwei Richtungen gleich groß. Beispielsweise sind bei einem Kantenbereich zwischen dem Fußaußenbereich und dem Fußseitenbereich die Komponenten des Normalenvektors in radiale Richtung und in Umfangsrichtung gleich groß. Die Kantenbereiche stellen daher bevorzugt Übergangsbereiche dar, in welcher beispielsweise der im Wesentlichen (radial) nach außen gewandte Fußaußenbereich in den im Wesentlichen in Umfangsrichtung gewandten Fußseitenbereich übergeht.

Der Kantenbereich zwischen dem Fußaußenbereich und dem Fußseitenbereich bildet, und innerhalb welchem insbesondere die Komponenten des Normalenvektors in radiale Richtung und in Umfangsrichtung gleich groß sind, mündet bevorzugt an einem anderen Mündunsbereich in den Abflachungsbereich als der Kantenbereich zwischen dem Fußaußenbereich und dem Fußuntenbereich und bevorzugt an einem anderen Mündungsbereich in den Abflachungsbereich als der Kantenbereich zwischen dem Fußseitenbereich und dem Fußuntenbereich. Bevorzugt mündet der Kantenbereich zwischen dem Fußuntenbereich und dem Fußseitenbereich in einem anderen Mündungsbereich in den Abflachungsbereich als der Kantenbereich zwischen dem Fußseitenbereich und dem Fußaußenbereich.

Mit anderen Worten treffen die Kantenbereiche nicht aufeinander. Bevorzugt treffen sich (auch) jeweils zwei Kantenbereiche nicht (sondern münden jeweils in den Abflachungsbereich).

Bevorzugt treffen sich die drei Kantenbereiche nicht (auch nicht als fortgesetzte Linien) in einem Punkt. Bevorzugt sind die drei Mündungsbereiche voneinander beabstandet und liegen insbesondere an einem Rand des Abflachungsbereichs. Bevorzugt sind die drei Mündungsbereiche jeweils paarweise um wenigstens ein Drittel der, bevorzugt um wenigstens die Hälfte der, bevorzugt um im Wesentlichen um die, bevorzugt um ein Zweifaches der (insbesondere maximalen) Ausdehnung der Standfläche in Umfangsrichtung beabstandet. Die Abstände sind dabei bevorzugt voneinander verschieden. Hierdurch wird erreicht, dass sich der Bodenbereich im Bereich des Abflachungsbereichs bereits näher am Nutgrund befindet, wodurch vorteilhaft die Ausformung erleichtert wird.

Hierdurch ist vorteilhaft eine Reduzierung des Fertigblasdruckes zwischen 3 bis 5 bar im Vergleich zu dem erforderlichen Fertigblasdruck für Bodenformen ohne Abflachungsbereiche möglich.

Bevorzugt ist ein Bereich maximaler Krümmung des Eckbereichs und/oder des Standfußes in wenigstens einer vorgegebenen Krümmungsrichtung und bevorzugt in zwei vorgegebenen Krümmungsrichtungen nicht innerhalb des Abflachungsbereichs. Bevorzugt liegt ein Bereich minimaler Krümmung des Eckbereichs und/oder des Fußseitenbereichs innerhalb des Abflachungsbereichs.

Bevorzugt ist der Abflachungsbereich in radialer Richtung gesehen, nicht zwischen der Mittelachse und der Standfläche angeordnet (sondern in radiale Richtung gesehen weiter außen als die Standfläche und/oder mit demselben radialen Abstand zur Mittelachse wie die Standfläche). Bevorzugt ist der (bevorzugt jeder) Abflachungsbereich von der Mittelachse um mindestens 60%, bevorzugt um mindestens 70% und/oder um mindestens 80%, des Boden- und/oder Behältnisradius (halber Behältnisdurchmesser, etwa des Grundkörpers) beabstandet. Zusätzlich oder alternativ ist der Abflachungsbereich von der Mittelachse um höchstens 90%, bevorzugt um höchstens 80% und/oder um höchstens 70%, des Boden- und/oder Behältnisradius (halber Behältnisdurchmesser, etwa des Grundkörpers) beabstandet.

Bevorzugt schließt der (bevorzugt jeder), insbesondere vollständige, Abflachungsbereich mit der geometrischen Mitte des Standbereichs und/oder des Standfußes einen Umfangswinkel von höchstens 30°, bevorzugt höchstens 25° und besonders bevorzugt höchstens 22° ein. Bevorzugt ist zwischen der geometrischen Mitte des Standbereichs und/oder des Standfu-βes ein Winkelsegments des Bodenbereichs, welches einen minimalen Umfangswinkel von 2,5°, bevorzugt 3°, bevorzugt 5°, aufweist, angeordnet (in welchem der Abflachungsbereich auch nicht abschnittsweise angeordnet ist). Besonders bevorzugt gelten diese Umfangswinkel für einen Bodenbereich mit 5 Standfüßen.

Die vorliegende Erfindung ist weiterhin gerichtet auf ein Kunststoffbehältnis, insbesondere für Getränke, mit einem Bodenbereich, einem sich in Längsrichtung des Kunststoffbehältnisses an diesen Bodenbereich anschließenden Grundkörper und einem sich in der Längsrichtung an diesen Grundkörper zumindest mittelbar anschließenden Mündungsbereich mit einer Behältnismündung.

Dabei weist der Bodenbereich wenigstens drei Standfüße auf, welche sich bevorzugt jeweils in Umfangsrichtung (insbesondere in Bezug auf eine sich entlang der Längsrichtung erstreckenden Mittelachse des Bodenbereichs, bevorzugt Umfangsrichtung wie obig definiert) gesehen über einen Standfuß-Umfangswinkel erstrecken.

Dabei weist jeder dieser Standfüße wenigstens einen sich in Umfangsrichtung über einen Standbereich-Umfangswinkel (sowie in radiale Richtung in Bezug auf die Längsrichtung und/oder Mittelachse, radiale Richtung bevorzugt wie obig beschrieben definiert) erstreckenden Standbereich mit bevorzugt jeweils wenigstens einer, insbesondere im Wesentlichen ebenen, Standfläche zum aufrechten Stehen des Kunststoffbehältnisses auf. Insbesondere bildet der Bodenbereich eines Standfußes, welcher bei auf einer Standebene aufrechtem Stehen des Kunststoffbehältnisses die Standebene kontaktiert (in insbesondere vollständig befülltem Zustand), die Standfläche aus.

Beispielsweise, besonders bevorzugt im Falle von fünf Standfüßen, kann der Standbereich-Umfangswinkel kleiner als 20°, bevorzugt kleiner als 15°, bevorzugt kleiner als 10° und besonders bevorzugt bei im Wesentlichen 9° liegen.

Bevorzugt erstreckt sich der Standbereich (besonders bevorzugt im Wesentlichen ausschließlich) in einem (durch den Standbereich-Umfangswinkel gegebenen) Winkelsegment (in Bezug auf die Umfangsrichtung), in welchem sich die Standfläche des Standfußes erstreckt. Mit anderen Worten kann die in Umfangsrichtung betrachtete (anguläre) Ausdehnung den Standbereich definieren. Mit anderen Worten nimmt der Standbereich in dem durch den Standbereich-Umfangswinkel gegebenen Winkelsegment des Bodenbereichs im Wesentlichen den gesamten in diesem Winkelsegment liegenden Bodenbereich ein. Bevorzugt nimmt der Standbereich mindestens 50%, bevorzugt mindestens 70% und besonders bevorzugt mindestens 90% des in dem Winkelsegment liegenden Bodenbereichs ein.

Dabei ist (bevorzugt paarweise) zwischen (jeweils) zwei insbesondere benachbarten dieser Standfüße wenigstens eine Nut mit einem, bevorzugt als Zugband (zwischen einem Bodenzentrum des Bodenbereichs und dem Grundkörper) wirkenden, Nutgrund angeordnet. Bevorzugt verbreitert sich der Nutgrund in radialer Richtung nach außen. Bevorzugt erfolgt die Verbreiterung (bevorzugt stetig und besonders bevorzugt linear) mit steigendem Abstand zur Mittelachse und/oder zum Bodenzentrum. Unter Verbreiterung wird insbesondere verstanden, dass sich eine Breite des Nutgrundes (wobei unter Breite eine Ausdehnung in Umfangsrichtung verstanden wird) in einer radialen Richtung des Behältnisses nach außen vergrößert.

Bevorzugt sind die wenigstens drei Standfüße in Umfangsrichtung (wie auch entgegen der Umfangsrichtung) von jeweils wenigstens einem Fußseitenbereich begrenzt. Bevorzugt sind die wenigstens drei Standfüße in eine radiale Richtung nach außen hin jeweils von einem Fußaußenbereich begrenzt.

Zwischen dem Standfuß und einer benachbarten Nut ist dabei ein Wendepunktbereich angeordnet, in welchem sich eine Orientierung einer Krümmung des Bodenbereichs ändert (bevorzugt umkehrt) und insbesondere von einer konvexen Krümmung in eine konkave Krümmung übergeführt wird bzw. übergeht. Bevorzugt ist ein der Nut zugewandter Bereich des Standfußes konvex gekrümmt bzw. nach außen gewölbt und ein dem Standfuß zugewandter Bereich konkav gekrümmt bzw. nach innengewölbt (in eine Krümmungsrichtung).

Bevorzugt ist die Nut zumindest in einem an den Wendepunktbereich bzw. in einem dem Standfuß zugewandten bzw. benachbarten und/oder angrenzenden Bereich (besonders bevorzugt über den nahezu vollständigen, an den Wendepunktbereich angrenzenden Bereich) sattelförmig ausgebildet.

Bevorzugt ist die Nut, besonders bevorzugt ausgenommen des Nutgrundes) über im Wesentlichen deren im Wesentlichen vollständige Fläche hinweg sattelförmig ausgebildet bzw. antiklastisch gekrümmt (d.h. dass die Fläche der Nut in den beiden Hauptkrümmungsrichtungen entgegengesetzt gekrümmt ist). Bevorzugt meint vollständige Fläche, wenigstens 70%, bevorzugt wenigstens 80%, bevorzugt wenigstens 90% und besonders bevorzugt wenigstens 95% des Flächeninhalts der Nut. Dabei wird hier bevorzugt mit Nut der Bodenbereich verstanden, welcher sich über das durch den Nut-Umfangswinkel definierte Winkelsegment von dem Bodenzentrum bis zum Grundkörper hin ergibt.

Bevorzugt ist der der Nut zugewandte Bereich bzw. hieran benachbarte Bereich des Standfußes und/oder des Fußseitenbereichs entlang einer Hauptkrümmungsrichtung konvex gekrümmt bzw. nach außen gewölbt und entlang der zweiten Hauptkrümmungsrichtung nicht konkav gekrümmt und bevorzugt konvex gekrümmt.

Bevorzugt ist eine sich durch einen, entlang einer Längsschnittebene, welche durch die Mittelachse des Behältnisses verläuft, vorgenommenen Längsschnitt durch die (bevorzugt durch eine jede) Nut, und bevorzugt durch den Nutgrund der Nut, des Kunststoffbehältnisses ergebende Längsschnittkontur konvex gekrümmt.

Bevorzugt erstreckt/erstrecken sich der Wendepunktbereich über mindestens 75 %, bevorzugt mindestens 80 % und besonders bevorzugt mindestens 90 % der Bogenlänge einer von dem Anspritzpunkt und/oder dem Bodenzentrum ausgehenden und von dort auf der Bodenwandung in (ausschließlich) radiale Richtung nach außen bis zum Grundkörper hin gebildeten Linie.

Bevorzugt geht in dem Wendepunktbereich eine konvexe Krümmung des Standfußes in eine konkave Krümmung der Nut über.

Bevorzugt ist der (insbesondere gesamte) Wendepunktbereich (zwischen der Nut und dem benachbarten Standfuß, insbesondere im Wesentlichen von dem Bodenzentrum bis zum Grundkörper) jeweils im Wesentlichen innerhalb eines, insbesondere im Vergleich zu dem Standfuß-Umfangswinkel und/oder Nut-Umfangswinkel vergleichsweise schmalen, Winkelsegments, welches gegeben ist durch den Wendepunkt-Umfangswinkel, angeordnet. Dabei kann der Wendepunkt-Umfangswinkel kleiner als ein Drittel, bevorzugt kleiner als ein Viertel, bevorzugt kleiner als ein Fünftel und besonders bevorzugt kleiner als ein Achtel des Nut-Umfangswinkels und/oder des Standfuß-Umfangswinkels sein.

Bevorzugt ist der Wendepunkt-Umfangswinkel kleiner als 5°, bevorzugt kleiner als 3°, bevorzugt kleiner als 2°, bevorzugt im Wesentlichen 1° und besonders bevorzugt kleiner als 1°. Bevorzugt wird durch diesen Wendepunkt-Umfangswinkel ein Winkelsegment definiert, über welchen sich der Wendepunktbereich erstreckt und/oder innerhalb welchem der Wendepunktbereich angeordnet ist.

Beispielsweise kann sich der Wendepunktbereich in einem vorgegebenen Winkelsegment - welches bevorzugt durch den Wendepunkt-Umfangwinkel gegeben ist - über mehr als 50%, bevorzugt mehr als 65%, bevorzugt mehr als 70% und besonders bevorzugt mehr als 80% und besonders bevorzugt mehr als 90% des Bodenbereichs von dem Bodenzentrum bis zum Grundkörper erstrecken (dabei beziehen sich die prozentualen Angaben insbesondere auf eine dem Bodenbereich folgende Bodenkurve, welche entlang eines fest vorgegebenen Umfangswinkel in Bezug auf die Umfangsrichtung verläuft). Bevorzugt erstreckt sich der Wendepunktbereich bis und/oder nahezu bis zum Grundkörper.

Mit anderen Worten ist eine (maximale) Ausdehnung des Wendepunktbereichs in radiale Richtung betrachtet um ein Vielfaches, bevorzugt um ein 20faches, bevorzugt um ein 10faches, bevorzugt um wenigstens ein 5faches größer als eine (maximale) Ausdehnung in Umfangsrichtung. Insbesondere handelt es sich bei dem Wendepunktbereich um ein (im Wesentlichen) den Fußseitenbereich und/oder die Nut (im Wesentlichen) vollständig voneinander abgrenzenden Übergangsbereich, in welchem sich die Krümmung der Oberfläche des Bodenbereichs zumindest entlang einer jeweiligen Hauptkrümmungsrichtung umkehrt.

Bevorzugt ist der Standfuß-Umfangswinkel, besonders bevorzugt im Falle eines Behältnisses mit genau fünf Standfüßen, kleiner als 60°, bevorzugt kleiner als 50°, bevorzugt kleiner als 40° und besonders bevorzugt bei 38°, 36° oder bei 34°. Bevorzugt erstreckt sich der Standfuß innerhalb eines durch den Standfuß-Umfangswinkel gegebenes Winkelsegment des Bodenbereichs. Bevorzugt nimmt die, in Umfangsrichtung betrachtete, Ausdehnung des Standfußes entsprechend dem durch den Standfuß-Umfangswinkel gegebenen Winkelsegment in radiale Richtung hin zu. Bevorzugt erstreckt sich der Standfuß entlang dessen gesamter radialer Ausdehnung über den gesamten Standfuß-Umfangswinkel.

Die (in Umfangsrichtung betrachtete) Ausdehnung des Standfußes über einen Standfuß-Umfangswinkel erstreckt sich von einem Fußseitenbereich (über einen Kantenbereich) über den Standbereich (beispielsweise die Standfläche) und/oder den Fußuntenbereich und über einen weiteren Fußseitenbereich.

Erfindungsgemäß weist jeder der wenigstens drei Standfüße wenigstens einen (in Umfangsrichtung betrachtet), bevorzugt wenigstens teilweise und besonderes bevorzugt (insbesondere ausschließlich in Umfangsrichtung gesehen) vollständig, zwischen dem Standbereich und der benachbarten Nut angeordneten Abflachungsbereich und wenigstens einen (in Umfangsrichtung betrachtet) zwischen dem Abflachungsbereich und dem Standbereich angeordneten Wölbungsbereich auf, wobei bevorzugt der Abflachungsbereich im Vergleich zu dem Wölbungsbereich in Bezug auf ein Krümmungsverhalten abgeflacht ist.

Dabei erstreckt sich der Wölbungsbereich in Umfangsrichtung gesehen höchstens über den halben Standbereich-Umfangswinkel (bevorzugt über höchsten 0,45 des Standbereich-Umfangswinkels und besonders bevorzugt über 0,4 des Standbereich-Umfangswinkels) und/oder höchstens über ein Zehntel des Standfuß-Umfangswinkels (des jeweiligen Standfu-βes) hinweg.

Mit anderen Worten wird vorgeschlagen, dass innerhalb eines vergleichsweise schmalen Winkelsegments, nämlich innerhalb eines halben Standbereichs-Umfangswinkels und/oder innerhalb eines 1/8, bevorzugt innerhalb 1/9 und besonders bevorzugt eines Zehntels des Standfuß-Umfangswinkels (des jeweiligen Standfußes), ein Wölbungsbereich vorgesehen ist, welcher in Richtung des Nutgrunds in einen vergleichsweise weniger stark gekrümmten und/oder flacheren Bereich, dem Abflachungsbereich übergeht.

Bevorzugt schließt ein dem Standbereich abgewandtes Ende des Wölbungsbereichs mit dem Standbereich - in Umfangsrichtung gesehen - einen Winkel von höchstens einen halben Standbereich-Umfangswinkel und/oder einen Winkel von höchstens ein (1/8, bevorzugt 1/9, besonders bevorzugt ein) Zehntel des Standfuß-Umfangswinkels ein. Dies bietet den Vorteil, dass der Wölbungsbereich, in Umfangsrichtung betrachtet, sehr nah an dem Standbereich angeordnet ist.

Mit anderen Worten erstreckt sich der Wölbungsbereich in Umfangsrichtung gesehen gemessen ab dem Standbereich nicht über einen Winkelbereich hinaus erstreckt, welcher höchstens dem halben Standbereich-Umfangswinkel und/oder ein Zehntel des Standfuß-Umfangswinkels entspricht.

Unter einer Abflachung des Abflachungsbereichs im Vergleich zu dem Wölbungsbereich in Bezug auf ein Krümmungsverhalten kann insbesondere verstanden werden, dass ein im Abflachungsbereich und im Wölbungsbereich betrachteter Krümmungsverlauf des Bodenbereichs im Abflachungsbereich ein lokales Minimum annimmt und im Wölbungsbereich wenigstens ein (lokales) und bevorzugt ein globales (in Bezug auf den Abflachungsbereich und den Wölbungsbereich und bevorzugt in Bezug auf den gesamten Standfuß) Maximum annimmt. Mit anderen Worten ist ein Bereich maximaler Krümmungswerte in dem Wölbungsbereich angeordnet, während bevorzugt in dem Abflachungsbereich minimale Krümmungswerte und/oder zumindest keine in Bezug auf den Abflachungsbereich und den Wölbungsbereich lokal und/oder global maximale Krümmungswerte angenommen werden.

In den aus dem Stand der Technik bekannten Krümmungsverläufen nimmt eine Krümmung bzw. Wölbung des Standfußes in Richtung Nutgrund hin erst innerhalb eines größeren Umfangswinkelbereichs einen maximalen Krümmungswert an und geht sodann erst später (d.h. mit einem größeren Abstand bzw. Winkel zum Standbereich in Umfangsrichtung gesehen) in einen flacheren Bereich mit weniger großer Krümmung über.

Die hier erfindungsgemäß vorgeschlagene Lösung bietet den Vorteil, dass der Abflachungsbereich, welcher in dem hinsichtlich einer guten Ausformbarkeit während des Blasprozesses kritischen Bereich liegt, durch dessen Abflachung (d.h. weniger stark ausgeprägte Wölbung bzw. weniger große Krümmung) deutlich besser ausformbar ist. Ein grundsätzlich durch die starke Krümmung bzw. Wölbung vergleichsweise schwer ausformbarer Wölbungsbereich ist hingegen durch seine Nähe zum Standbereich deutlich besser ausformbar, so dass insgesamt eine bessere Ausformbarkeit erreicht wird.

Bevorzugt, besonders bevorzugt im Falle von (genau) 5 Standfüßen, erstreckt sich der Wölbungsbereich (in Umfangsrichtung betrachtet) über einen maximalen Umfangswinkel von 8°, bevorzugt maximal 5°, bevorzugt maximal 4° und besonders bevorzugt im Wesentlichen von 3,5°.

Bevorzugt grenzt der Wölbungsbereich an den Standbereich an. Bevorzugt grenzt der Wölbungsbereich an die Standfläche des Standbereichs an. Bevorzugt liegt der Wölbungsbereich zwischen dem Standbereich und dem Abflachungsbereich. Hierdurch wird erreicht, dass zwischen dem Standbereich und dem Abflachungsbereich, welcher vergleichsweise wenig stark gekrümmt ist, ein im Vergleich zu dem Abflachungsbereich stärker gekrümmter Wölbungsbereich angeordnet ist. Dieser Wölbungsbereich sorgt dafür, dass in unmittelbarer Nähe zu dem Standbereich bzw. der Standfläche eine insbesondere starke Krümmung in Richtung des Nutgrunds eingeleitet wird, so dass ein (insbesondere beliebig) betrachteter Abschnitt des Abflachungsbereich in Längsrichtung gesehen bereits deutlich weniger weiter von dem Nutgrund beabstandet ist als die Standfläche und/oder ein Bereich des Standbereichs gleichen Abstands von der Mittelachse wie der betrachtete Abschnitt des Abflachungsbereichs.

Das Kunststoffbehältnis (im Nachfolgenden auch Behältnis bezeichnet) kann dabei jedes obig im Zusammenhang mit dem obig beschriebenen Kunststoffbehältnis einzeln oder in Kombination miteinander aufweisen. Umgekehrt kann obig beschriebenes Kunststoffbehältnis jedes (insbesondere auch nachfolgend) beschriebene Merkmal einzeln oder in Kombination miteinander aufweisen. Insbesondere sind identisch gewählte Begriffe wie Umfangsrichtung, Mittelachse, Längsrichtung, radiale Richtung, konvex, konkav, nach-innen-Wölbung und dergleichen in derselben Weise definiert. Identisch bezeichnete Bereiche (wie etwa Abflachungsbereich, Wölbungsbereich, Standbereich, ... und dergleichen) des Behältnisses oder Elemente/Merkmale bezeichnen dabei bevorzugt dieselben Bereiche der Behältnisse bzw. Elemente/Merkmale der Behältnisse.

Bevorzugt sind der Wölbungsbereich und der Abflachungsbereich Teil des obig beschriebenen Eckbereichs eines Standfußes. Bevorzugt ist - in Umfangsrichtung betrachtet - zwischen dem Abflachungsbereich und der hieran benachbarten Nut ein weiterer Wölbungsbereich vorgesehen, welcher ebenfalls an den Abflachungsbereich angrenzt. Bevorzugt ist der weitere Wölbungsbereich - in Umfangsrichtung betrachtet - zwischen dem Abflachungsbereich und dem Wendepunktbereich angeordnet. Bevorzugt grenzt der weitere Wölbungsbereich sowohl an den Abflachungsbereich als auch an den Wendepunktbereich an.

Bevorzugt ist der Wölbungsbereich, und besonders bevorzugt auch der weitere Wölbungsbereich, in beiden Hauptkrümmungsrichtungen nicht konkav und bevorzugt konvex gekrümmt. Der Abflachungsbereich ist in beiden Hauptkrümmungsrichtungen bevorzugt (über den gesamten Bereich hinweg) nicht konkav und bevorzugt konvex gekrümmt. Dabei kann der Abflachungsbereich in wenigstens eine Richtung oder in beide Richtungen hin nicht gekrümmt, d.h. flach, sein.

Bevorzugt ist die Flächenkrümmung des Wölbungsbereichs bereichsweise, besonders bevorzugt für einen beliebigen Punkt des Wölbungsbereichs, größer als die Flächenkrümmung eines beliebigen Punkts des Abflachungsbereichs.

Eine Abflachung des Abflachungsbereichs im Vergleich zu dem Wölbungsbereich in Bezug auf ein Krümmungsverhalten kann insbesondere auch mittels sogenannter Bodenlinien definiert werden. Dabei ist eine Bodenlinie eine entlang (der Außenoberfläche) des Bodenbereichs gebildete (hypothetische) Linie, welche stets zur Mittelachse (welche insbesondere durch das Bodenzentrum verläuft) denselben Abstand einhält bzw. einnimmt.

Bevorzugt entsteht die Bodenlinie als Zylinderschnittkontur aus einem Zylinderschnitt mit dem Bodenbereich, wobei die Mittelachse des Zylinders entlang der Mittelachse des Kunststoffbehältnisses verläuft.

Wird diese Bodenlinie abgewickelt (entlang der Zylindermantelfläche) und ein Krümmungsverlauf dieser abgewickelten Bodenlinie betrachtet, nimmt der Krümmungsverlauf innerhalb des dem Standfuß entsprechenden Abschnitts der Bodenlinie, bevorzugt in dem Wölbungsbereich maximale Krümmungs(betrags)werte an bzw. ein lokales und bevorzugt globales Maximum an. Betrachtet man den Bodenlinienabschnitt ausgehend von dem Standbereich eines Standfußes bis hin zur benachbarten Nut und/oder bis zum Wendebereich zur benachbarten Nut, nimmt der Krümmungsverlauf in dem Wölbungsbereich, der zwischen dem Standbereich und dem Abflachungsbereich angeordnet ist, maximale Werte des Krümmungsbetrags an. Die innerhalb des dem Abflachungsbereich entsprechenden Bodenlinienabschnitts angenommenen Beträge der Krümmungswerte sind allesamt kleiner als der in dem dem Wölbungsverlauf entsprechenden, angenommenen Beträge der Krümmungswerte.

Die vorliegende Erfindung ist weiterhin gerichtet auf ein Kunststoffbehältnis, insbesondere für Getränke, mit einem Bodenbereich, einem sich in Längsrichtung des Kunststoffbehältnisses an diesen Bodenbereich anschließenden Grundkörper und einem sich in der Längsrichtung an diesen Grundkörper zumindest mittelbar anschließenden Mündungsbereich mit einer Behältnismündung, wobei der Bodenbereich wenigstens drei Standfüße aufweist.

Dabei weist jeder dieser Standfüße wenigstens einen sich in Umfangsrichtung in Bezug auf eine sich entlang der Längsrichtung erstreckenden Mittelachse des Bodenbereichs über einen Standbereich-Umfangswinkel (sowie in radiale Richtung in Bezug auf die Längsrichtung/Mittelachse) erstreckenden Standbereich mit jeweils wenigstens einer, insbesondere im Wesentlichen ebenen, Standfläche zum aufrechten Stehen des Kunststoffbehältnisses auf, wobei zwischen (jeweils) zwei insbesondere benachbarten dieser Standfüße wenigstens eine Nut mit einem, insbesondere als Zugband (zwischen einem Bodenzentrum des Bodenbereichs und dem Grundkörper) wirkenden Nutgrund angeordnet ist- Bevorzugt verbreitert sich der Nutgrund in radialer Richtung nach außen. Bevorzugt erfolgt die Verbreiterung (bevorzugt stetig und besonders bevorzugt linear) mit steigendem Abstand zur Mittelachse und/oder zum Bodenzentrum. Unter Verbreiterung wird insbesondere verstanden, dass sich eine Breite des Nutgrundes (wobei unter Breite eine Ausdehnung in Umfangsrichtung verstanden wird) in einer radialen Richtung des Behältnisses nach außen vergrößert.

Erfindungsgemäß ist der Bodenbereich derart ausgebildet, dass eine entlang des Bodenbereichs von einer geometrischen Mitte des Standbereichs eines Standfußes zu dem Nutgrund der benachbarten Nut, mit konstantem Abstand zur Mittelachse verlaufende Bodenlinie einen geometrischen Verlauf von entlang der Mittelachse betrachteten Höhenwerten in Abhängigkeit eines in Umfangrichtung in Bezug auf die geometrische Mitte des Standbereichs gemessenen Drehwinkels aufweist, welcher nach Durchlaufen des Standbereichs (von dem Standbereich in Richtung der benachbarten Nut) derart stark abfällt, dass sich ein im Standbereich angenommener maximaler Höhenwert innerhalb eines Linienabschnitts (der Bodenlinie), welcher höchstens 30% eines Drehwinkels zwischen der geometrischen Mitte des Standbereichs und der geometrischen Mitte des Nutgrunds der benachbarten Nut einnimmt, um wenigstens 8%, bevorzugt wenigstens 10%, bevorzugt wenigstens 12% und besonders bevorzugt um wenigstens 14% in Bezug auf einen maximalen Höhenunterschied der Bodenlinie verringert.

Dies bietet den Vorteil, dass Eckbereiche des Standfußes, welche erst spät im Blasprozess ausgeformt werden, näher an den Nutgrund herangeführt werden. Hierdurch kann eine deutlich verbesserte Ausformbarkeit erreicht werden. Dies bietet den Vorteil einer energieeffizienteren Herstellung eines Kunststoffbehältnisses.

Die Bodenlinie kann dabei (wie obig beschrieben) durch einen Zylinderschnitt mit dem Bodenbereich, insbesondere durch einen wie obig beschriebenen Abflachungsbereich und/oder Wölbungsbereich, gebildet werden. Die Bodenlinie kann danach (entlang der Zylindermantelfläche) abgewickelt werden, um einen Verlauf von Höhenwerten (Höhenverlauf) in Abhängigkeit eines Umfangswinkels (der bevorzugt mit der Lage der geometrischen Mitte des Standbereichs als Referenzlage gemessen wird) zu erhalten. Die Höhenwerte beschreiben dabei eine Koordinate des jeweiligen Punkts in Bezug auf die Mittelachse. Die Höhenwerte werden dabei in umgekehrter Richtung wie die Längsrichtung betrachtet (also in eine Höhenrichtung, welche entgegengesetzt zur Längsrichtung ausgerichtet ist und parallel zu dieser verläuft), d.h. die Standfläche des Standbereichs nimmt einen größeren Höhenwert ein als das Bodenzentrum und/oder ein Nutgrund. Der Nutgrund nimmt bevorzugt einen minimalen Höhenwert einer (jeden) Bodenlinie ein. Der Standbereich des Standfußes nimmt bevorzugt einen maximalen Höhenwert einer (jeden) Bodenlinie an.

Das Kunststoffbehältnis (im Nachfolgenden auch Behältnis bezeichnet) kann dabei jedes obig im Zusammenhang mit den beiden obig beschriebenen Kunststoffbehältnissen einzeln oder in Kombination miteinander aufweisen (auch Kombinationen der Merkmale der beiden obig beschriebenen Kunststoffbehältnisse). Umgekehrt kann jedes der beiden obig beschriebenen Kunststoffbehältnisse jedes (insbesondere auch nachfolgend) beschriebene Merkmal einzeln oder in Kombination miteinander aufweisen (auch in Kombination mit Merkmalen des jeweilig anderen obig beschriebenen Kunststoffbehältnisses). Insbesondere sind identisch gewählte Begriffe wie Umfangsrichtung, Mittelachse, Längsrichtung, radiale Richtung, konvex, konkav, nach-innen-Wölbung und dergleichen in derselben Weise definiert. Identisch bezeichnete Bereiche (wie etwa Abflachungsbereich, Wölbungsbereich, Standbereich, ... und dergleichen) des Behältnisses oder Elemente/Merkmale bezeichnen dabei bevorzugt dieselben Bereiche der Behältnisse bzw. Elemente/Merkmale der Behältnisse.

Bevorzugt ist die Bodenlinie derart gewählt, dass sie durch den obig beschriebenen Eckbereich und/oder den obig beschriebenen Wölbungsbereich und/oder den obig beschriebenen Abflachungsverlauf läuft. Bevorzugt befindet sich ein Punkt der Bodenlinie, welcher 30% eines Drehwinkels zwischen der geometrischen Mitte des Standbereichs und der geometrischen Mitte des Nutgrunds der benachbarten Nut einnimmt, innerhalb des obig beschriebenen Abflachungsbereichs.

Bevorzugt gilt obig beschriebener Verlauf der Höhenwerte einer Bodenlinie (insbesondere dessen anteilige Verringerung der Höhenwerte) für eine beliebige Bodenlinie, welche einen vorgegebenen Abstand zur Mittelachse einnimmt, der zwischen zwei vorgegebenen, voneinander verschiedenen Abstandwerten liegt. Bevorzugt sind die beiden vorgegebenen Abstandwerte größer als der Radius eines Standkreises des Behältnisses. Bei dem Standkreis handelt es sich insbesondere um den Kreisring, auf welchem die (kreissegmentartig ausgestalteten) Standflächen der Standfüße angeordnet sind.

Bei einer bevorzugten Ausführungsform ist der Bodenbereich derart ausgebildet, dass eine entlang des Bodenbereichs von einer geometrischen Mitte des Standbereichs eines Standfu-βes über einen Wendepunktbereich, in welchem sich eine Orientierung der Krümmung des Bodenbereichs (wie beispielsweise einer nachfolgend genannten Bodenlinie) ändert, zu dem Nutgrund der benachbarten Nut, mit konstantem Abstand zur Mittelachse verlaufende Bodenlinie einen geometrischen Verlauf von entlang der Mittelachse betrachteten Höhenwerten in Abhängigkeit eines in Umfangrichtung in Bezug auf die geometrische Mitte des Standbereichs gemessenen Drehwinkels aufweist, welcher in einem an den Standbereich angrenzenden Bereich derart stark abfällt, dass sich ein im Standbereich angenommener maximaler Höhenwert innerhalb eines Linienabschnitts der Bodenlinie, welcher höchstens 30% eines Drehwinkels zwischen der geometrischen Mitte des Standbereichs und der geometrischen Mitte des Nutgrunds der benachbarten Nut einnimmt, um wenigstens 15%, bevorzugt wenigstens 20%, bevorzugt wenigstens 25% und besonders bevorzugt um wenigstens 30% in Bezug auf einen Höhenunterschied der Bodenlinie zum in dem Wendepunktbereich angenommenen Höhenwert verringert. Hierdurch wird vorteilhaft erreicht, dass der Standfuß selbst (von Wendepunktbereich bis zum Wendepunktbereich der anderen Seite des Standfu-βes) derart ausgebildet ist, dass die Höhewerte in einem dem Standbereich angrenzenden Bereich schnell abfallen.

Bei der Bodenlinie handelt es sich bevorzugt um die obig beschriebene Bodenlinie (bei welcher ein Verlauf der Höhenwerte in Bezug auf einen Höhenunterschied zu dem im Nutgrund angenommenen Höhenwert beschrieben wurde.

Durch den geringeren Abstand der Höhenwerte in den Bereichen zwischen dem Standbereich und dem Wendebereich von dem in dem Nutgrund angenommenen Höhenwerten wird eine deutlich bessere Ausformbarkeit des Standfußes (insbesondere dessen Eckbereiche) erreicht.

Bevorzugt ist (auch hier) die Bodenlinie derart gewählt, dass sie durch den obig beschriebenen Eckbereich und/oder den obig beschriebenen Wölbungsbereich und/oder den obig beschriebenen Abflachungsverlauf läuft. Bevorzugt befindet sich ein Punkt der Bodenlinie, welcher 30% eines Drehwinkels zwischen der geometrischen Mitte des Standbereichs und der geometrischen Mitte des Nutgrunds der benachbarten Nut einnimmt, innerhalb des obig beschriebenen Abflachungsbereichs.

Bevorzugt gilt obig beschriebener Verlauf der Höhenwerte einer Bodenlinie (insbesondere dessen anteilige Verringerung der Höhenwerte) für eine beliebige Bodenline, welche einen vorgegebenen Abstand zur Mittelachse einnimmt, der zwischen zwei vorgegebenen, voneinander verschiedenen Abstandwerten liegt. Bevorzugt sind die beiden vorgegebenen Abstandwerte größer als der Radius eines Standkreises des Behältnisses. Bei dem Standkreis handelt es sich insbesondere um den Kreisring, auf welchem die (kreissegmentartig ausgestalteten) Standflächen der Standfüße angeordnet sind.

Bei einer weiter bevorzugten Ausführungsform grenzt an den Abflachungsbereich des Standfußes, sowohl in Richtung der benachbarten Nut und/oder des Nutgrunds der benachbarten Nut gesehen als auch in Richtung des Standbereichs des Standfußes gesehen, jeweils ein Wölbungsbereich mit einem Krümmungsverlauf derselben Orientierung an, wobei der Betrag der Krümmung innerhalb der Wölbungsbereiche (jeweils) wenigstens ein Maximum (in Bezug auf die innerhalb des Abflachungsbereichs angenommenen Beträge der Krümmungen) annimmt. Bevorzugt wird hierbei ein Krümmungsverlauf entlang einer (abgewickelten) Bodenlinie betrachtet.

Sowohl der in Richtung der benachbarten Nut/Nutgrund angeordnete Wölbungsbereich als auch der in Richtung des Standbereichs angeordnete Wölbungsbereich weisen dabei - jeweils im Vergleich zu den innerhalb des Abflachungsbereichs angenommenen Krümmungsbeträgen - ein (lokales oder globales) Maximum in Bezug auf den Betrag der Krümmung auf.

Bevorzugt ist der in Richtung des Standbereichs angeordneten Wölbungsbereichs ein höherer Krümmungsbetrag angenommen als in dem in Richtung der Nut/Nutgrund angenommene Krümmungsbetrag. Bevorzugt ist der in dem in Richtung des Standbereichs angenommene maximale Krümmungsbetrag mindestens doppelt, bevorzugt mindestens viermal und besonders bevorzugt mindestens zehnmal so groß wie der in Richtung der Nut/Nutgrund angenommene maximale Krümmungsbetrag.

Das in dem Wölbungsbereich angenommene Maximum des Krümmungsbetrags ist dabei größer als ein in dem Abflachungsbereich angenommenes (lokales) Maximum. Wird eine (abgewickelte) Bodenlinie durch den Abflachungsbereich betrachtet, so ist bevorzugt der maximale Krümmungsbetrag, welcher in dem Wölbungsbereich angenommen wird, mindestens fünfmal, bevorzugt mindestens zehnmal und bevorzugt mindestens zwanzigmal so groß wie ein (etwaiger) maximaler Krümmungsbetrag, welcher entlang der Bodenlinie innerhalb dem Abflachungsbereich angenommen wird.

Hierdurch wird vorteilhaft erreicht, dass die Bereiche größerer Krümmungsbeträge in Bereichen angeordnet werden, welche näher an dem Standbereich und näher an dem Nutgrund bzw. der Nut liegen. Dies ermöglicht vorteilhaft eine deutliche Verbesserung der Ausformbarkeit des Standfußes und erlaubt daher eine Reduzierung des Fertigblasdrucks.

Bei dem Krümmungsverlauf kann es sich dabei beispielsweise um einen Verlauf einer Krümmung in eine Hauptkrümmungsrichtung oder um einen Verlauf einer Flächenkrümmung handeln. Denkbar ist auch, dass es sich bei dem Krümmungsverlauf um den Verlauf einer Krümmung in vorgegebener Richtung handelt. Weiter denkbar ist, wie obig erwähnt, dass der Krümmungsverlauf in Bezug auf eine vorgegebene Linie betrachtet wird, welche durch den jeweiligen Wölbungsbereich und den Abflachungsbereich verläuft.

Daneben ist bevorzugt alternativ oder zusätzlich auch möglich, dass an den Abflachungsbereich des Standfußes, in Richtung des Bodenzentrums und/oder in Richtung des Grundkörpers ein Wölbungsbereich mit einem Krümmungsverlauf derselben Orientierung angrenzt, wobei der Betrag der Krümmung innerhalb der Wölbungsbereiche (jeweils) wenigstens ein Maximum im Vergleich zu den innerhalb des Abflachungsbereichs des Standfußes angenommene Krümmungsbeträge annimmt. Bevorzugt wird hier ein Krümmungsverlauf entlang einer Längsschnittkontur betrachtet. Die Längsschnittkontur ergibt sich dabei bevorzugt aus einem Längsschnitt des Bodenbereichs durch den Abflachungsbereich, wobei der Längsschnitt entlang einer durch die Mittelachse verlaufende Längsschnittebene durchgeführt wird. Auch entlang einer derartigen Längsschnittkontur sind bevorzugt Bereiche maximaler Krümmungsbeträge nicht innerhalb des Abflachungsbereichs sondern in den (daran angrenzenden) Wölbungsbereichen angeordnet. Dies bietet den Vorteil, dass in dem Eckbereich des Standfußes hohe Krümmungsbeträge, welche schwerer ausformbar sind, vermieden werden.

Bei einer weiter bevorzugten Ausführungsform weist eine durch einen Längsschnitt durch den Bodenbereich gebildete Querschnittskontur, dessen Längsschnittebene durch den Abflachungsbereich eines Standfußes sowie durch die Mittelachse des Kunststoffbehältnisses verläuft, einen Krümmungsverlauf auf, welcher im Vergleich zu den umgebenden Abschnitten, bevorzugt im Vergleich zu dem Wölbungsbereich, in dem Abflachungsbereich ein lokales Minimum einnimmt.

Bei einer weiter bevorzugten Ausführungsform umgibt der Wölbungsbereich den Abflachungsbereich wenigstens im Wesentlichen halbumfänglich und bevorzugt im Wesentlichen vollumfänglich. Dies bietet den Vorteil, dass hierdurch große Krümmungsbeträge in dem Abflachungsbereich vermieden werden können.

Bei einer weiter bevorzugten Ausführungsform ist der Betrag der Flächenkrümmung innerhalb des gesamten Abflachungsbereichs kleiner als der Betrag der Flächenkrümmung des den Abflachungsbereich wenigstens halbumfänglich und bevorzugt vollumfänglich umgebenden Wölbungsbereichs.

Bei einer weiter bevorzugten Ausführungsform verjüngt sich der Abflachungsbereich in Richtung des Nutgrunds. Bevorzugt ist der Abflachungsbereich dreiecksartig ausgebildet, wobei die Spitze des Dreiecks in Richtung des Grundkörpers und/oder in Richtung der Nutgrund ausgerichtet ist. Hierdurch ergibt sich eine kleinere Abflachung in einem hinsichtlich einer Ausformbarkeit weniger kritischen Bereich und eine größere Abflachung in einem hinsichtlich einer Ausformbarkeit kritischeren Bereich.

Bei einer weiter bevorzugten Ausführungsform ist der Abflachungsbereich im Wesentlichen eben ausgebildet. Denkbar ist auch, dass der Abflachungsbereich abschnittsweise eben ausgebildet. Bevorzugt ist der Abflachungsbereich in seiner Gesamtheit eben ausgebildet. Eine ebene Ausgestaltung ermöglicht eine gute Ausformbarkeit.

Bei einer weiter bevorzugten Ausführungsform weist der Abflachungsbereich einen Flächeninhalt auf, welcher wenigstens ein Viertel, bevorzugt wenigstens ein Drittel, bevorzugt wenigstens die Hälfte des Flächeninhalts, bevorzugt wenigstens denselben Flächeninhalt, bevorzugt wenigstens den doppelten und besonderes bevorzugt wenigstens den dreifachen Flächeninhalt der, insbesondere im Wesentlichen ebenen, Standfläche des Standbereichs des Standfußes zum aufrechten Stehen des Kunststoffbehältnisses beträgt.

Bei einer weiter bevorzugten Ausführungsform weisen die wenigstens drei Standfüße jeweils zwei, insbesondere symmetrisch angeordnete und/oder bevorzugt einander spiegelsymmetrisch ausgestaltete, Abflachungsbereiche auf, welche im Querschnitt wenigstens abschnittsweise (bevorzugt innerhalb des Abflachungsbereichs vollständig) dem Verlauf der Schenkel eines, bevorzugt gleichschenkligen, Dreiecks folgen.

Bei einer weiter bevorzugten Ausführungsform beträgt ein Abstand (ein sogenannter Offset) zwischen einer Spitze des, bevorzugt gleichschenkligen, Dreiecks und dem Standfuß, insbesondere dem Standbereich des Standfußes, zwischen 0 mm und 20 mm, bevorzugt zwischen 2 mm und 10 mm.

Bei einer weiter bevorzugten Ausführungsform liegt ein Öffnungswinkel des Dreiecks, welcher die Spitze des Dreiecks einschließt (also der Öffnungswinkel bzw. Innenwinkel des Dreiecks an der Spitze des Dreiecks, in welcher die bevorzugt gleich langen beiden Schenkeln des Dreiecks aufeinandertreffen, insbesondere der Winkel, den diese beiden Schenkeln einschließen), zwischen 45° und 170°, bevorzugt zwischen 80° und 150°, bevorzugt zwischen 80° und 120°, bevorzugt zwischen 90° und 120° und besonders bevorzugt zwischen 90° und 110°. Als besonders vorteilhaft haben sich Öffnungswinkel zwischen 105° und 106° erwiesen.

Bevorzugt folgen jeweils beide Abflachungsbereiche im Querschnitt wenigstens abschnittsweise und bevorzugt innerhalb des gesamten Abflachungsbereichs dem Verlauf jeweils eines Schenkels desselben, bevorzugt gleichschenkligen, Dreiecks. Derartige Abflachungsbereiche werden bevorzugt dadurch erzeugt, dass zwei sich schneidende Ebenen mit einem Schnittwinkel verwendet werden, welcher dem Winkel an der Spitze des obig betrachteten Dreiecks entspricht (so dass sich die beiden Ebenen an den Schenkeln des (hypothetischen) Dreiecks anlegen. Die beiden Ebenen werden bevorzugt, wie im Rahmen der Figuren beschrieben, (in der Art bzw. Form eines aufgeklappten Buches) um den Standfuß angeordnet.

Die Abflachungsbereiche können konstruktiv derart erzeugt werden, dass Schnittbereiche der Standfüße mit den Ebenen abgeschnitten werden.

Die beiden Ebenen und/oder die Dreiecke werden bevorzugt mithilfe einer Führungskontur entlang des Standfußes angeordnet.

Die Führungskontur wird bevorzugt auf der Mitte eines (Stand-)Fußes konstruiert, besonders bevorzugt mit Hilfe der Schnittkontur (des Standfußes und besonders bevorzugt des Standbereichs). Bevorzugt wird die Schnittkontur des Standfußes entlang der geometrischen Mitte des Standbereichs verwendet.

Es gibt verschiedene vorteilhafte Varianten der Führungskontur.

### Variante A:

Mit Hilfe einer Geraden wird eine Senkrechte auf dem Radius des Fußes konstruiert. Die Gerade wird durch einen Winkel gesteuert. Der Winkel bewegt sich zwischen der Senkrechten durch den Mittelpunkt des Fußradius zu Standfläche und der Geraden. Die Werte sind bevorzugt zwischen - 30 Grad und 80 Grad, bevorzugt zwischen -10 und 65 Grad. Bevorzugt wird (im nächsten Konstruktionsschritt) eine Tangente senkrecht zur Geraden erstellt. Parallel zur Tangenten wird in einem vorgegebenen Abstand eine Gerade als Führungskontur erstellt. Der vorgegebene Abstand bewegt sich zwischen 0 und 20mm, bevorzugt zwischen 2 und 10mm. Die Länge der Geraden kann festgelegt werden.

### Variante B:

Hier wird bevorzugt eine Offset Kurve der Schnittkontur des Fußes (als Führungskontur) verwendet. Mit einem bevorzugten Abstand von 0 bis 20mm, bevorzugt zwischen 0 und 10mm. Die Länge der Offsetkurve kann durch die prozentuale Bestimmung des Anfangs- und Endpunkts bestimmt werden. Der bevorzugte Abstand der Offsetkurve kann von -10mm bis + 20 mm gehen, bevorzugt zwischen 0 und 10 mm.

Bei einer weiter bevorzugten Ausführungsform folgt der Abflachungsbereich einem im Wesentlichen parabelförmigen Verlauf. Bevorzugt folgt der Abflachungsbereich (wenigstens abschnittsweise und bevorzugt innerhalb des im Wesentlichen gesamten Abflachungsbereich einem Ast einer Parabel. Bevorzugt folgen beide Abflachungsbereiche eines Sitzfußes einem im Wesentlichen parabelförmigen Verlauf. Bevorzugt folgt ein Querschnitt durch den Sitzfuß und die beiden Abflachungsbereiche wenigstens abschnittsweise und bevorzugt entlang der gesamten Abflachungsbereiche einer Parabel.

Bevorzugt wird die Parabel zur Konstruktion der beiden Abflachungsbereiche an einer Führungskontur angeordnet. Dabei kann die Führungskontur wie obig im Zusammenhang mit einem Dreieck zur Konstruktion der Abflachungsbereiche beschrieben, gemäß einer der beschriebenen Ausführungsformen gewählt sein.

Bei einer weiter bevorzugten Ausführungsform weist der Standfuß wenigstens zwei, insbesondere symmetrisch angeordnete, Abflachungsbereiche auf und die beiden Abflachungsbereiche und der Standbereich des Standfußes folgen im Querschnitt wenigstens abschnittsweise einem Verlauf eines offenen, insbesondere gleichschenkligen, Trapezes. Auch hier kann eine Führungskontur zur Konstruktion der Abflachungsbereiche wie obig beschrieben gewählt sein.

Bevorzugt wird zur Konstruktion der Standfüße mit Abflachungsbereichen ein Standfuß mit einer nachfolgend beschriebenen bevorzugten Fußkonstruktion aus dem Stand der Technik verwendet. Bevorzugt weist der zur Konstruktion verwendete Standfuß Seitenflanken auf, welche bevorzugt Freiformflächen darstellen.

Unter einer Konstruktion eines Standfußes (mit Abflachungsbereichen) kann auch eine Konstruktion einer zur konstruierten Form des Standfußes korrespondierende Innenoberfläche einer Blasformeinrichtung zur Erzeugung eines derartigen Standfußes verstanden werden.

Bevorzugt wird zur Konstruktion des Standfußes eine Führungskontur und mindestens eine, bevorzugt genau eine oder genau zwei Querkonturen verwendet. Die Querkontur(en) gibt bzw. geben einen wenigstens abschnittsweisen Verlauf der erzeugten Abflachungsbereiche vor.

Die Querkontur kann durch folgende bevorzugte Varianten beschrieben werden.

### Variante Z:

Hat die Geometrie eines Dreiecks mit einem Öffnungswinkel zwischen 45 und 180 Grad, bevorzugt zwischen 80 und 150 Grad. Die Höhe ist bevorzugt zwischen 2 und 50 mm definiert.

### Variante Y:

eine Trapezförmige Geometrie mit der kurzen Seite des Trapez nach unten in Richtung Standfläche und/oder Standbereich. Die Länge der kurzen Trapezseite beträgt bevorzugt zwischen 0,5mm und 10mm. Die Innenwinkel sind bevorzugt gleich groß. Der Innenwinkel ist bevorzugt zwischen 91 und 170 Grad, bevorzugt zwischen 95 und 155 Grad.

### Variante X:

Ist eine parabelförmige Kontur, welche bevorzugt durch eine quadratische Funktion gegeben ist, der Scheitelpunkt befindet sich der Führungskontur.y = ax^2+bx+c Bevorzugt ist der Parameter a ist größer als 0, bevorzugt ist der Parameter b größer 0 und der Parameter c ist bevorzugt zwischen -10 und 10mm, bevorzugt zwischen -5 mm und 5mm.

Die Führungskontur kann bevorzugt durch die beiden obig als Variante A und Variante B beschriebenen Möglichkeiten realisiert werden.

Die Varianten der Führungskontur können mit den Varianten Querkontur kombiniert werden, wie folgt.
A mit X, Y und/oder Z
B mit X, Y und/oder Z
   oder
X mit A und/oder B
Y mit A und/oder B
Z mit A und/oder B

Eine weitere bevorzugte Querkontur kann auch durch ein Polymon n-ten Grades beschrieben werden, wobei der Wert von n zwischen 2 und 7 sich bewegen kann.

Für die Variante B mit Offset Kurve bzw. angenäherter Offsetkurve benötigt man 2 Querkonturen mit angepassten Werten.

Unter einer Offsetkurve wird insbesondere ein Spline, mit Polynom n-ter Ordnung, verstanden, wobei sich der Wert von n zwischen 2 und 7 bewegen kann.

Bei einer weiter bevorzugten Ausführungsform sind die, insbesondere beiden, Fußseitenbereiche des Standfußes abschnittsweise als durch eine Freiformfläche gebildete Fußflankenflächen ausgebildet, wobei bevorzugt die Fußseitenbereich im Wesentlichen vollständig außerhalb des Wölbungsbereichs als Freiformflächen ausgebildet sind.

Die Fußflankenfläche ist bevorzugt als Freiformfläche ausgebildet, welche bevorzugt an die Flächenkanten des Standfußes und/oder eines Fußbereichs und insbesondere an die Flächenkanten des Grundkörpers (und insbesondere einen Zentralbereich und/oder einen Anspritzpunkt) insbesondere tangentenstetig und bevorzugt krümmungsstetig angebunden ist. Bei der Freiformfläche handelt es sich insbesondere um eine Fläche, deren Krümmungsverlauf in eine (jede) Richtung durch Polynome n-ten Grades beschrieben werden kann.

Insbesondere dient ein im Bodenbereich eines Behältnisses angeordnetes, insbesondere zwischen den Standfüßen vorgesehenes Zugband dazu, etwa Kräfte, die auf den Bodenmittelpunkt bzw. das Bodenzentrum - wie beispielsweise einen Anspritzpunkt eines Kunststoffbehältnisses - wirken, über das Zugband auf eine Seitenwandung des Kunststoffbehältnisses zu leiten.

Unter einer Nut kann dabei ein geometrisches Gebilde verstanden werden, welches sich bezüglich der (diese umgebende) (Außen-)Wandung des Behältnisses, also etwa der (Außen- )Wandung des Bodenbereichs, nach innen (insbesondere etwa in Richtung der Behältnismündung und/oder der Mittelachse) erstreckt, insbesondere bezogen auf ein Normalniveau der Umfangswandung. Bevorzugt ist die Nut der Bereich zwischen zwei Wendepunktbereichen, welche sich wie obig beschrieben um einen Wendepunkt-Umfangswinkel erstrecken.

Unter Nutgrund kann ein (Teil-)Bereich einer Nut verstanden werden, der sich durch seine (einheitliche bzw. gemeinsame) geometrische Konstruktion, wie etwa einheitlichen Parametern einer Flächenparametrisierung und/oder Wahl einer Fläche (bzw. einer gemeinsamen Vorschrift für die Flächenkonstruktion), von wenigstens einem weiteren Bereich und insbesondere von dem übrigen Bereich der Nut und/oder von einer Fußflankenfläche eines Standfußes unterscheidet.

Unter Nutgrund kann etwa derjenige (insbesondere zusammenhängende) Bereich einer Nut verstanden werden, der im Wesentlichen den sich (am weitesten) nach innen erstreckenden (Minimums-)Bereich bildet (und diesen umgebenden Bereich). Dabei unterscheidet sich der Nutgrund bevorzugt dadurch von dem übrigen Bereich der Nut, dass dieser verglichen mit dem übrigen Bereich der Nut und insbesondere mit einem an dem Nutgrund seitlich benachbart angeordneten Bereich der Nut, welcher zwischen dem Nutgrund und dem Standfuß liegt, entsprechend einer verschiedenen Flächenform konstruiert wurde. Bevorzugt ist obig beschriebener, an dem Nutgrund benachbart angeordneter, und zwischen dem Nutgrund und dem Standfuß liegender Bereich (in seiner Gesamtheit) Teil einer Fußflankenfläche eines Standfußes (und insbesondere entsprechend als eine solche konstruiert).

Bevorzugt dient der Grundkörper zur Aufnahme des wesentlichen Füllvolumens (eines Getränks). Der Grundkörper weist eine in einer Umfangsrichtung vollständig umlaufende (Seiten-)Wandung auf. Dabei kann der Grundkörper einen im Wesentlichen kreisförmigen (bevorzugt kreisförmigen Querschnitt (mit vorgegebenen Hauptdurchmesser, Querschnitt bei Schnitt in Ebene senkrecht zur Mittelachse) aufweisen. Möglich ist aber auch, dass der Grundkörper einen im Wesentlichen quadratischen oder rechteckförmigen Querschnitt insbesondere mit abgerundeten Ecken aufweist.

Bevorzugt weist der (insbesondere jeder) Nutgrund (bzw. ein Zugband), insbesondere jeweils, zwei seitliche Zugbandbereiche auf, in welchen die Wandung des Behältnisses (insbesondere des Bodenbereichs) nach außen gewölbt ist, und einen mittleren Zugbandbereich auf, welcher in Umfangsrichtung zwischen den zwei seitlichen Zugbandbereichen angeordnet ist, wobei in dem mittleren Zugbandbereich die Wandung des Behältnisses nach innen gewölbt ist. Insbesondere sind die zwei seitlichen Zugbandbereiche sowie der (in Umfangsrichtung) zwischen den zwei seitlichen Zugbandbereichen angeordnete mittlere Zugbandbereich zwischen zwei (benachbarten) Standfüßen angeordnet. Die Fläche des mittleren Zugbandbereichs ist insbesondere zum Behältnisinneren bzw. zum Flascheninneren gewölbt.

Bevorzugt bilden die zwei seitlichen Zugbandbereiche jeweils einen (in Umfangsrichtung gesehen) äußeren Zugbandbereich und/oder einen äußeren Nutgrundbereich. Bevorzugt wird der (insbesondere jeder) Nutgrund bzw. das (insbesondere jedes) Zugband (in und/oder entgegen der Umfangsrichtung gesehen) von jeweils einem der zwei seitlichen Zugbandbereiche (in Richtung eines benachbarten Standfußes hin) begrenzt.

Die Wandung des Behältnisses im Bodenbereich ist insbesondere wenigstens abschnittsweise in einem mittleren Bereich (dem mittleren Zugbandbereich) des Nutgrundes einer Nut nach innen gewölbt und in den beiden, an den mittleren Bereich des Nutgrundes angrenzenden Randbereichen des Nutgrundes (insbesondere den seitlichen Zugbandbereichen) nach außen gewölbt.

Die vorliegende Erfindung bietet den Vorteil, dass durch die Wölbung zum (Flaschen-)Inneren bewirkt wird, dass sich das Zugband besser in die Bodengeometrie einfügt. Hierdurch kann das Material leichter in die Füße bzw. die Standbeine verstreckt werden. Hierdurch wird bevorzugt die Bildung von Verwerfungen vermieden und die Stabilität erhöht. Weiterhin wird die Blasbarkeit und Ausformbarkeit verbessert.

Mit anderen Worten weist der Bodenbereich in dem mittleren Zugbandbereich eine konkav gekrümmte bzw. konkav gewölbte Behältnisaußenoberfläche auf. Bevorzugt liegt eine solche konkave Krümmung bzw. konkave Wölbung im Wesentlichen entlang des gesamten Linienabschnitts zwischen dem Anspritzpunkt und/oder zwischen einem Zentralbereich um den Anspritzpunkt und der Begrenzung des Bodenbereichs zum Grundkörper hin vor. Insbesondere weist der Bodenbereich (jeweils) in dem seitlichen Zugbandbereich eine konvex gekrümmte bzw. konvex gewölbte Behältnisaußenoberfläche. Bevorzugt liegt eine solche konvexe Krümmung bzw. konvexe Wölbung im Wesentlichen entlang des gesamten Linienabschnitts zwischen dem Anspritzpunkt und/oder zwischen einem Zentralbereich um den Anspritzpunkt und der Begrenzung des Bodenbereichs zum Grundkörper hin vor.

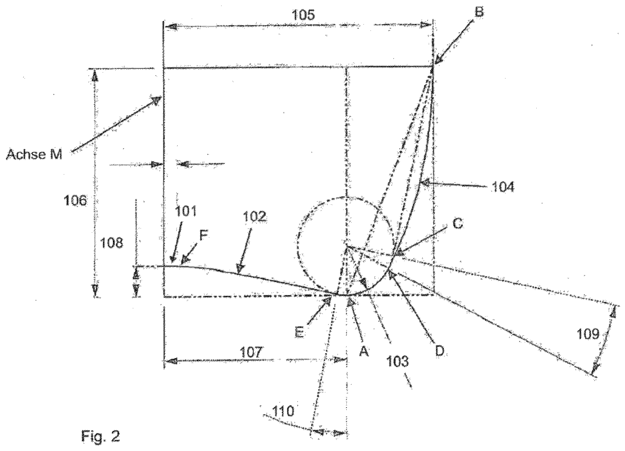

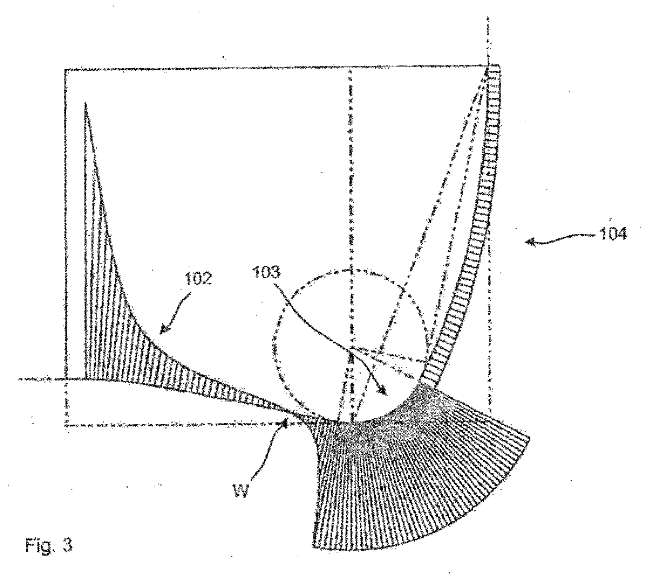

Bevorzugt kann eine Basiskontur des Bodenbereichs des Behältnisses in dem Standbereich (insbesondere in dem gesamten Standbereich) eines Standfußes beschrieben werden durch eine Basiskontur in diesem Fußbereich, welche bevorzugt zunächst einen geradlinigen Abschnitt aufweist (insbesondere ausgehend von einem geometrischen Mittelpunkt des Behältnisses und/oder einem Anspritzpunkt und/oder einem Zentralabschnitt), an welchen sich ein Spline bzw. gekrümmter Abschnitt anschließt. An diesen gekrümmten Abschnitt schließt sich bevorzugt ein weiterer gekrümmter Abschnitt bzw. Spline an, sowie bevorzugt ein weiterer gekrümmter Abschnitt, mit dem der Bodenbereich in den Grundkörper übergeht. Der Standbereich bzw. die Fußfläche, insbesondere der Standfuß und/oder der Standbereich, ist bevorzugt aus dieser Basiskontur durch eine Rotation der Basiskontier um die als Rotationsachse gewählte Mittelachse des Behältnisses erzeugt. Es wird explizit Bezug genommen auf die Patentanmeldung DE 10 2013 110 139 A1 der Anmelderin, in der eine derartig, bevorzugte Geometrie des Standbereichs bzw. des Fußbereichs des Bodenbereichs (darin Bodenabschnitt) beschrieben ist (und in Fig. 2 und Fig. 3 illustriert ist). Sämtliche in dieser Anmeldung beschriebenen Merkmale bezogen auf den (hier als Standbereich bezeichneten) Bereich des Standfußes (und dessen Krümmungsverlauf) sollen hiermit durch Bezugnahme ebenfalls als offenbart angesehen werden.

Bevorzugt erstreckt/erstrecken sich der Nutgrund und/oder der mittlere Zugbandbereich und/oder die zwei seitlichen Zugbandbereiche von dem Anspritzpunkt oder einem diesen umgebenden Zentralbereich in radiale Richtung nach außen hin (dem Verlauf der Bodenwandung in Längsrichtung folgend), im Wesentlichen bis zu (oder nahezu bis zu) dem Grundkörper. Bevorzugt erstreckt/erstrecken sich die Nut und/oder der Nutgrund und/oder der mittlere Zugbandbereich und/oder die zwei seitlichen Zugbandbereiche über mindestens 75 %, bevorzugt mindestens 80 % und besonders bevorzugt mindestens 90 % der Bogenlänge einer von dem Anspritzpunkt und/oder dem Zentralbereich ausgehenden und von dort auf der Bodenwandung in radiale Richtung nach außen bis zum Grundkörper hin gebildeten Linie.

Bevorzugt erstreckt sich die Nut und/oder deren Nutgrund (und insbesondere erstreckt sich zwischen zwei Standfüßen jeweils mindestens eine angeordnete Nut und/oder deren Nutgrund) in radiale Richtung (zumindest mit einer Komponente). Bevorzugt verläuft die Haupterstreckungsrichtung der Nut und/oder des Nutgrundes in einer Projektion der Nut bzw. des Nutgrunds auf eine Ebene senkrecht zur Längsachse im Wesentlichen und insbesondere genau entlang einer radialen Richtung.

Bevorzugt ist zwischen jeweils zwei (seitlich bzw. in Umfangsrichtung) benachbart angeordneten Standfüßen wenigstens eine und bevorzugt genau eine Nut (mit einem sich in Umfangsrichtung über einen (vorgegebenen) Umfangswinkel erstreckenden Nutgrund) angeordnet, wobei bevorzugt die jeweilige Nut eine in radiale Richtung verlaufende Haupterstreckungsrichtung aufweist (wobei insbesondere jeweils mindestens eine Komponente der Haupterstreckungsrichtung in eine radiale Richtung zeigt).

Bevorzugt erstreckt sich ein (jeder) Nutgrund (und/oder jede Nut) im Wesentlichen entlang jedem Bodenhöhenabschnitt des Nutgrunds (wobei eine Bodenhöhe eines Abschnitts in Längsrichtung mit einer Standebene, auf welcher das Behältnis steht, als Referenzebene gemessen wird), insbesondere im Wesentlichen, über denselben (vorgegebenen) Umfangswinkel. Dies bedeutet, dass sich ein näher an der Standfläche befindlicher Bereich des Nutgrundes im Wesentlichen über denselben (vorgegebenen) Umfangswinkel erstreckt wie ein näher (in Längsrichtung gesehen) an dem Grundkörper und/oder dem Mündungsbereich befindlicher Bereich des Nutgrundes.

Mit anderen Worten nimmt eine Projektion des Nutgrundes und/oder eine Projektion des mittleren Zugbandbereichs und/oder eine Projektion des (insbesondere jeweiligen) seitlichen Zugbandbereichs (entgegen der Längsrichtung) auf eine Standebene des Behältnisses (welche senkrecht zur Längsrichtung angeordnet ist) ein im Wesentlichen durch einen Umfangswinkel definierbares und/oder beschreibbares Segment der jeweiligen Projektionsfläche (des Bodenbereichs) ein.

Bevorzugt ist (jeweils) ein Nutgrund im Wesentlichen und bevorzugt genau symmetrisch (bezogen auf die Umfangsrichtung) zwischen zwei (benachbarten) Standfüßen angeordnet. Bevorzugt ist eine (jede) Nut und/oder ein (jeder) Nutgrund (achsen-)symmetrisch bezüglich einer Ebene ausgebildet, die sich in Längsrichtung der Mittelachse bzw. Längsrichtung des Behältnisses sowie in eine (radiale) Richtung entlang der geometrischen Mitte (in Umfangsrichtung gesehen) der Nut und/oder des Nutgrunds erstreckt.

Bevorzugt befindet sich in der geometrischen Mitte einer Nut und insbesondere in der geometrischen Mitte eines Nutgrundes ein Wandungsbereich des Bodenbereichs, der sich bezogen auf Wandungsabschnitte in Umfangsrichtung am weitesten (in radiale Richtung und/oder zur Mittelachse hin) in das Innere des Behältnisses hineinerstreckt. Mit anderen Worten befindet sich bei einer (ausschließlich) entlang der Umfangsrichtung gebildeten, entlang der Bodenwandung (insbesondere entlang der Außenoberfläche des Bodenbereichs) verlaufenden Linie der Linienabschnitt an der geometrischen Mitte eines Nutgrundes am nächsten an der Mittelachse. Bevorzugt weist diese (ausschließlich) entlang der Umfangsrichtung verlaufende Linie im Bereich des Nutgrundes wenigstens abschnittsweise und bevorzugt im gesamten Bereich des Nutgrundes eine Wölbung nach innen auf. Wird ein Schnitt des Bodenbereichs mit einer Ebene, welche senkrecht auf die Mittelachse steht, gebildet, so ist diese im Bereich des Nutgrundes (insbesondere in diesem gesamten Bereich) nach innen gewölbt (zur Mittelachse hin). Bevorzugt befindet sich ein Wendebereich, in dem sich diese Wölbung bzw. Krümmung umkehrt und/oder dessen Orientierung ändert (ausschließlich) außerhalb des Nutgrundes.

In einer bevorzugten Ausführungsform erstreckt sich der mittlere Zugbandbereich wenigstens abschnittsweise entlang der geometrischen Mitte des Nutgrundes und ist bevorzugt symmetrisch bezüglich der geometrischen Mitte ausgebildet. Insbesondere ist die Wandung des Behältnisses wenigstens abschnittsweise und bevorzugt im Wesentlichen entlang der geometrischen Mitte des Nutgrundes (insbesondere bei Betrachtung einer Hauptrichtung der Fläche, welche einer Umfangsrichtung entspricht) nach innen gewölbt. Hierdurch ergibt sich durch die symmetrische Anordnung eine besonders stabile Bodengeometrie.

In einer bevorzugten Ausführungsform weist der Nutgrund wenigstens einen ersten und einen zweiten Wendebereich auf, in welchem ein Oberflächenbereich des Nutgrundes die Orientierung seiner Wölbung ändert. Bevorzugt ändert sich in dem ersten Wendebereich die Orientierung des ersten seitlichen Zugbandbereichs (einer Nach-Außen-Wölbung) zu der Orientierung des mittleren Zugbandbereichs (einer Nach-Innen-Wölbung). Weiterhin ändert sich in dem (von dem ersten Wendebereich verschiedenen) zweiten Wendebereich die Orientierung des mittleren Zugbandbereichs (Nach-Innen-Wölbung) in die Orientierung des zweiten seitlichen Zugbandbereichs (Nach-Außen-Wölbung).

Bevorzugt weist wenigstens eine (insbesondere jede), auf der Oberfläche des Bodenbereichs in dem Nutgrund verlaufende Linie, welche sich entlang der Umfangrichtung erstreckt (welche sich insbesondere nicht entlang der Längsrichtung erstreckt), einen ersten Wendebereich auf, in dem ein Oberflächenbereich des Nutgrundes die Orientierung seiner Wölbung ändert und insbesondere von einem nach außen gewölbten Bereich in einen nach innen gewölbten Bereich überführt wird. Weiterhin weist die Linie einen zweiten Wendebereich auf, in dem ein Oberflächenbereich des Nutgrundes die Orientierung seiner Wölbung ändert und insbesondere von einem nach innen gewölbten Bereich in einen nach außen gewölbten Bereich überführt wird.

Bei einer bevorzugten Ausführungsform handelt es sich bei dem Zugband und/oder dem Nutgrund um eine rotierte Fläche, also eine Fläche, welche durch Rotation (einer, sich insbesondere in einer Längsschnittsebene durch die Mittelachse erstreckende Zugbandkontur) in Umfangsrichtung um die Mittelachse (um den Nutgrund-Umfangswinkel) entsteht.

In einer bevorzugten Ausführungsform handelt es sich bei dem Zugband (welches insbesondere durch den Nutgrund realisiert ist) um einen freigeformten Bodenabschnitt. Insbesondere wird im Vergleich zu obig erwähnter, rotierte Fläche durch eine Freiformfläche ersetzt. Ein Freiformschnitt ermöglicht es, das Material auch innerhalb des Zugbandes zielgerichteter zu verteilen. So können insbesondere auch (sichtbare) Verwerfungen, die zur Schwächung des Zugbands führen können, vermieden werden. Hierdurch wird die Stabilität des Bodens erhöht.

Als Freiformflächen werden insbesondere dreidimensionale, in der Regel doppelt gekrümmte Flächen verstanden, welche bevorzugt (insbesondere nur) durch Splines (stückweise polynomiale Funktionen) und/oder mittels NURBS (Non-Uniform Rational B-Spline) mathematisch abgebildet werden können.

Insbesondere bevorzugt ist das Zugband bzw. der Nutgrund als Freiformfläche ausgebildet, welche an die Flächenkanten einer Fußflankenfläche oder eines Übergangsbereichs, der seitlich an einen Standfuß angeordnet ist, und an den Grundkörper des Behältnisses sowie an einen Zentralbereich um einen Anspritzpunkt oder an den Anspritzpunkt insbesondere tangentenstetig und insbesondere krümmungsstetig angebunden ist. Der Krümmungsverlauf der Freiformfläche des Nutgrundes in eine (jede) vorgegebene Richtung kann durch Polynome n-ten Grades beschrieben werden.

Bevorzugt wird wenigstens ein, bevorzugt werden wenigstens zwei, bevorzugt wenigstens drei für die Freiformfläche des Nutgrundes charakteristische Parameter derart gewählt und/oder bestimmt, etwa approximiert, dass die Freiformfläche an in ihrer geometrischen Form an einen Bereich einer Kugeloberfläche angenähert ist und insbesondere halbkugel(- segment-)artig ausgebildet ist.

In einer vorteilhaften Ausführungsform folgt eine Nutgrundquerschnittskontur bei einem Querschnitt senkrecht zu der Längsrichtung des Behältnisses wenigstens abschnittsweise und bevorzugt im Wesentlichen vollständig einem Spline n-ten Grades, welcher insbesondere in dem mittleren Zugbandbereich und/oder den zwei seitlichen Zugbandbereichen wenigstens abschnittsweise von einem kreislinienförmigen Verlauf abweicht. Damit kann vorteilhaft erreicht werden, dass die Fläche (des mittleren Zugbandbereichs) zum Flascheninneren hin gewölbt und im Querschnitt veränderbar ist. Hierdurch wird bewirkt, dass sich das Zugband besser in die Bodengeometrie einfügt.

In einer bevorzugten Ausführungsform weist wenigstens eine Nut (bevorzugt jede Nut) (bevorzugt zwischen zwei Standfüßen) einen Nut-Umfangswinkel auf, der zwischen 10° und 60°, bevorzugt zwischen 20° und 50°, bevorzugt zwischen 30° und 38° und besonders bevorzugt bei 34° liegt.

In einer bevorzugten Ausführungsform erstreckt sich wenigstens ein Nutgrund (bevorzugt jeder Nutgrund einer jeden Nut zwischen zwei Standfüßen) über einen Nutgrund-Umfangswinkel, der zwischen 2,5° und 10°, bevorzugt zwischen 3° und 7°, bevorzugt zwischen 4° und 6° und besonders bevorzugt bei 5° liegt. Hierdurch kann ein ausreichend funktionsfähiges Zugband erreicht werden.

Bevorzugt nimmt ein Nutgrund (bevorzugt jeder Nutgrund) einer Nut zwischen zwei Standfüßen im Wesentlichen genau eine Ausdehnung in Umfangsrichtung gesehen ein, welches einem Winkelsegment über den vorgegebenen Nutgrund-Umfangswinkel entspricht. In Umfangsrichtung gesehen erstreckt sich damit insbesondere ein Nutgrund entlang seiner gesamten Ausdehnung entlang der Längsrichtung über den (im Wesentlichen exakt über den) vorgegebenen Nutgrund-Umfangswinkel.

Bevorzugt nimmt eine Nut (bevorzugt jede Nut) zwischen zwei Standfüßen im Wesentlichen genau eine Ausdehnung in Umfangsrichtung gesehen ein, welches einem Winkelsegment über den vorgegebenen Nut-Umfangswinkel entspricht. In Umfangsrichtung gesehen erstreckt sich damit insbesondere ein Nutgrund entlang seiner gesamten Ausdehnung entlang der Längsrichtung über den (im Wesentlichen exakt über den) vorgegebenen Nut-Umfangswinkel.

In einer weiter vorteilhaften Ausführungsform ist der Nutgrund und/oder die Nut im Wesentlichen symmetrisch zur geometrischen Mitte des Nutgrundes ausgebildet. Durch die symmetrische Ausgestaltung ergibt sich eine besonders stabile Bodengeometrie.

In einer weiter vorteilhaften Ausführungsform geht ein zwischen einem Standfuß und einem Nutgrund angeordneter Bereich des Bodenabschnitts tangentenstetig und/oder krümmungsstetig in den Nutgrund über. Auch hierdurch ergibt sich eine besonders gute Verstreckung des Materials in die Fußspitzen.

Bei einer weiter vorteilhaften Ausführungsform geht der Nutgrund einer (jeder) Nut (zwischen zwei benachbarten Standfüßen) in den übrigen Bereich der Nut (und/oder in einen Standbereich) und/oder in eine Fußflankenfläche (eines Standfußes) in einem Bereich über, dessen Haupterstreckungsrichtung sich (im Wesentlichen ausschließlich) in radialer Richtung auf der Bodenbereichswandung und insbesondere nicht in Umfangsrichtung erstreckt.

Bevorzugt ist der Übergangsbereich von einem Nutgrund einer (jeder) Nut in den übrigen Bereich der Nut und/oder in eine Fußflankenfläche (eines Standfußes) durch eine auf dem Bodenbereich gebildete Linie gegeben, welche sich entlang dem Bodenbereich (im Wesentlichen ausschließlich) in radialer Richtung hin und nicht in eine Umfangsrichtung erstreckt.

Bei einer weiter vorteilhaften Ausführungsform geht ein (bevorzugt jeder) zwischen einem Standfuß und einem Nutgrund angeordneter Bereich des Bodenabschnitts tangentenstetig und/oder krümmungsstetig in den Nutgrund über. Mit anderen Worten geht ein (insbesondere jeder) seitlich an dem Nutgrund benachbart angeordneter (in Umfangsrichtung gesehen) Bereich des Bodenabschnitts (insbesondere eine Fußflankenfläche) tangentenstetig und/oder krümmungsstetig in den Nutgrund über. Dabei wird in diesem Absatz die Tangentenstetigkeit bzw. Krümmungsstetigkeit insbesondere bei Betrachtung eines Übergangs in Umfangsrichtung und/oder entlang einer Bodenlinie und/oder bei einer radialen Blickrichtung gesehen. Ein derartiger tangentenstetiger und/oder krümmungsstetiger Übergang bietet den Vorteil, dass während eines Blasprozesses zu verteilendes Kunststoffmaterial bei möglichst geringer, durch die geometrische Form (der korrespondierenden Blasform) bewirkte Reibung, beispielsweise von dem Nutgrund, (entlang der Fußflankenflächen) in einen Standfuß bewegt bzw. verstreckt werden kann.

Bei einer weiter vorteilhaften Ausführungsform folgt der Nutgrund wenigstens abschnittsweise (bevorzugt wenigstens der in Umfangsrichtung gesehen zwischen zwei Standfüßen angeordnete Bereich des Nutgrunds) und insbesondere im Wesentlichen entlang dessen gesamter Ausdehnung in radiale Richtung einem kreiskugelartigen Verlauf. Bevorzugt weist der Bodenbereich zwischen je zwei (benachbarten) Standfüßen einen (im Wesentlichen von einem Zentralbereich und/oder Anspritzpunkt ausgehend zu dem Grundkörper des Behältnisses hin erstreckenden) Bereich auf, der einen kreiskugel(-segment-)artigen Verlauf aufweist. Dies bietet den Vorteil, dass bei einem (weitgehend) an einen kreiskugel(-segment-)förmigen Verlauf angenäherten Oberflächenverlauf der Wandung die vorteilhaften geometrischen Eigenschaften einer kreiskugel(-segment-)förmigen Wandung hinsichtlich der Kräfteübertragung weitgehend beibehalten werden können.

Bevorzugt weicht der Nutgrund wenigstens abschnittsweise und insbesondere in einem (jedem) Bereich zwischen zwei Standfüßen (in Umfangsrichtung gesehen) von einem (im Wesentlichen) exakt halbkugel(-segement-)förmigen Wandungsabschnitt bzw. Verlauf ab. Mit anderen Worten folgt bevorzugt kein Bereich des Nutgrunds einem streng geometrischen halbkugel(-segment-)förmigen Verlauf.

Unter einem halbkugelartigen Verlauf eines Bereichs wird insbesondere verstanden, dass dieser Bereich nicht mehr als 20 %, bevorzugt nicht mehr als 10 %, bevorzugt nicht mehr als 5 % und besonders bevorzugt nicht mehr als 2,5 % eines Kugelradius von einer an den Bereich angenäherten Kugel, (insbesondere in radialer Richtung bezogen auf den Kugelmittelpunkt der angenäherten Kugel) abweicht.

Bevorzugt lässt sich der Nutgrund wenigstens abschnittsweise, bevorzugt ein (insbesondere in seiner gesamten Ausdehnung in Umfangsrichtung) gewählter Abschnitt des Nutgrunds zwischen zwei Standfüßen und besonders bevorzugt in seiner Gesamtheit zwischen zwei (hypothetische) Kreiskugeloberflächen einbeschreiben, deren Kugelradien um weniger als 20 %, bevorzugt weniger als 10 %, bevorzugt weniger als 5 % und besonders bevorzugt weniger als 2,5 % voneinander abweichen.

Bevorzugt weicht eine entlang der geometrischen Mitte zwischen zwei benachbarten Standfüßen und/oder der geometrischen Mitte der Nut und/oder der geometrischen Mitte des Nutgrunds auf der Wandung gebildete Linie von einem daran wenigstens abschnittsweise angenäherten Kreisbogen (an jedem Punkt der gebildeten Linie) um weniger als 20%, bevorzugt weniger als 10 %, bevorzugt weniger als 5 % und besonders bevorzugt weniger als 2,5% des Kreisradius der angenäherten Kreislinie in Hinblick auf einen geometrischen Abstand dieser gebildeten Linie von der angenäherten Kreislinie ab. Bevorzugt nimmt dabei die gebildete Linie mehr als 20 %, bevorzugt mehr als 30 %, bevorzugt mehr als 40 %, bevorzugt mehr als 50 %, bevorzugt mehr als 60 %, bevorzugt mehr als 70 %, bevorzugt mehr als 80 % und besonders bevorzugt mehr als 85 % der Bogenlänge einer auf der Wandung, durch geometrische Mitte zwischen zwei benachbarten Standfüßen und oder durch die geometrische Mitte der Nut und/oder des Nutgrunds verlaufenden, gebildeten Verbindungslinie zwischen einerseits dem Bodenmittelpunkt und/oder dem Anspritzpunkt und andererseits dem Übergang des Bodenbereichs in den Grundkörper ein. Bevorzugt lässt sich diese gebildete Linie (wenigstens abschnittsweise und bevorzugt in einem Bereich mehr als 85% der Bogenlänge) durch einen Spline n-ten Grades beschreiben. Denkbar ist aber auch, dass sich diese gebildete Linie durch eine Kreislinie beschreiben lässt.

Bei einer weiter vorteilhaften Ausführungsform ist der Nutgrund (bzw. das Zugband) keine um die Mittelachse des Behältnisses (insbesondere in seiner Gesamtheit und bevorzugt auch keine wenigstens abschnittsweise) rotationssymmetrische Fläche. Dies unterscheidet die Konstruktion des Nutgrundes von derjenigen eines aus dem Stand der Technik bekannten Nutgrundes, in welchem die Basiskontur Zugband an beiden Enden eines Winkelsegments um eine Mittelachse über einen Zugbandwinkel rotiert wird. Eine Abweichung von einem rotationssymmetrischen Flächenabschnitt bietet den Vorteil, dass hierdurch eine Anpassung an den Kurvenverlauf (insbesondere auch hinsichtlich der Krümmung) bei zugleich weitgehender halbkugelsegmentförmiger Form möglich ist.

Der Mündungsbereich weist bevorzugt ein Außengewinde und/oder einen Tragring auf. Bevorzugt weist der Bodenbereich einen insbesondere auf der Mittelachse liegenden Anspritzpunkt auf und der Bodenbereich weist bevorzugt einen diesen Anspritzpunkt umgebenden, insbesondere rotationssymmetrisch ausgebildeten, Zentralbereich auf. Bevorzugt befindet sich der Anspritzpunkt in Längsrichtung gesehen (bei aufrecht-stehendem Behältnis) oberhalb der Standfüße des Behältnisses.

Bevorzugt bilden die Standfüße bzw. Außenoberflächen dieser (jeweils) einen insbesondere ebenen, insbesondere sich (ausschließlich) in einer Ebene senkrecht zur Längsrichtung erstreckenden, bevorzugt wenigstens abschnittsweise ringsegmentförmigen, sich über einen vorgegebenen Umfangswinkel erstreckenden Standabschnitt des Kunststoffbehältnisses aus.

Bevorzugt weist das Behältnis ein Füllvolumen (eines Getränks) von wenigstens 0,1 l, bevorzugt wenigstens 0,2 I, bevorzugt wenigstens 0,3 I, bevorzugt wenigstens 1 l, bevorzugt wenigstens 1.5 I, bevorzugt wenigstens 2 I, bevorzugt wenigstens 3.5 I und insbesondere wenigstens 5 I auf. Bevorzugt weist das Behältnis ein maximales Füllvolumen von 5 I, bevorzugt von 3.5 I, bevorzugt von 2 I, bevorzugt von 1.5 I, bevorzugt von 1 l auf. Bevorzugt weist das Behältnis ein Füllvolumen in einem Bereich zwischen 2 I und 3.5 I auf.

Bevorzugt ist das Behältnis für karbonisierte Getränke geeignet.

Bevorzugt weist der Bodenbereich mehr als drei, bevorzugt mehr als vier, bevorzugt mehr als fünf und besonders bevorzugt mehr als sieben Standfüße auf. Bevorzugt weist der Bodenbereich weniger als zehn, bevorzugt weniger als acht, bevorzugt weniger als sechs und besonders bevorzugt weniger als vier Standfüße auf. Bevorzugt weist das Behältnis einen Petaloidboden auf.

Bevorzugt weist der Behältnisboden eine diskrete Achsensymmetrie in Bezug auf die Mittelachse auf.

Bei einer weiter vorteilhaften Ausführungsform weist der Behältnisboden wenigstens abschnittsweise und bevorzugt ganzflächig eine im Wesentlichen konstante Wandungsstärke auf. Insbesondere ist eine Wandungsstärke in dem Bereich eines Standfußes und dem Bereich eines Nutgrundes im Wesentlichen gleich groß. Damit kann vorteilhaft bei möglichst geringem Materialeinsatz eine möglichst große Stabilität des Behältnisses bzw. Behältnisbodens erreicht werden.

Die vorliegende Erfindung ist weiterhin gerichtet auf eine Blasformeinrichtung zur Herstellung, insbesondere eines Bodenbereichs, von Kunststoffbehältnissen mit einer Innenwandung, gegen welche ein (bevorzugt aus einem Kunststoffvorformling durch Blasformung erzeugtes) Kunststoffbehältnis im Rahmen eines Blasformvorgangs expandierbar ist.

Erfindungsgemäß weist die Innenwandung eine Kontur auf, welche geeignet und bestimmt ist, ein Kunststoffbehältnis zu erzeugen, wobei das Kunststoffbehältnis mit allen obig im Zusammenhang mit dem Kunststoffbehältnis beschriebenen Merkmalen einzig oder in Kombination miteinander ausgestaltet sein kann.

Insbesondere weist dabei die Blasformeinrichtung ein Bodenteil auf oder ist (ausschließlich) als Bodenteil ausgestaltet, welches geeignet und bestimmt ist, einen Bodenbereich der oben beschriebenen Art zu erzeugen.

Das Bodenteil wird bevorzugt dazu verwendet, um (in zusammengesetzten Zustand bzw. in Betriebszustand) mit wenigstens zwei Blasformseitenteilen einen Hohlraum auszubilden, innerhalb dessen Kunststoffvorformlinge durch Beaufschlagung mit einem fließfähigen (bevorzugt gasförmigen) Medium zu den Kunststoffbehältnissen umformbar sind, wobei eine den Hohlraum begrenzende Innenwandung der Blasformseitenteile und des Bodenteils eine Kontur aufweist, welche eine vorgegebene Gestalt der herzustellenden Behältnisse erzeugt.

Die Blasformeinrichtung kann neben dem Bodenteil auch die (bevorzugt lösbar mit dem Bodenteil verbindbare) (Blasform-)Seitenteile aufweisen.

Bevorzugt weist die Blasformeinrichtung eine Vielzahl von Öffnungen, insbesondere zur Entlüftung der Blasformeinrichtung, auf. Die insbesondere zur Entlüftung vorgesehenen Öffnungen ermöglichen ein Abführen eines fluiden und bevorzugt gasförmigen Mediums während eines Expansionsvorgangs des Kunststoffbehältnisses.

Bei einer vorteilhaften Ausführungsform weist die Blasformeinrichtung wenigstens einen Standfußausbildungsbereich zur Herstellung eines Standfußes des Kunststoffbehältnisses auf, wobei die Innenwandung und/oder die Innenkontur der Blasformeinrichtung im Bereich des Standfußausbildungsbereichs wenigstens einen Abflachungsbereich und bevorzugt zwei Abflachungsbereiche aufweist.

Bei einer weiter vorteilhaften Ausführungsform weist jeder zur Ausbildung eines Standfußes ausgestaltete Standfußausbildungsbereich der Blasformeinrichtung wenigstens eine, insbesondere zur Entlüftung der Blasformeinrichtung vorgesehene, Öffnung (insbesondere zur Entlüftung der Blasformeinrichtung) und bevorzugt eine Vielzahl von, insbesondere zur Entlüftung der Blasformeinrichtung vorgesehene, Öffnungen (insbesondere zur Entlüftung der Blasformeinrichtung) auf, wobei die wenigstens eine Öffnung wenigstens bereichsweise und bevorzugt vollständig in dem Abflachungsbereich der Blasform angeordnet ist.

Durch die Anordnung wenigstens einer Öffnung in dem Abflachungsbereich wird vorteilhaft erreicht, dass sich bei der Umformung zwischen dem aus einem Kunststoffvorformling entstehenden Kunststoffbehältnis und der Blasformeinrichtungs-Innenseite (durch die durch die Expansion des Behältnisses bewirkte Verdrängung) insbesondere in dem Eckbereich des Standfußes des Bodenbereichs (welcher in dem Blasformprozess zuletzt fertig ausgeformt wird) ansammelndes fließfähiges Medium durch die Öffnung in dem Abflachungsbereich entlüftet werden kann und hierdurch das Entstehen eines hohen Gegendrucks verhindert werden kann.

Wie aufwändige Experimente gezeigt haben, wird durch eine derartige Kombination der Öffnung mit der Ausgestaltung des Behältnisses bzw. der Bodenform mit einem Abflachungsbereich (im Eckbereich des Standfußes) vorteilhaft erreicht, dass insbesondere auch die im Stand der Technik nur unter Anwendung hohen Fertigblasdrucks in einer ausreichenden hohen Güte herstellbaren Eckbereiche der Standfüße nunmehr mithilfe eines deutlich niedrigeren Fertigblasdrucks herstellbar sind, bei gleichermaßen qualitativ hochwertiger Ergebnisse. Bevorzugt liegt ein Verhältnis zwischen einer Oberfläche des Bodenteils und einer Oberfläche der (bevorzugt aller (insbesondere im Bodenteil angeordneter) zur Entlüftung der Blasformeinrichtung vorgesehenen) Öffnungen bei 3 - 350, bevorzugt bei 4 - 200 und besonders bevorzugt bei 5 - 100.

Vorteilhaft liegt das Verhältnis zwischen einer Oberfläche des Bodenteils und einer Oberfläche der Öffnungen bei 25 - 180, bevorzugt bei 35 - 175 und besonders bevorzugt bei 47 - 169. Das bevorzugte bzw. vorteilhafte Verhältnis hängt dabei insbesondere von der Größe der Flasche bzw. dem Flaschenvolumen und der Form der Öffnungen ab.

Beispielsweise wird bei einem Flaschenvolumen von 0,5 I ein Verhältnis zwischen einer Oberfläche des Bodenteils und einer Oberfläche der Öffnungen, bei welchen es sich bevorzugt um Löcher oder Bohrungen handelt von 169 bevorzugt. Vorteilhaft liegt bei diesem Beispiel das Verhältnis dabei zwischen einer Oberfläche des Bodenteils und einer Oberfläche der Öffnungen bei 145 - 180, bevorzugt bei 150 - 175 und besonders bevorzugt bei 155 - 173.

Es wird demnach erfindungsgemäß vorgeschlagen, dass das Verhältnis zwischen den Oberflächen von Öffnungen und Bodenteil, unabhängig von dem Durchmesser des Bodenteils immer annähernd gleich ist d.h., dass mit einem größeren Durchmesser entsprechend auch die Oberfläche, welche die Öffnungen einnehmen größer ist. Dies kann beispielsweise durch, im Vergleich zu einem kleineren Durchmesser des Bodenteils, mehrere Öffnungen oder auch größere Öffnungen erreicht werden. Hierdurch kann bei jeder Blasform- bzw. Behältnisgröße eine ausreichende Entlüftung sichergestellt werden.

Unter der Oberfläche der Öffnungen wird dabei die Fläche verstanden, welche die Öffnungen in Form von Löchern, Schlitzen oder anderen beliebigen Formen auf dem Bodenteil einnehmen bzw. aufweisen.

Es wurde bei internen Untersuchungen der Anmelderin festgestellt, dass das Verhältnis zwischen Oberfläche der Bodengeometrie und der Oberfläche der Öffnungen und insbesondere Entlüftungsöffnungen bzw. Entlüftungsbohrungen einen Einfluss auf die Entlüftung hat.

Bei den internen Untersuchungen und Versuchen der Anmelderin hat sich gezeigt, dass, ausgehend von diesem Beispiel, ein Kunststoffbehältnis mit einem Durchmesser von 65 mm sehr gute Fertigblasdruckergebnisse erzielt hat. Bevorzugt wird daher das Verhältnis zwischen der Oberfläche der Bodengeometrie und der Oberfläche der Entlüftungsöffnungen für einen Versuchsbehälter mit einem Durchmesser von 100 mm auf das Verhältnis des Behälterdurchmessers von 65 mm angepasst. Bevorzugt liegt die Oberfläche der (Entlüftungs-)Öffnungen dieses Behälters im Wesentlichen bei 0,000094 m² (94 mm²).

Die Bohrungen bzw. Öffnungen sind dabei bevorzugt derart zu gestalten, dass diese einerseits groß genug sind, um eine Entlüftung zu ermöglichen bzw. einen ausreichend großen Strömungsquerschnitt zu erlauben, jedoch noch so klein, so dass kein Material des Kunststoffbehältnisses während der Umformung in die Öffnungen hineingedrückt wird und sich auch keine sicht- und/oder spürbaren Bereiche auf dem fertigen Kunststoffbehältnis ausbilden.

Bevorzugt münden die Öffnungen in Kanäle, welche sich durch die Wandung der Blasform und des Bodenteils hindurch erstrecken, so dass bevorzugt eine Abführung des fließfähigen Mediums aus der Blasform über die Kanäle erfolgt. Demnach schließen sich bevorzugt an die Öffnungen innerhalb einer Wandung der Blasformteile und insbesondere des Bodenteils Kanäle an, welche zur Abführung des gasförmigen Mediums dienen. Vorteilhaft erstrecken sich diese Kanäle wenigstens teilweise durch die Wandung des Bodenteils hindurch. Bevorzugt stellen die Kanäle eine Strömungsverbindung zwischen einer Außenwand des Bodenteils und einer Innenwand des Bodenteils her und damit bevorzugt auch zwischen einem Innenraum der Blasform und einem Außenraum der Blasform.

Bei einer bevorzugten Ausführungsform liegt ein (insbesondere maximaler) Durchmesser des Bodenteils bzw. der Blasformeinrichtung zwischen 50 mm und 200 mm und die Oberfläche der Öffnungen zwischen 23 mm2 und 500 mm2 und/oder die Oberfläche des Bodenteils zwischen 3900 mm2 und 65000 mm2 und die Oberfläche der Öffnungen zwischen 23 mm2 und 500 mm2. Vorteilhaft sind dabei Kombinationen von Durchmesser des Bodenteils, Oberfläche der Öffnungen und Oberfläche des Bodenteils, welche ein Verhältnis zwischen Oberfläche der Öffnungen und Oberfläche des Bodenteils von bevorzugt 160 - 175 und besonders bevorzuge nahezu 169 ergeben, da ein derartiges Verhältnis den geringsten Druckluftverbrauch bei größtmöglicher Behälterqualität sicherstellt. Dieses Verhältnis ist dabei insbesondere vorteilhaft für Flaschenvolumen von 0,5 I und der Ausbildung der Öffnungen als Löcher.

Bei einer weiteren bevorzugten Ausführungsform handelt es sich bei den Öffnungen um eine Vielzahl von Löchern und/oder Schlitzen, welche in dem Bodenteil und insbesondere den Bereichen des Bodenteils, welche zur Ausbildung der Standbereiche des fertigen Behältnisses dienen, angeordnet ist. Bevorzugt ist dabei auch eine Kombination aus Schlitzen und Löchern.

Sind die Öffnungen beispielsweise als Schlitze ausgeführt liefert ein Verhältnis von 169 zwar weiterhin zufriedenstellende Ergebnisse, allerdings lässt sich die Flaschenqualität bei einem Verhältnis bis 47 weiter vorteilhaft verbessern, so dass das Verhältnis zwischen der Oberfläche der Öffnungen und der Oberfläche des Bodenteils, wenn die Öffnungen als Schlitze ausgebildet sind, bevorzugt bei 40 - 180, bevorzugt bei 45 - 170 und besonders bevorzugt bei 47 - 169 liegt.

Sind die Öffnungen als eine Kombination aus Schlitzen und Löchern ausgebildet liegt das Verhältnis zwischen der Oberfläche der Öffnungen und der Oberfläche des Bodenteils bevorzugt bei 30 - 50, bevorzugt bei 33 - 45 und besonders bevorzugt bei 35 - 41.

Die Löcher können dabei bevorzugt geordnet entlang von wenigstens einer und bevorzugt wenigstens zwei gedachten geometrischen Linien angeordnet sein. Denkbar ist bevorzugt aber auch eine ungeordnete Anordnung der Löcher, beispielswiese gezielt in Bereichen, in welchen die Standbereiche des Behältnisses schwer ausgebildet werden können, wie beispielsweise sehr enge oder kleine Bereiche.

Bevorzugt kann ein Schlitz auch durch eine Anordnung einer Vielzahl von Löchern bzw. Bohrungen ausgebildet werden, welche bevorzugt entlang einer Reihe oder eines Splines angeordnet sind. Eine Vielzahl von Löchern erstreckt sich dabei bevorzugt entlang wenigstens einer geometrischen Linie. Bevorzugt werden die Löcher dabei entlang zweier oder mehrerer Reihen nebeneinander angeordnet, sodass sich wenigstens zwei Reihen von Löchern nebeneinander entlang geometrischer Linien erstrecken. Die Anzahl der Löcher der Entlüftungsbohrungen in dem Bodenteil ist dabei bevorzugt wieder abhängig von der benötigten oder gewünschten Entlüftungsbohrungsoberfläche im Verhältnis zur Oberfläche des Bodenteils.

Bevorzugt sind die Öffnungen und/oder Löcher dreireihig angeordnet.

Die Löcher der einzelnen Reihen können bevorzugt direkt nebeneinander auf gleicher Höhe angeordnet sein oder versetzt zueinander. Die Löcher weisen bevorzugt einen Durchmesser von bevorzugt 0,2 mm bis 7 mm, bevorzugt 0,3 mm bis 5 mm und besonders bevorzugt von 0,5 mm bis 4 mm auf. Die Abstände der einzelnen Löcher in einer Reihe zueinander sind bevorzugt gleich oder unterschiedlich. Bevorzugt liegt der Abstand bei 0,6xbis 2,5x dem Durchmesser der Löcher und besonders bevorzugt bei 0,5x bis 2x dem Durchmesser der Löcher.

An einer Außenseite der Bodenform werden die Öffnungen und insbesondere die entlang einer Reihe angeordnete Vielzahl von Löchern bevorzugt innerhalb eines Kanals geführt, um das gasförmige Medium schneller aus der Bodenform abzuführen. Der Kanal weist dabei, bezogen auf einen Durchmesser der Löcher, eine bevorzugt vielfache Breite auf.

Bevorzugt weist jeder Abschnitt eines Bodenteils ein spezifisches Bohrbild auf. Das Bohrbild in einem Fuß und/oder einem Abschnitt des Bodenteils kann bevorzugt aus einer Anordnung mehrerer Zeilen und Spalten bestehen. Bevorzugt ist das Bohrbild mittig innerhalb des Abschnitts des Bodenteils angeordnet. Die Löcher bzw. Entlüftungsbohrung weisen dabei bevorzugt alle den gleichen Durchmesser auf oder unterschiedliche Durchmesser. Bei unterschiedlichen Durchmessern stehen die Durchmesser bevorzugt in einem Verhältnis zwischen 0,25 und 10, bevorzugt zwischen 0,4 und 8 und besonders bevorzugt zwischen 0,5 und 6 zueinander. Auch hier ist die Anzahl der Löcher der Entlüftungsbohrungen in dem Bodenteil bevorzugt wieder abhängig von der benötigten oder gewünschten Entlüftungsbohrungsoberfläche im Verhältnis zur Oberfläche des Bodenteils.

In einer weiteren bevorzugten Ausführungsform ist das Bodenteil zur Ausbildung von Standfüßen des Kunststoffbehältnisses ausgebildet, wobei jeder Standfuß eine Vielzahl von Öffnungen aufweist. Bevorzugt sind dabei in dem Bodenteil drei bis zwölf Standbereiche zur Ausbildung von drei bis zwölf Standfüßen des Kunststoffbehältnisses angeordnet.

Die Öffnungen sind demnach bevorzugt in einem Bereich des Bodenteils angeordnet, der zur Ausbildung von Standbereichen des Behältnisses dient. Bevorzugt sind die Öffnungen daher in gekrümmten Abschnitten des Bodenteils angeordnet.

In einer bevorzugten Ausführungsform weist jeder Standfuß bzw. jeder zur Ausbildung von Standbereichen des Behältnisses dienende Bereich des Bodenteils 7 - 35 Öffnungen, bevorzugt 8 - 30 Öffnungen und besonders bevorzugt 10 - 25 Öffnungen auf. Insgesamt weist ein Bodenteil mit fünf Standbereichen demnach 35 - 175 Öffnungen, bevorzugt 40 - 150 Öffnungen und besonders bevorzugt 50 - 125 Öffnungen auf.

Bei einer weiteren bevorzugten Ausführungsform weist wenigstens ein Loch einen Durchmesser auf, der zwischen 0,5 mm und 4 mm, bevorzugt zwischen 0,8 mm und 2 mm liegt. Besonders bevorzugt sollten, um eine zu starke Ausprägung der Entlüftungsöffnungen an Sichtflächen oder Funktionsfläche am Boden zu vermeiden, die Durchmesser der Öffnungen nicht größer sein als 2 mm, und nicht kleiner als 0,8 mm. An anderen Stellen können die Öffnungen bevorzugt bis zu 5 mm groß sein, um ein schnelles Entlüften zu realisieren.

Bevorzugt ist ein Abstand zwischen zwei nebeneinander angeordneten Öffnungen kleiner als 4 mm, bevorzugt kleiner als 3 mm und bevorzugt kleiner als 2 mm. Insbesondere muss dabei genügend Material zwischen zwei nebeneinander gelegenen Öffnungen und insbesondere Löchern oder Bohrungen sein, so dass diese nicht ineinanderlaufen bzw. ineinander übergehen. Der minimale Abstand zwischen zwei Bohrungen, von Bohrungsrand zu Bohrungsrand ist, ist dabei bevorzugt 0,2 mm. Der Abstand zwischen zwei nebeneinander angeordneten Öffnungen und insbesondere Löchern ist demnach bevorzugt zwischen 0,5 mm und 4 mm, bevorzugt zwischen 0,4 mm und 3 mm und besonders bevorzugt zwischen 0,2 mm und 2 mm.

In einer weiteren bevorzugten Ausführungsform weist wenigstens ein Schlitz eine Breite auf, die zwischen 0,4 mm und 2 mm, bevorzugt zwischen 0,5 mm und 1 mm und besonders bevorzugt zwischen 0,6 mm und 0,8mm liegt. Die Schlitze werden dabei bevorzugt durch Drahterodieren, Fräsen, Senkerodieren oder Laserschneiden an dem Bodenteil angeordnet. Je nach Schnitt- bzw. Schlitzbreite kann dabei ein rechteckiger Querschnitt erstellt werden.

Bevorzugt weist jeder Standbereich bzw. jeder Bereich des Bodenteils, welcher zur Ausbildung von Standbereichen des Kunststoffbehältnisses dient, zwischen ein bis vier Schlitzen auf.

Bevorzugt weist die wenigstens eine, in dem Abflachungsbereich des Standfußausbildungsbereichs angeordnete Öffnung eine größere Oberfläche bzw. einen größeren Öffnungsdurchmesser, bevorzugt eine doppelt so große und besonders bevorzugt eine dreimal so große Oberfläche und/oder Öffnungsdurchmesser (und/oder Strömungsquerschnitt) auf, als die außerhalb des Abflachungsbereich angeordneten Öffnungen. Bevorzugt weist der Abflachungsbereich des Standfußausbildungsbereichs genau eine Öffnung auf. Hierdurch wird vorteilhaft dem Rechnung getragen, dass dieser Bereich des Standfußes beim Blasformprozess des Behältnisses nicht so schnell ausgeformt wird wie die übrigen Bereiche des Standfußes. Hierdurch kann eine besonders hohe Güte der Ausformung des Standfußbereichs erreicht werden.

Bevorzugt weist der Standfußausbildungsbereichs einen Wölbungsbereich auf, welcher eine zum obig beschriebenen Wölbungsbereich des Standfußes des Kunststoffbehältnisses (insbesondere gemäß einer bevorzugten Ausführungsform) korrespondierende Innenoberfläche bzw. Kontur aufweist. Bevorzugt ist in dem Wölbungsbereich mindestens eine, bevorzugt genau eine Öffnung angeordnet. Bevorzugt ist die in dem Wölbungsbereich angeordnete Öffnung in radialer Richtung betrachtet (und/oder entlang einer kürzesten Verbindungslinie entlang der Kontur der Blasformeinrichtung) zwischen der Öffnung in dem Abflachungsbereich und einem Bodenzentrum der Blasformeinrichtung (zur Herstellung des Bodenzentrums des Kunststoffvorformlings) angeordnet. Bevorzugt sind jeweils zwei Öffnungen in dem zu dem Standbereich korrespondierenden Bereich der Blasformeinrichtung angeordnet.

Bevorzugt kann eine als Schlitz ausgebildete Öffnung in die im Wesentlichen kreisförmig ausgestaltete, in dem Abflachungsbereich angeordnete Öffnung münden.

Bevorzugt weist der (insbesondere jeder) Standfußausbildungsbereich eine Vielzahl, bevorzugt mehr als 5, bevorzugt mehr als 10, Öffnungen je Seite des Standfußes auf. Die Vielzahl von Öffnungen sind bevorzugt jeweils in einem Standfußausbildungsbereich angeordnet, welcher zu einem in oder entgegen Umfangsrichtung neben dem Standbereich des Standfu-βes angeordneten Bereich des Standfußes korrespondierend ausgestaltet ist.

Die Vielzahl von Öffnungen kann dabei in (im Wesentlichen) innerhalb einer gemeinsamen Ebene angeordnet sein. Insbesondere kann es sich bei der Vielzahl von Öffnungen um alle Öffnungen einer Seite eines Standfußausbildungsbereichs handeln, welche bezogen auf die Mittelachse der Blasformeinrichtung bzw. des darin herzustellenden Kunststoffbehältnisses radial weiter außerhalb als der Abflachungsbereich und/oder der Wölbungsbereich angeordnet ist.

Die Vielzahl von Öffnungen kann in Form einer, zwei, drei oder mehr Reihen angeordnet sein, wobei jede Reihe von einer Vielzahl von Öffnungen gebildet wird.

Jede Reihe kann einem im Wesentlichen geradlinigen (etwa entlang einer gemeinsamen Ebene) oder einen gekrümmten Verlauf folgen.

Aufwändige Testreihen der Anmelderin ergaben, dass eine Kombination dieses Verhältnisses zwischen der Oberfläche des Bodenteils und der Oberfläche der (insbesondere aller (insbesondere im Bodenteil angeordneter)) Öffnungen (und/oder eine Anordnung der Öffnungen) und dem obig bereits als vorteilhaft beschriebenen Abflachungsbereich eine Reduzierung des Fertigblasdrucks bis 7 bar erreicht werden kann. Dies bietet wesentliche Vorteile zur Energie- und Ressourcen-schonenden Herstellung von Kunststoffbehältnissen.

Weitere Vorteile und Ausführungsformen ergeben sich aus den beigefügten Zeichnungen: Darin zeigen:
- Fig. 1: eine schematische Darstellung eines Kunststoffbehältnisses;
- Fig. 2: eine Darstellung eines Verlaufs im Bereich eines Standfußes eines erfindungsgemäßen Kunststoffbehältnisses gemäße einer bevorzugten Ausführungsform;
- Fig. 3: eine Darstellung eines Krümmungsverlaufes in dem in Fig. 2 gezeigten Abschnitt;

- Fig. 4: eine Darstellung eines Verlaufes in einem Nutgrund einer bevorzugten Ausführungsform eines erfindungsgemäßen Kunststoffbehältnisses;
- Fig. 5 - Fig. 10: einen Bodenbereich 2 gemäß einer Ausführungsform aus dem Stand der Technik mit jeweils entlang verschiedener Schnittkurven dargestellten Krümmungsverläufen;
- Fig. 11 - 13, 19: eine Veranschaulichung einer Konstruktion eines erfindungsgemäßen Standfußes 22 und sich hieraus ergebenden Bodenbereich gemäß einer bevorzugten Ausführungsform;
- Fig. 15,16: eine Schnittdarstellung durch einen Eckbereich eines Standfußes gemäß dem Stand der Technik und gemäß einer erfindungsgemäß vorgeschlagenen Ausführungsform des Standfußes mit Abflachungsbereich;
- Fig. 17, 18: eine beispielhaft als Dreiecksform gewählte Querkontur zur Konstruktion des Abflachungsbereichs mit und ohne den sich ergebenden Bodenbereich;

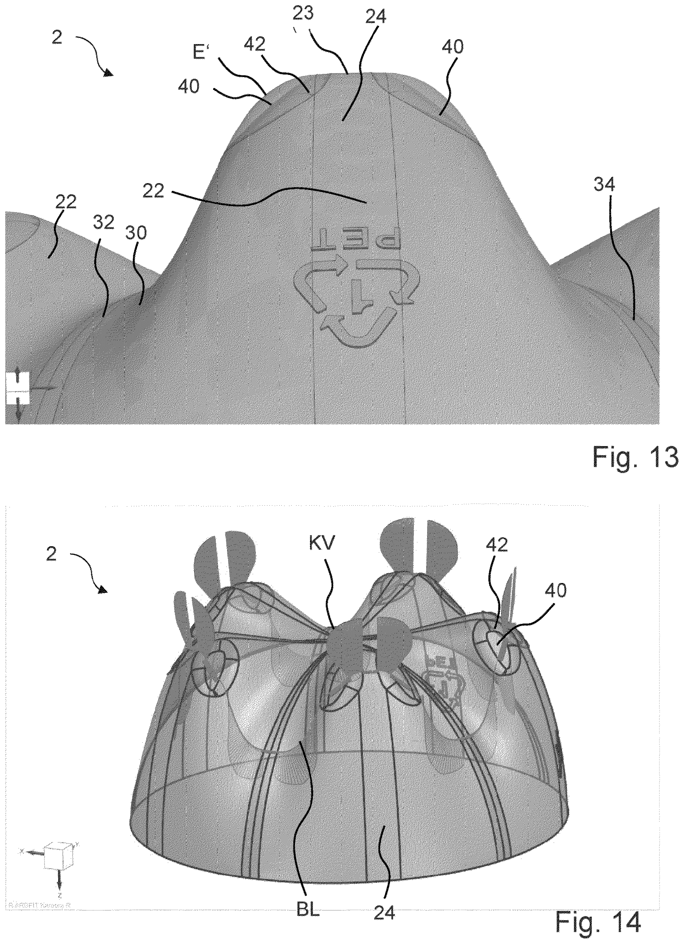

- Fig. 14, 20 -25: jeweils einen Bodenbereich gemäß einer Ausführungsform der vorliegenden Erfindung zur Darstellung von Krümmungsverläufen;

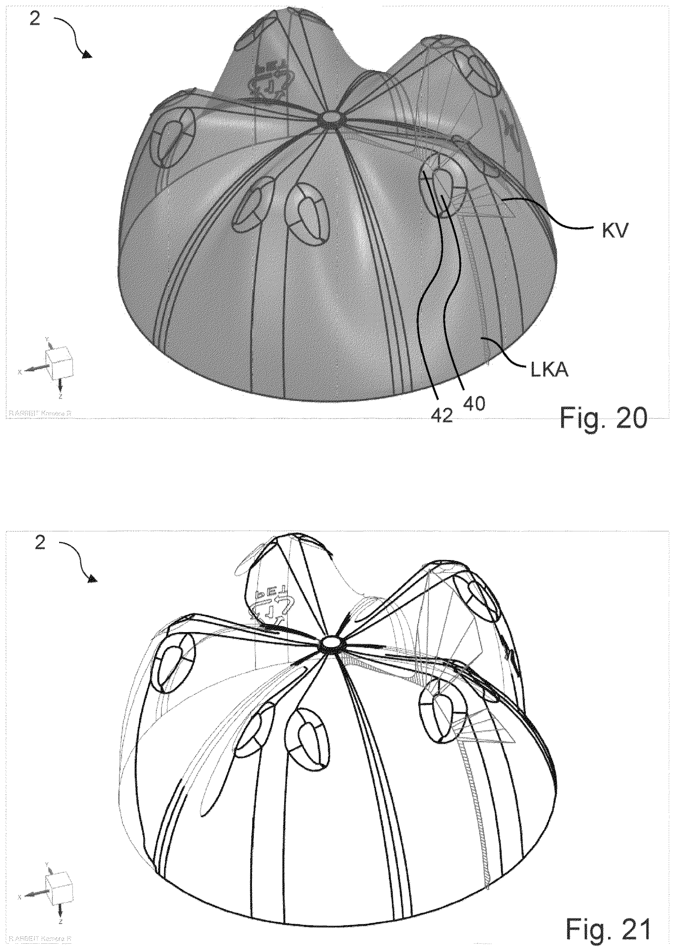

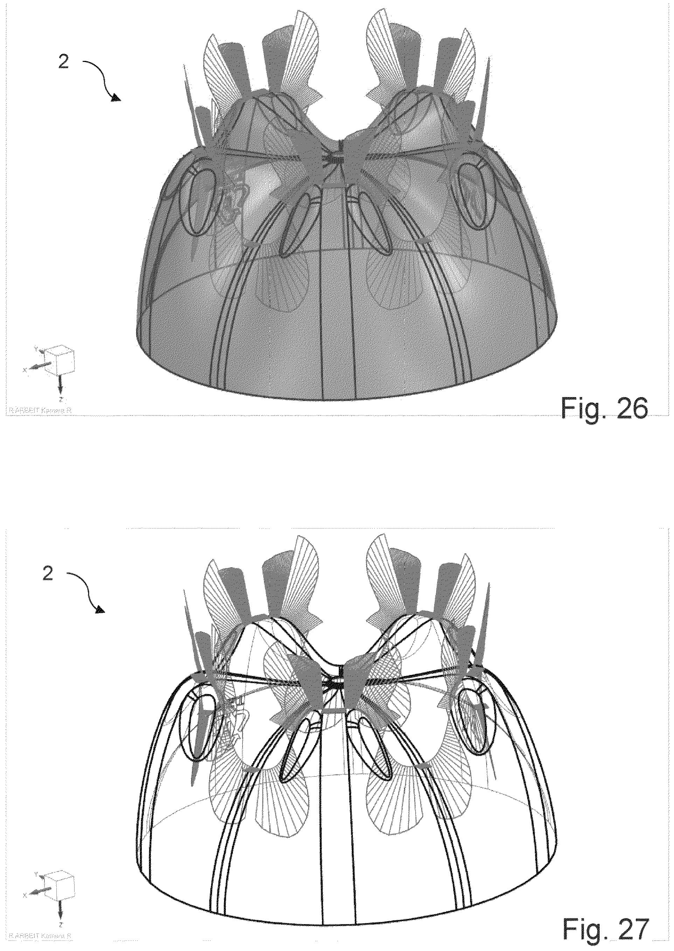

- Fig. 26 - 31: zu den Figuren 20 - 25 analoge Darstellungen von Krümmungsverläufen eines erfindungsgemäßen Bodenbereichs gemäß einer zweiten Ausführungsform mit einem Trapez als Querkontur zur Konstruktion der Abflachungsbereiche;

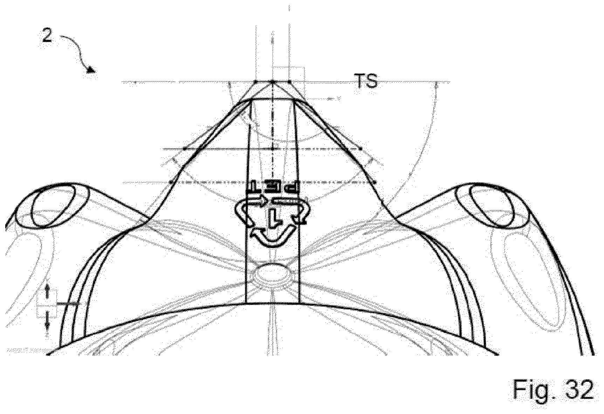

- Fig. 32: eine alternative Verwendung eines Trapezes als Querkontur;

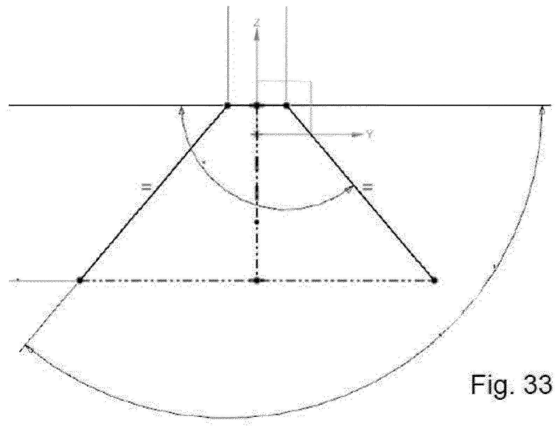

- Fig. 33: das in Fig. 26 - 31 verwendete Trapez.

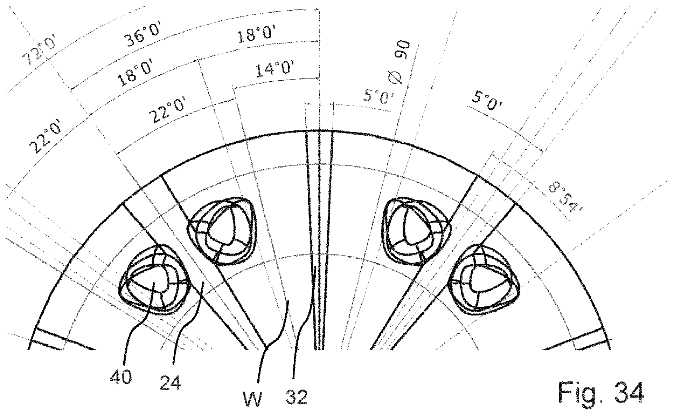

- Fig. 34 - 36: eine relative geometrische Lage der Abflachungsbereiche in Bezug auf den Standbereich, den Nutgrund und den Wendepunktbereich zusammen mit den jeweiligen Winkelabmessungen einer bevorzugten Ausführungsform;

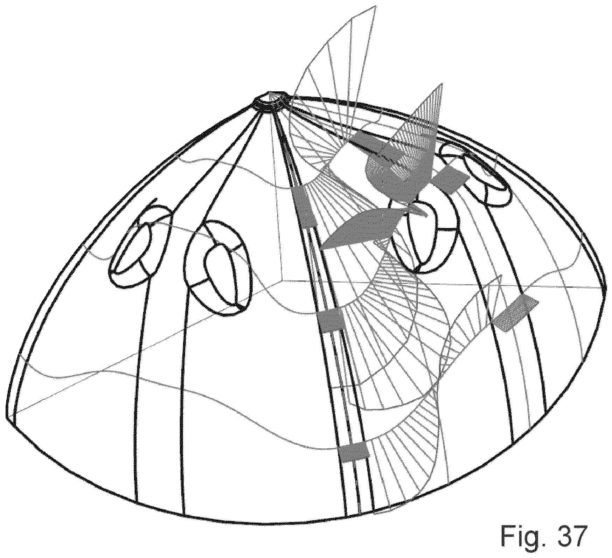

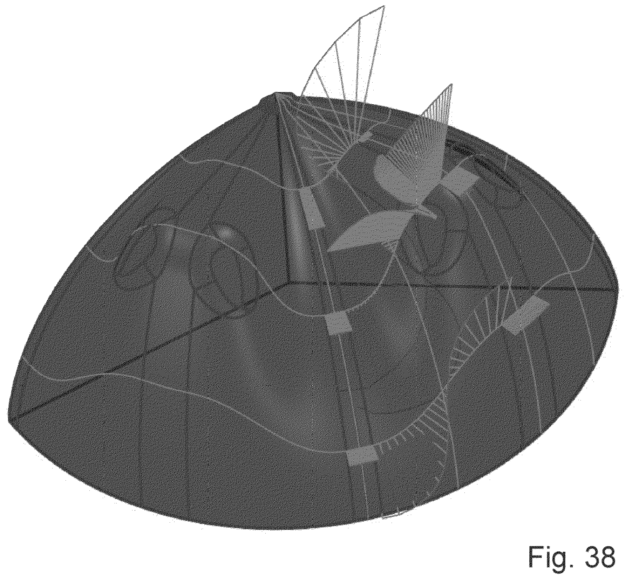

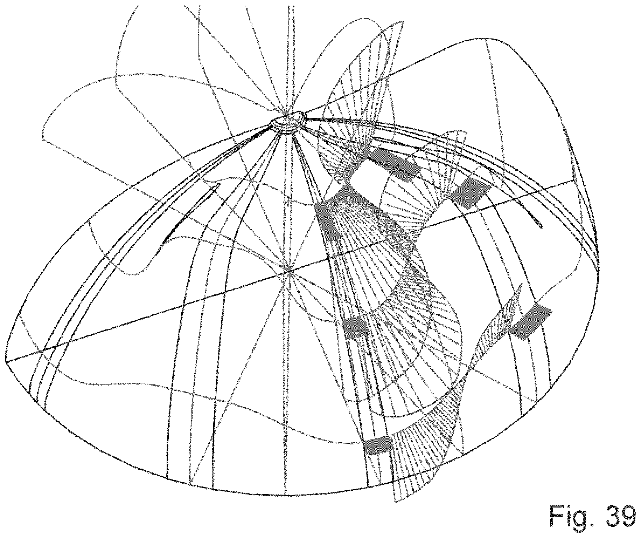

- Fig. 37 - 39: dreidimensionale Darstellungen von Bodenbereichen gemäß bevorzugter Ausführungsformen;

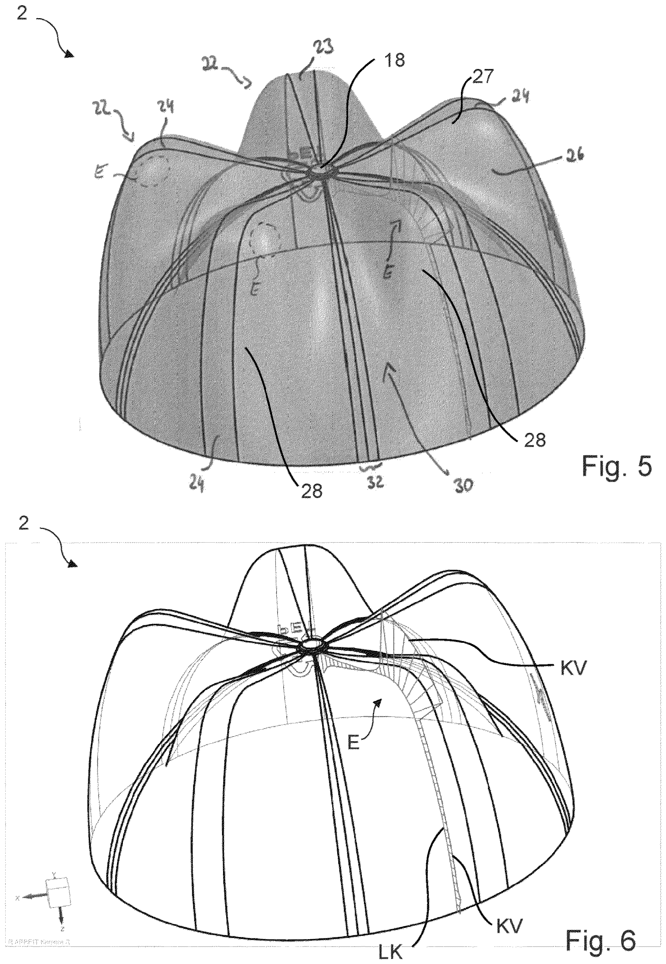

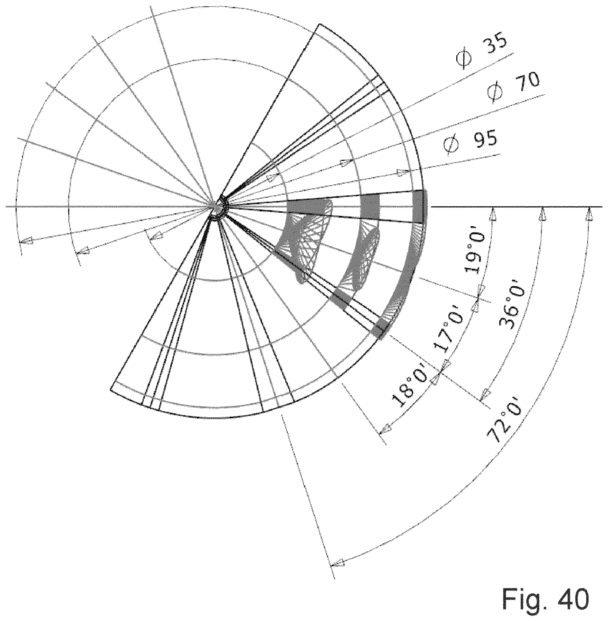

- Fig. 40: eine, den Figuren 34 - 36 entsprechende Abbildung für einen Bodenbereich aus dem Stand der Technik, wie durch Figuren 5 - 10 dargestellt;

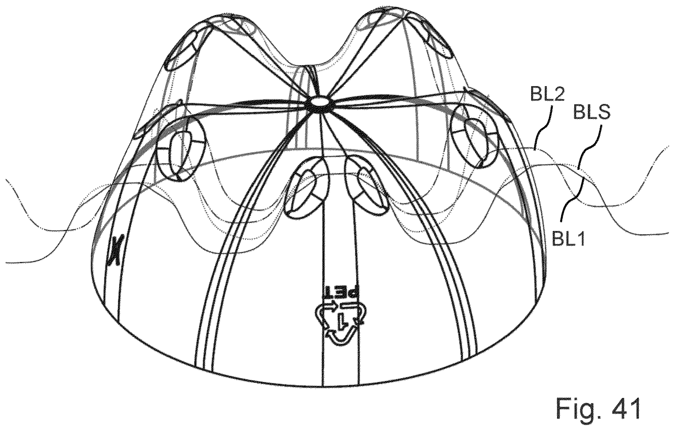

- Fig. 41 - 48: Bodenlinien eines Bodenbereichs gemäß der vorliegenden Erfindung in einer bevorzugten Ausführungsform im Vergleich zu einer Bodenlinie eines entsprechenden Bodenbereichs aus dem Stand der Technik;

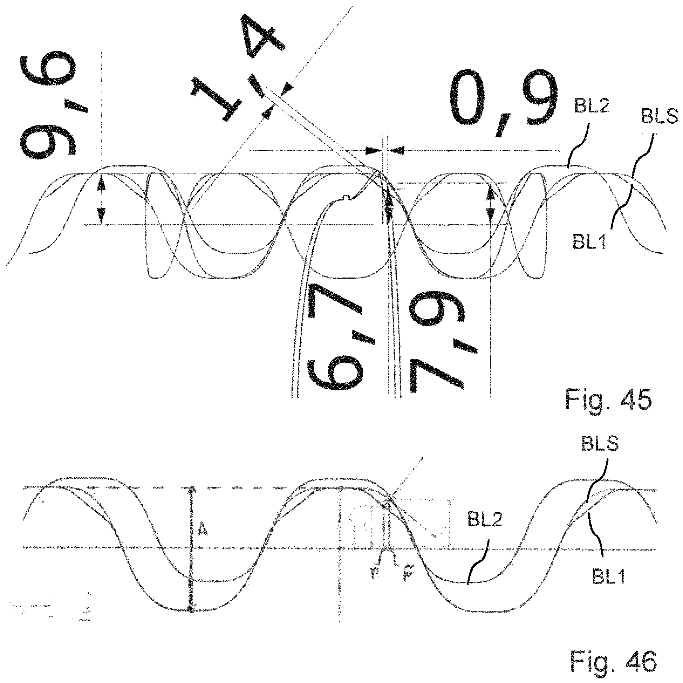

- Fig. 45, 49 und 50: eine Darstellung von Schnittkurven durch den Bodenbereich und Bodenlinien;

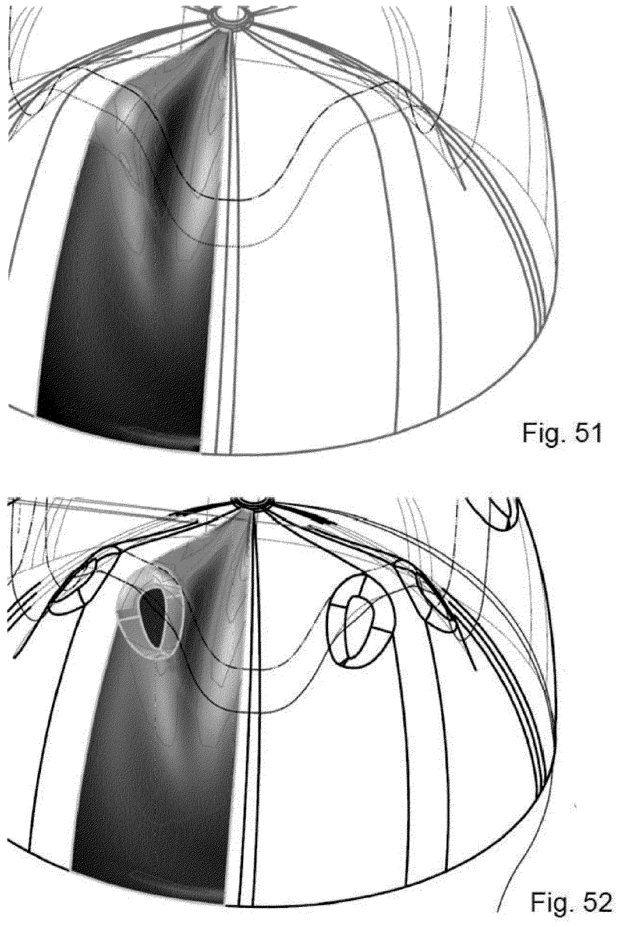

- Fig. 51 und 52: eine maßstabsgetreue Heatmap-Darstellung einer Flächenkrümmung des Standfußes im Bereich zwischen dem Standbereich und dem Beginn des Nutgrunds für einen Bodenbereich gemäß dem Stand der Technik (Fig. 51), wie beispielsweise in den Fig. 5-10 beschrieben und veranschaulicht, und für einen erfindungsgemäßen Bodenbereich 2 gemäß der in den Fig. 20 - 25 gezeigten Ausführungsform; und

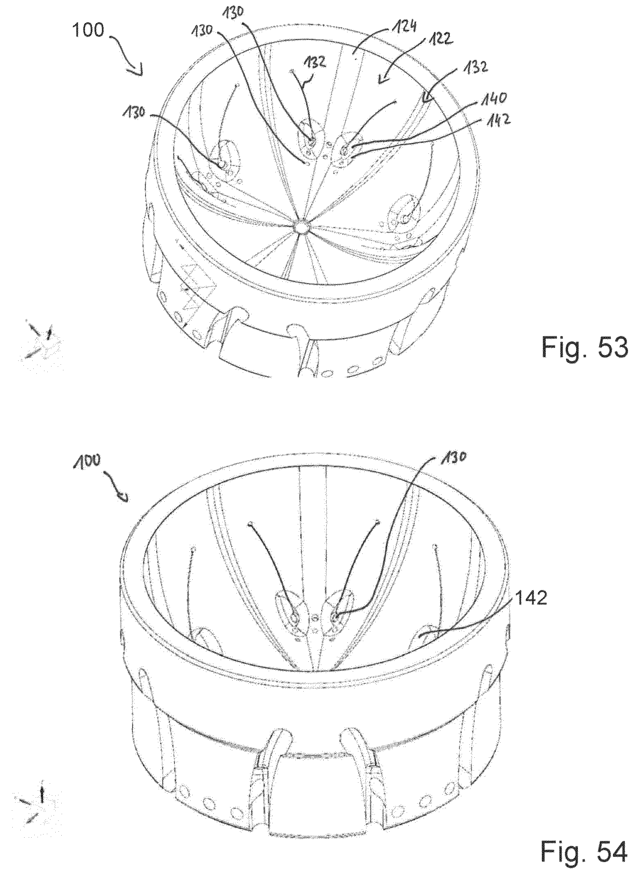

- Fig. 53 - Fig. 60: verschiedene bevorzugte Ausführungsformen einer erfindungsgemäßen Blasformeinrichtung.

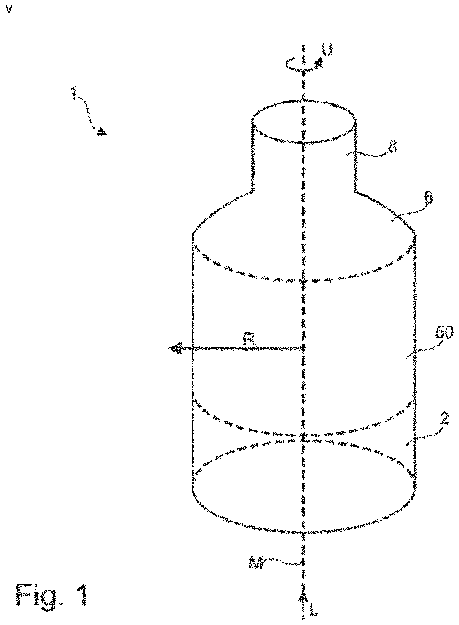

Figur 1 zeigt eine schematische Darstellung eines Kunststoffbehältnisses 1. Dieses Kunststoffbehältnis weist dabei einen Mündungsbereich 6 mit Behältnismündung 8 sowie einen sich an den Mündungsbereich 6 anschließenden Grundkörper 50 auf. Der Grundkörper 50 dient dabei zur Aufnahme des wesentlichen Füllvolumens. Der Grundkörper kann in seiner Gestalt auch anders ausgebildet sein als in Figur 1 gezeigt und kann beispielsweise Wellen oder Muster aufweisen. Der Mündungsbereich 6 kann dabei ein Außengewinde des Kunststoffbehältnisses 1 und einen an der Behältnismündung 8 befindlichen Tragring aufweisen. Auch das erfindungsgemäße Behältnis weist bevorzugt ein Außengewinde sowie einen Tragring auf.

Das Bezugszeichen L kennzeichnet eine Längsrichtung des Kunststoffbehältnisses 1. Wie dargestellt, handelt es sich hier bei der Längsrichtung L und eine Richtung entlang der Mittelachse M des Behältnisses. Außerdem ist in Figur 1 eine Umfangsrichtung U gezeigt, bei der es sich um eine Drehrichtung um die Mittelachse bzw. die Längsrichtung L als Drehachse handelt.

An den Grundkörper 50 schließt sich ein Bodenbereich 2 des Kunststoffbehältnisses 1 an, wobei der Grundkörper 50 über einen gekrümmten Abschnitt oder aber über einen nicht gekrümmten Abschnitt in den Bodenbereich 2 übergehen kann.

Das Bezugszeichen 22 kennzeichnet einen (hier nicht gezeigten) Standfuß des Behältnisses (siehe z.B. Fig. 2). Der Bodenbereich 2 kann mehrere Standfüße 22 aufweisen, mit denen er aufrecht auf einer gerade Oberfläche stehen kann. Das Bezugszeichen R bezieht sich auf eine radiale Richtung bezogen auf die Mittelachse M bzw. auf die Längsrichtung L des Kunststoffbehältnisses. Die radiale Richtung R steht dabei senkrecht auf der Mittelachse M und die Längsrichtung L und läuft entweder auf diese hinzu oder von dieser nach außen hin weg. Der Grundkörper 50 wird insbesondere von einer Seitenwandung gebildet bzw. weist eine solche auf. Diese Seitenwandung verläuft in Umfangsrichtung U des Behältnisses vollumfänglich.

Fig. 2 zeigt eine Darstellung eines bevorzugten Bodenabschnitts in dem Bereich eines Standfußes 22. Genauer gesagt veranschaulicht die in Fig. 2 gezeigte Linie den Verlauf im Bereich des Standfußes. Dabei wird die Basiskontur in diesem Fußbereich zunächst durch eine Gerade 101 beschrieben, an welche sich ein Spline bzw. gekrümmter Abschnitt 102 anschließt. An diesen gekrümmten Abschnitt 102 schließt sich ein weiterer gekrümmter Abschnitt bzw. Spline 103 an sowie ein weiterer gekrümmter Abschnitt 104, mit dem der Bodenabschnitt in den Grundkörper 14 übergeht. Aus dieser in Fig. 2 gezeigten Kontur kann die Fußfläche, wie unten genauer erläutert wird durch eine Rotation der Bodengeometrie um die Rotationsachse M (welche auch den geometrischen Mittelpunkt des Bodenabschnitts festlegt) erzeugt werden.

Die Übergänge von dem geraden Abschnitt 101 in den gekrümmten Abschnitt 102 in dem Punkt F und/oder der Übergang von dem gekrümmten Abschnitt 102 in den Fußradius 103 in den dargestellten Punkt E sind vorzugsweise tangentenstetig. Die Position des Punktes E kann über den Winkel 110 auf dem Fußradius des Abschnitts 103 gesteuert werden. Vorzugsweise ist auch der Übergang zu dem gekrümmten Abschnitt bzw. Spline 104 tangentenstetig, besonders bevorzugt krümmungsstetig. Der gekrümmte Abschnitt 104 geht bevorzugt tangentenstetig und besonders bevorzugt krümmungsstetig in den Grundkörper bzw. den Außendurchmesser des Behältnisses über.

Der Krümmungsverlauf dieses gekrümmten Abschnitts 104 kann dabei durch ein Polynom n-ten Grades beschrieben werden.

Die Außendimensionen des Bodenabschnitts werden durch den Außendurchmesser bzw. Radius 105 und die Bodenhöhe 106 bestimmt. Das Maß des Standkreisdurchmessers bzw. Radius 107 wird bevorzugt durch ein Verhältnis zu dem Außendurchmesser 105 festgelegt. Die Höhe der Geraden 108 wird bevorzugt durch ein Verhältnis zu dem Außendurchmesser 105 beschrieben.

Der Anfangspunkt D des gekrümmten Verlaufs 104 wird hier durch eine Gerade zwischen dem Punkt B und dem Punkt C erzeugt. Diese Gerade BC ist vorteilhaft tangential an dem Fußradius angeordnet. Der Anfangspunkt D des gekrümmten Abschnitts 103 kann wiederum mithilfe des Winkels 109 auf dem Fußradius des Abschnitts 103 zwischen den Punkten A und C bestimmt werden.

Fig. 3 zeigt einen Verlauf der Krümmung des in Fig. 2 gezeigten Abschnittes. Man erkennt, dass der Bereich 102 in einer ersten Richtung gekrümmt ist und der Bereich 103 in einer zweiten Richtung. Zwischen diesen beiden Bereichen befindet sich ein Wendepunkt W, in dem sich die Krümmung ändert. Auch erkennt man, dass die Krümmung in dem Bereich 103 stärker ist als in dem Bereich 104 . Die jeweiligen sich senkrecht zu der Linie wegerstreckenden Geraden geben ein Maß für die inverse Krümmung, das heißt, je länger die jeweiligen Linien sind, desto größer auch der Krümmungsradius und desto kleiner die Krümmung. Damit weist der gesamte sich aus den Abschnitten 102, 103 und 104 ergebende Verlauf des Bodenabschnitts nur einen Wendepunkt auf.

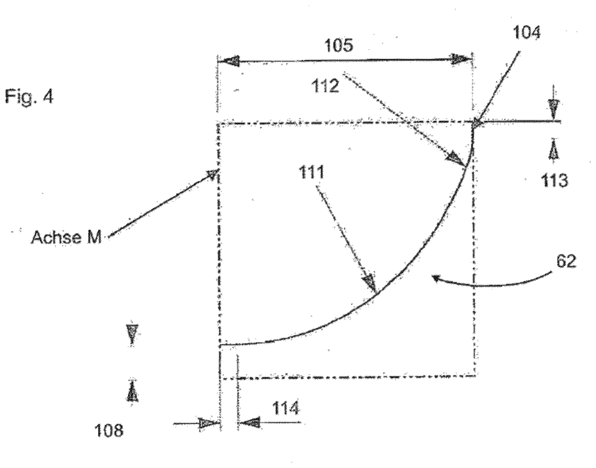

Fig. 4 zeigt einen bevorzugten Verlauf in dem Bereich eines Nutgrundes 62 bzw. Zugbandes. In diesem Bereich wird die Kontur wiederum zunächst durch eine Gerade 114 beschrieben und den sich daran anschließenden großen Zugbandradius 111, einen Bereich, der bevorzugt eine konstante Krümmung aufweist. An diesem Bereich 111 schließt sich ein Bereich 112 mit einem kleineren Zugbandradius an. An diesem Bereich wiederum schließt sich ein Teilstück 113 an, in dem der Verlauf auch geradlinig sein kann. An diesem Bereich 113 wiederum schließt sich die Basiskontur des Fußes an und der Übergang in den Grundkörper. Auch aus dieser gezeigten Kontur wird die Zugbandfläche, wie unten genauer gezeigt wird, durch eine Rotation um die Rotationsachse M erzeugt. Vorteilhaft sind auch hier die Übergänge zwischen dem Bereich 111, dem Bereich 112, dem Teilstück 113 und der Basiskontur 104 tangentenstetig.

Die Fig. 5 bis 10 zeigen einen Bodenbereich 2 eines Kunststoffbehältnisses 1 gemäß einer Ausführungsform aus dem Stand der Technik mit jeweils entlang verschiedener Schnittkurven dargestellten Krümmungsverläufen KV. Dabei handelt es sich jeweils um denselben als Petaloidboden ausgebildeten Bodenbereich 2, welcher beispielsweise für karbonisierte Getränke verwendet wird.

Fig. 5 und 6, die Figuren 7 und 8 und die Figuren 9 und 10 zeigen dabei - der besseren Übersicht halber - jeweils paarweise einmal in einer dreidimensionalen Graustufenabbildung und einmal in einer reinen Liniendarstellung dieselben entlang einer jeweiligen Schnittkurve verlaufenden Krümmungsverläufe KV.

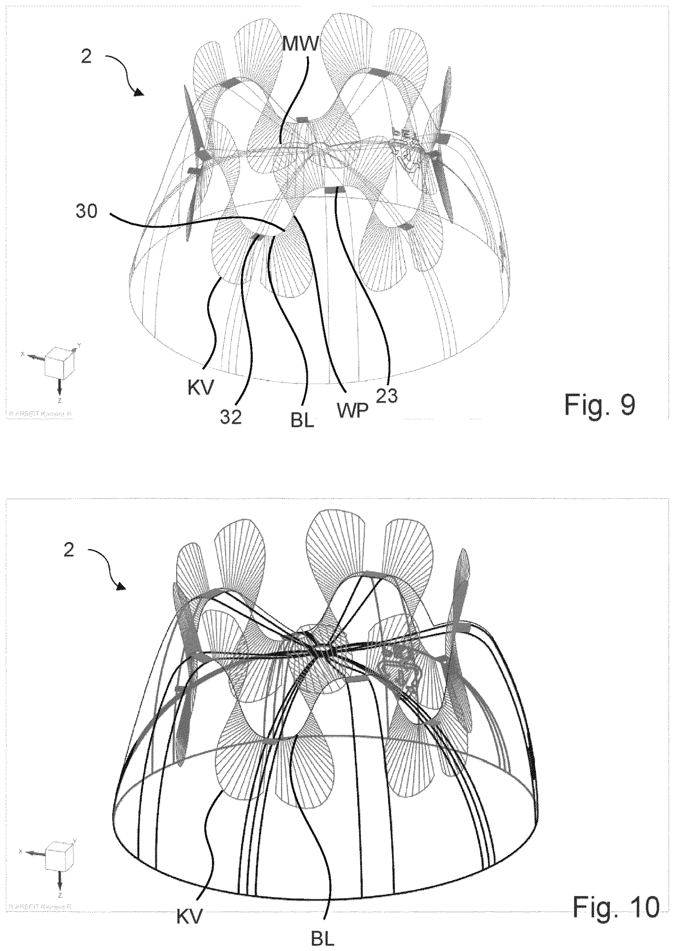

Wie in Fig. 9 dargestellt ist, weist der hier beispielhaft dargestellte Bodenbereich fünf Standfüße 22 auf, welche jeweils sich einen im Wesentlichen vom Bodenzentrum 18 bis hin zur Begrenzung des Bodenbereichs zum Grundkörper erstreckenden Standbereich 24 aufweisen. Der Standbereich 24 weist eine, insbesondere im Wesentlichen eben ausgestaltete, Standfläche 23 auf, welche eine Standebene, auf welcher das Kunststoffbehältnis 1 aufrecht auf seinen Standfüßen 22 steht. Das Bodenzentrum (typischerweise ein Anspritzpunkt des Kunststoffbehältnisses 1) ist dabei von der Standebene um eine sogenannte Bodenfreiheit beabstandet.

Zwischen jeweils zwei Standfüßen 22 ist eine Nut 30 angeordnet, in welcher sich der Bodenbereich 2 vergleichsweise weiter in Richtung des Behältnisinneren erstreckt. Ersichtlich ist in Fig. 5 auch, dass der Bodenbereich 2 in der Nut (zumindest abschnittsweise) nach innen gewölbt bzw. konkav gekrümmt ist, während der Bodenbereich (ausgenommen in einem Bereich um das Bodenzentrum 18, (insbesondere in jeweils beide Hauptkrümmungsrichtungen) nach außen gewölbt bzw. konvex gekrümmt ist.

Zwischen einem Standfuß 22 und einer benachbarten Nut gibt es daher einen Wendepunktbereich (in nachfolgenden Abbildungen mit dem Bezugszeichen W gekennzeichnet), in welchem sich die Orientierung der Krümmung des Bodenbereichs (zumindest in einer Hauptkrümmungsrichtung) umgekehrt.

Das Bezugszeichen 32 kennzeichnet einen Nutgrund der Nut 30, welcher in der geometrischen Mitte der Nut angeordnet ist und welcher derart ausgebildet ist, dass er als Zugband wirkt, welches auf das Bodenzentrum 18 wirkende Kräfte auf den Grundkörper überträgt. Hierzu weist dieser bevorzugt im Wesentlichen einen halbkugelartigen (bzw. ellipsoidalen) Verlauf (innerhalb eines in Umfangrichtung definierten Winkelsegments) auf.

Das Bezugszeichen 26 kennzeichnet einen Fußseitenbereich 26, welcher einen seitlichen Bereich des Standfußes 22 darstellt. Dieser ist insbesondere hauptsächlich in Richtung des benachbarten Standfußes 22 hin gewandt. Eine Haupterstreckungsrichtung des jeweiligen Normalenvektors von Flächenpunkten dieses Fußseitenbereichs 26 verläuft dabei in (oder entgegen) die Umfangsrichtung U.

Das Bezugszeichen E kennzeichnet einen Eckbereich des Standfußes 22. Bei diesem Eckbereich treffen ein Fußaußenbereich 28, ein (in radialer Richtung) (hauptsächlich) nach au-βen gewandter Bereich, ein (in aufrecht auf den Standfüßen stehendem Zustand) (hauptsächlich) nach unten gewandter Fußuntenbereich 27 aufeinander. Dieser Eckbereich ist zwischen dem Fußseitenbereich 26 und dem Standbereich angeordnet. Mit anderen Worten ausgedrückt dient der Eckbereich als eine Art Übergangsbereich des Standbereichs 24 in den Fußseitenbereich 26. In analoger Weise dient der Eckbereich E, um den Fußaußenbereich 28 in den Fußseitenbereich 26 überzuführen.

Ein bevorzugtes Beispiel für ein Kunststoffbehältnis mit einem Bodenbereich 2 gemäß den Figuren 5-10 könnte einen Durchmesser von 100 mm aufweisen. Der Standkreisdurchmesser könnte 64,5 mm betragen. Die Bodenfreiheit, gemessen von einer Aufstandsfläche/Standebene zum Bodenzentrum / Anspritzpunkt, beträgt in diesem Beispiel 5,507 mm.

Identische Bezugszeichen kennzeichnen nachfolgend identische oder ähnlich wirkende und/oder ausgestaltete Bereiche oder Merkmale.

Die Figuren 5 und 6 zeigen den Krümmungsverlauf KV des Bodenbereichs entlang einer Längsschnittkontur LK, welche sich aus einem Längsschnitt des Bodenbereichs 2 durch den Eckbereich E ergibt, wobei der Längsschnitt entlang einer Ebene erfolgt, in welcher die Mittelachse M liegt. Die Längsschnittkontur LK hat dabei keine Ausdehnung in Umfangsrichtung U.

Der Krümmungsverlauf entlang dieser Längsschnittkontur zeigt, dass der Bodenbereich in einem Bereich um den Anspritzpunkt bzw. das Bodenzentrum 18 herum nach innen gewölbt ist. Radial weiter auswärts, also mit zunehmendem Abstand von der Mittelachse M, kehrt sich die Orientierung der Krümmung um in eine nach außen gewölbte bzw. konvexe Krümmung. Insbesondere um den Eckbereich E ist der Bodenbereich entlang der Längsschnittkontur konvex gekrümmt. Dabei steigt der Krümmungsbetrag in dem Bereich des Eckbereichs E stark an und fällt zunächst in dem Eckbereich leicht und nach dem Eckbereich rapide ab. In dem in Längsrichtung L gesehenen oberen Fußaußenbereich weist der Bodenbereich entlang der Längsschnittkontur LK nur noch eine geringe (konvexe) Krümmung auf. Ersichtlich ist auch, dass innerhalb des Eckbereichs E und in den in radiale Richtung an den Eckbereiche E angrenzenden Abschnitt der Längsschnittkontur LK der Krümmungsbetrag und/oder der Krümmungswert stetig abnimmt, aber verglichen mit den daran angrenzenden Bereichen die Längsschnittkontur kein lokales Minimum des Krümmungsbetrags und/oder Krümmungswerts in einem innerhalb des Eckbereichs E liegenden Abschnitt aufweist.

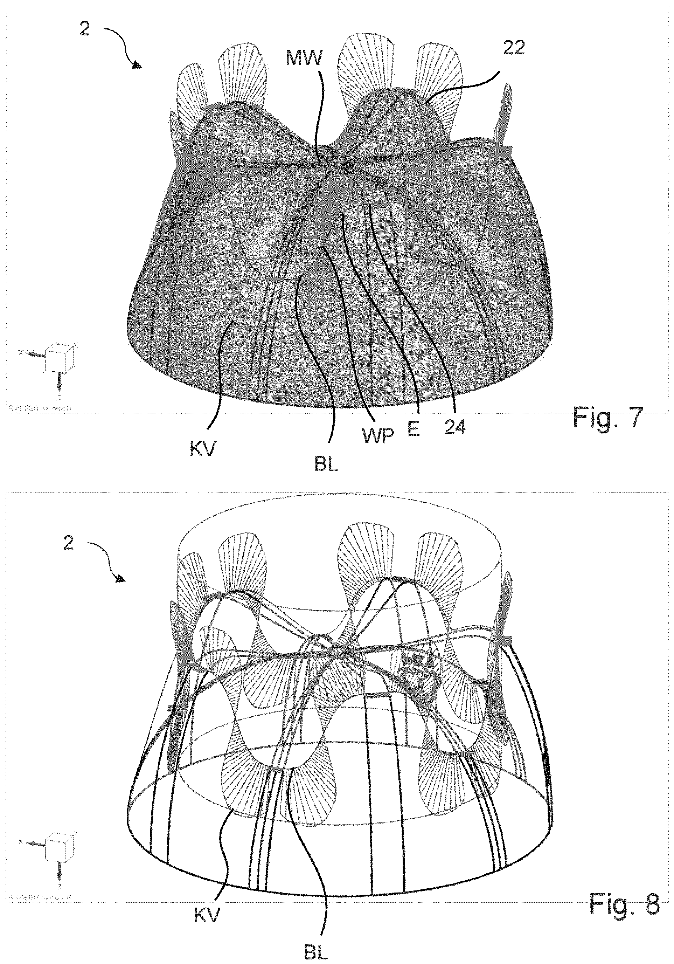

Die Figuren 7 und 8 zeigen den Krümmungsverlauf entlang einer Bodenlinie BL durch den Eckbereich E und die den Standbereich 24 eines Standfußes 22. Unter einer Bodenlinie wird hier (und nachfolgend) eine sich aus einer Zylinderschnitt mit dem Bodenbereich ergebende Kontur bzw. einem dieser Kontur auf der Außenoberfläche folgenden Linie verstanden.

In einer Projektion auf die Standebene entlang der Mittelachse stellt die Bodenlinie eine Kreisline dar.

In der in den Figuren 7 und 8 gewählten Bodenlinie wurde für das obig beschriebene bevorzugte Beispiel eines Behältnisses mit diesem Bodenbereich ein Durchmesser dieses Kreises von 77 mm gewählt.

Die Bodenlinie beschreibt in einer alternativen Definition einen dem Bodenbereich (bzw. dessen Außenoberfläche) folgenden Linienverlauf, welche stets denselben Abstand zur Mittelachse aufweist.

Der Krümmungsverlauf der Bodenlinie bezieht sich dabei (auch nachfolgend) insbesondere (auch nachfolgend) auf die (entlang der Zylindermantelfläche) abgewickelte Bodenlinie BL, so dass der dargestellte Krümmungsverlauf ausschließlich einen Krümmungsverlauf der Höhenwerte des Bodenbereichs in Abhängigkeit eines Umfangswinkels (gemessen in Umfangsrichtung) wiedergibt.

Die Höhenwerte werden dabei (ausschließlich) entlang der Mittelachse durch Projektion des jeweiligen Punkts der Bodenline in ausschließlich radiale Richtung auf die Mittelachse gemessen.

Beispielsweise werden die Höhenwerte als Abstand des jeweiligen Punkts der Bodenline zu einer senkrecht zur Mittelachse verlaufenden Ebene gemessen, welche beispielsweise durch den Behältnisbereich geht, in welchem der Bodenbereich in den Grundkörper übergeht und/oder angrenzt.

Wie aus dem Krümmungsverlauf ersichtlich (dargestellt in einer senkrecht zur Bodenlinie verlaufenden Krümmungswertdarstellung) ist der Bodenbereich entlang des Standbereichs 24 ungekrümmt (weist denselben Höhenwert auf und bewegt sich entlang einer Kreislinie). Die Bodenlinie BL verläuft entsprechend innerhalb des Standbereichs 24 auf einer Kreislinie. Angrenzend an den Standbereich 24 steigt der Krümmungswert zunächst sprunghaft an, steigt innerhalb des Eckbereichs E weiterhin stetig bis zur Erreichung eines Maximums MW (des Krümmungsbetrags bzw. Krümmungswerts) an und fällt dann bis zum Erreichen eines Wendepunkts WP stetig ab, um sodann nach Erreichen des Wendepunkts WP, innerhalb der Nut 30, die Orientierung der Krümmung zu ändern. Der Wendepunkt WP stellt dabei die Abgrenzung zwischen dem Nutbereich 30 und dem Standfuß 22 dar.

Ersichtlich ist, dass innerhalb des Eckbereichs E der Krümmungsverlauf entlang der Bodenlinie BL genau ein Maximalwert erreicht wird, welcher gleichzeitig das (globale) Maximum der Krümmungswerte und/oder Krümmungsbeträge der gesamten Bodenlinie entlang des Abschnitts zwischen dem Standbereich und dem Wendepunkt WP darstellt.

Die Figuren 9 und 10 zeigen jeweils zwei leicht unterschiedliche perspektivische Darstellungen den Bodenbereich mit einer Bodenlinie BL, welche ebenfalls durch den Eckbereich E und den Standbereich 24, hier aber zusätzlich durch die Standfläche 23 verläuft.

In dem obig genannten beispielhaften bevorzugten Behältnis weist diese Bodenlinie (in der obig beschriebenen Projektion) einen Kreisdurchmesser von 64,50 mm auf.

Die durch die Standfläche 23 verlaufende Bodenlinie BL zeigt ein ähnliches Krümmungsverhalten wie die in den Figuren 7 und 8 gewählte Bodenlinie BL.

Ersichtlich ist wiederum der nicht-gekrümmte Bereich innerhalb der Standfläche 23 (Krümmungswert ist Null), der sprunghafte Anstieg des Krümmungswerts in dem an den Standbereich, hier die Standfläche 23, angrenzenden Abschnitt der Bodenlinie BL in dem Standfuß 22. Wiederum steigt der Betrag des Krümmungswerts bzw. der Krümmungswert bis zum Erreichen eines (genau eines) maximalen Werts MW innerhalb des Eckbereichs E an und fällt dann stetig bis zum Erreichen des Wendepunkts WP (Krümmungswert ist hier Null) ab.

Der Wendepunkt WP stellt die Abgrenzung zwischen dem Standfuß 22 und der Nut 30 dar. In der Nut steigt der Betrag des Krümmungswerts wieder stetig bis zum Erreichen eines maximalen Krümmungsbetrags an (minimaler Krümmungswert, da negative Krümmungswerte) und der Bodenlinie weiter in Richtung des Nutgrunds 32 folgend, fällt der Betrag des Krümmungswerts hier wieder stetig ab. Denkbar ist ein, hier sprunghafter, Abfall des Betrags des Krümmungswertes beim Übergang zum Nutgrund 32. Denkbar ist, wie in den Figuren 7-9 dargestellt, ein Nutgrund, welcher eine nicht gekrümmte Bodenline, innerhalb des Nutgrunds aufweist. Es sind aber auch andere Ausführungsformen eines Nutgrunds denkbar, etwa mit verschiedenen nach innen und nach außen gewölbten Bereichen.

Auch hier wird in dem Eckbereich kein minimaler Betrag des Krümmungswerts und/oder lokales Krümmungswertminimum innerhalb der zwischen der Standfläche 23 und dem Wendepunkt WP verlaufenden Bodenlinie angenommen.

Die beiden seitlich angeordneten Eckbereiche E der Standfüße 22 stellt dabei den in dem Blasformprozess am bei der Ausformung herausfordernsten Bereich dar. Eine gute Ausformbarkeit kann bei dieser Bodenausgestaltung lediglich über eine Beaufschlagung mit einem sehr hohen Fertigblasdruck erreicht werden.

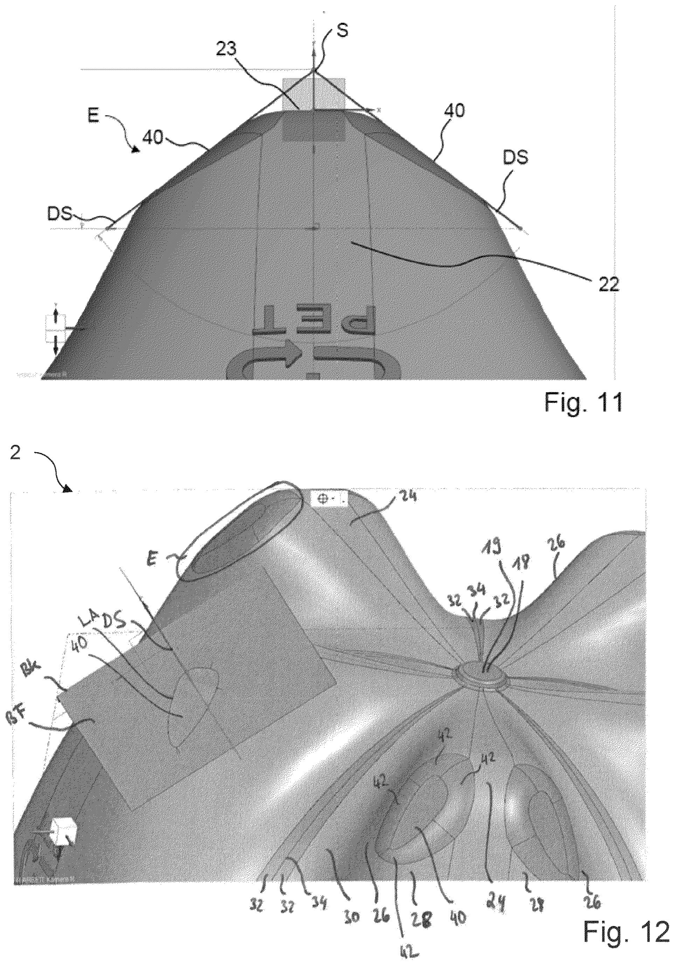

Fig. 11 bis 13 zeigen jeweils eine Veranschaulichung einer Konstruktion eines erfindungsgemäß vorgeschlagenen Standfußes 22 (Figuren 11, 12) und einen sich hieraus ergebenden Bodenbereich 2 (Fig. 12) mit mehreren erfindungsgemäßen Standfüßen 22 gemäß einer bevorzugten Ausführungsform. Beide Figuren zeigen eine Sicht von außen auf den mittig dargestellten Standfuß 22 in verschiedener perspektivischer Darstellung.

Wie aus den Figuren 11-13 ersichtlich, wird der bisherige Bodenverlauf des Standfußes 22 in den beiden, seitlich zum Standbereich bzw. zur Standfläche 24 angeordneten, Eckbereiche E des Standfußes 22 abgeflacht, indem jeweils ein Abflachungsbereich 40 vorgesehen wird. In der in dem Figuren 11-13 dargestellten Ausführungsform ist dieser Abflachungsbereich 40 eben ausgebildet. Um den Abflachungsbereich 40 herum ist ein Wölbungsbereich 42 vorgesehen, der den Bodenverlauf des Standbereichs in den Bodenbereich der Nut bzw. der übrigen Fußseitenfläche 26 überführt.

Fig. 13 stellt einen Vergleich zwischen dem vorherigen Bodenverlauf eines Standfußes mit der erfindungsgemäß veränderten Ausführungsform eines Bodenverlaufs eines Standfußes 22 gegenüber. Dabei sind bevorzugt ausschließlich die beiden Eckbereiche E des Standfu-βes verändert. Der besseren Unterscheidung halber ist hier der Eckbereich des Standfußes aus dem Stand der Technik, welcher in den Figuren 5-10 dargestellt und beschrieben wurde, mit dem Bezugszeichen E' gekennzeichnet und transparent dargestellt.

Ersichtlich ist, dass durch die, durch das Vorsehen der Abflachungsbereiche 40 bewirkte, Abflachung des Eckbereichs E des Standfußes bewirkt wird, dass der Bodenverlauf in dem Eckbereich in Richtung des Nutgrunds 32 und/oder der Nut 30 schneller abfällt. Das Bezugszeichen 34 kennzeichnet die geometrische Mitte des Nutgrunds 32, welche üblicherweise auch die geometrische Mitte der Nut 30 bildet.

Die Anmelderin hat in aufwändigen Experimenten herausgefunden, dass ein derart abgeflachter Standfuß einen deutlich geringeren Fertigblasdruck bedarf, um gleichwohl eine gute Ausformbarkeit der Eckbereiche E des Standfußes gewährleisten zu können.

Die beiden Figuren 11 und 12 veranschaulichen eine Konstruktion des Abflachungsbereichs 40. Bevorzugt bleiben ausgenommen des Abflachungsbereichs und des Wölbungsbereichs alle weiteren Bereiche eines aus dem Stand der Technik bekannten (Petaloid-)Bodens, insbesondere der in den Figuren 5-10 beschriebenen und dargestellten Bodenbereiche 2, unverändert.

Zur Konstruktion wird bevorzugt eine Querkontur verwendet, welche hier durch ein gleichschenkliges Dreieck mit Spitze S und den beiden Schenkeln DS gegeben ist (obig als Variante Z beschrieben). Der Öffnungswinkel des Dreiecks an der Spitze S kann zwischen 45° und 179°, bevorzugt zwischen 80° und 150° liegen. In dem gezeigten Beispiel liegt der Öffnungswinkel bei 105°. Die Höhe (der Spitze S über dem Standbereich) ist bevorzugt zwischen 2 und 50 mm.

Weiter bevorzugt wird zur Konstruktion des Abflachungsbereichs eine Führungskontur verwendet. Die Führungskontur verläuft bevorzugt in einer Ebene, in welcher die geometrische Mitte des Standbereichs 24 und/oder des Standfußes 22 verläuft. In Figur 11 verläuft die Führungskontur durch die Spitze des Dreiecks S und verläuft senkrecht zur Figurenebene.

Als Führungskonturen können beispielsweise die obig beschriebenen Varianten A oder B verwendet werden. Die Führungskontur wird bevorzugt auf der Mitte eines Fußes konstruiert, besonders bevorzugt mit Hilfe der Schnittkontur.

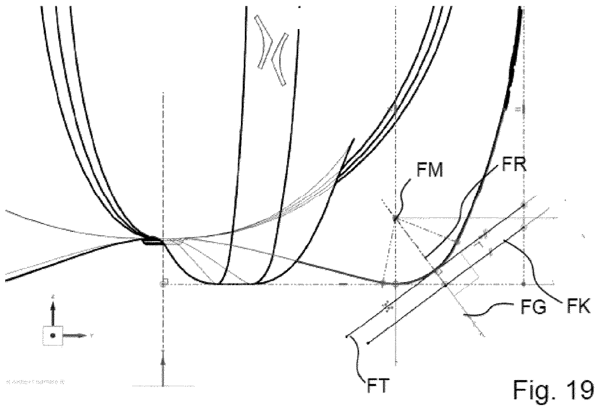

In Figur 19 werden Schritte zur Konstruktion der Führungskontur beispielhaft erläutert.

Beispielsweise wird zur Erzeugung der Führungskontur mit Hilfe einer Geraden eine Senkrechte auf dem Radius FR des (Stand-)Fußes 22 konstruiert. Das Bezugszeichen FM kennzeichnet dabei einen Mittelpunkt des Kreises mit Radius FR, welcher eine Querschnittskontur des Fußes wenigstens abschnittsweise folgt.. Die Gerade wird durch einen Winkel gesteuert. Der Winkel bewegt sich zwischen der Senkrechten durch den Mittelpunkt des Fußradius zu Standfläche und der Geraden. Die Werte sind zwischen - 30° und 80°, bevorzugt zwischen -10° und 65°.

Das Bezugszeichen FG kennzeichnet eine Gerade, welche entlang eines Radius FR verläuft. Die hier gewählte Gerade FG schließt mit der Längsrichtung L einen Winkel von 36,7° ein. Denkbar sind Winkel zwischen 10° und 50°, bevorzugt zwischen 30° und 40°.

Weiter wird eine Tangente FT senkrecht zur Geraden erstellt. Parallel zur Tangenten wird im Abstand (welcher in dem gezeigten Beispiels als 2,5 mm gewählt ist) eine Gerade FK als Führungskontur erstellt. Der Abstand bewegt sich zwischen 0 und 20mm, bevorzugt zwischen 2 und 10mm. Die Länge der Geraden kann festgelegt werden.

In Figur 12 ist die mit dem Bezugszeichen BK gekennzeichnete Kante die Führungskontur. Entlang dieser wird die Querkontur, hier ein gleichschenkliges Dreieck, geführt, so dass sich hier - zu beiden Seiten des Standfußes 22 betrachtet, eine Schnittfläche mit einem Flächenverlauf BF ergibt, welcher den Buchdeckeln eines mit dem Öffnungswinkel des Dreiecks geöffneten Buchdeckeln BF ergibt.

Die Führungskontur, insbesondere ein Abstand der Führungskontur zum Standbereich, und/oder die Querkontur, insbesondere ein Öffnungswinkel der Querkontur wie hier ein Öffnungswinkel des Dreiecks, ist dabei insbesondere so gewählt, dass sich in dem Eckbereich E eines Standfußes eine Schnittkontur LA mit dem Flächenverlauf BF ergibt. Diese Schnittkontur LA bildet bevorzugt eine Abgrenzungslinie des hieraus konstruierten Abflachungsbereich 40. Der Abflachungsbereich 40 kann durch die in der Schnittfläche BF liegenden Innenfläche der Schnittkontur LA gegeben sein.

Je nach gewählter Querkontur und/oder Führungskontur ergibt sich aus einem als Schnittbereich gewählten Abflachungsbereich 40 ein ebener Verlauf des Abflachungsbereich 40 (Dreieck als Querkontur und Gerade als Führungskontur) oder ein gekrümmter Verlauf des Abflachungsbereichs (z.B. durch einen parabelförmigen Verlauf der Querkontur).

Der, hier den Abflachungsbereich 40 vollumfänglich umgebende und/oder angrenzende, Wölbungsbereich 42 ergibt sich aus einer Abrundung des Bodenbereichs an der Übergangskante der Schnittfläche und des umgebenden Bodenbereichs.

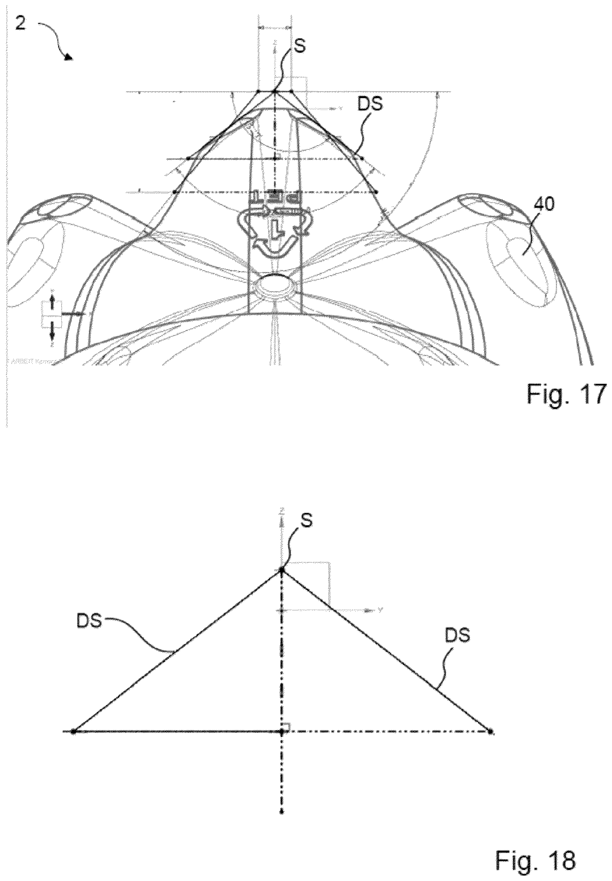

Die Figuren 17 und 18 stellt nochmals die (in den Figuren 11-13) verwendete Querkontur dar (Figur 17 zusammen mit dem hergestellten Bodenbereich mit erfindungsgemäßen Abflachungsbereich 40 gemäß einer Ausführungsform), welche hier beispielsweise eine Dreieckgeometrie aufweist.

Die Höhe des Dreiecks kann beispielsweise für die in dem obig beispielhaft genannten Behältnismaße 10 mm betragen.

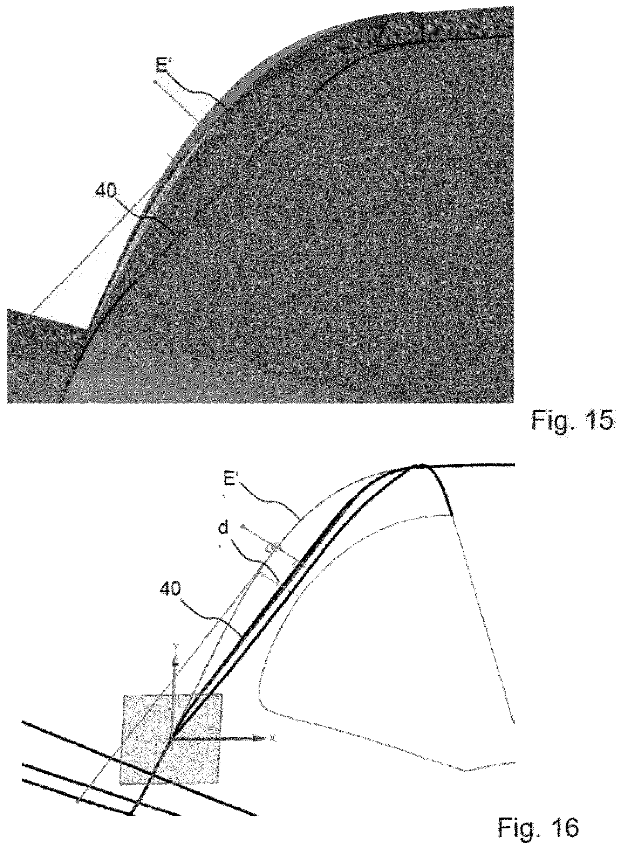

Die Figuren 15 und 16 zeigen jeweils eine Schnittdarstellung durch einen Eckbereich E' eines Standfußes 22 gemäß dem Stand der Technik und gemäß einer erfindungsgemäß vorgeschlagenen Ausführungsform des Standfußes mit Abflachungsbereich 40. Dabei wurde in Figur 15 ein Dreieck als Querkontur und in Figur 16 ein Trapez als Querkontur zur Konstruktion des Abflachungsbereichs 40 verwendet. Das Bezugszeichen d kennzeichnet dabei einen Abstand zwischen dem Eckbereich E' des Standes der Technik und dem Abflachungsbereich 40 der erfindungsgemäßen Ausführungsform.

Die Figuren 14, 20 - 25 zeigen jeweils einen Bodenbereich 2 gemäß einer Ausführungsform der vorliegenden Erfindung zur Darstellung von Krümmungsverläufen. Diese entsprechen dabei den in den Figuren 5 - 10 gezeigten Krümmungsverläufen eines entsprechenden Bodenbereichs gemäß dem Stand der Technik.

Die in den Figuren 14, 20 - 25 weisen dabei einen eben ausgebildeten Abflachungsbereich 40 auf, welcher etwa mit einer Dreieckskontur als Querkontur konstruiert sein kann.

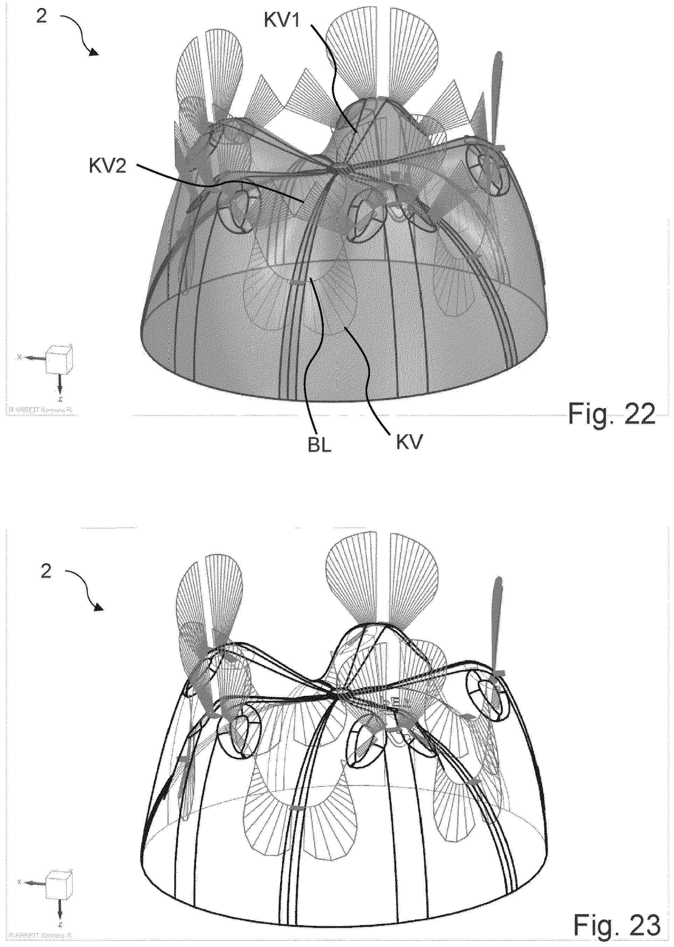

Die Figuren 14, 22 und 23 zeigen dabei leicht verschiedene perspektivische Ansichten (Fig. 14) bzw. eine Darstellung in reinen Strichlinien (Fig. 23) eines Krümmungsverlaufs entlang einer Bodenlinie BL, welche sich durch den Standbereich 24 erstreckt, und zwar durch einen Bereich des Standbereichs 24, welcher in radiale Richtung gesehen weiter außerhalb der Standfläche 23 liegt. Insbesondere verläuft die hier gezeigte Bodenlinie durch den Abflachungsbereich 40 und den daran angrenzenden Wölbungsbereich 42.

Die in dem Beispiel gezeigte Bodenlinie weist für das im Rahmen der Figuren 5-10 beschriebene beispielhafte Behältnis mit dem nun abgeänderten erfindungsgemäßen Bodenbereich bei ihrer Projektion auf eine zur Mittelachse senkrecht verlaufenden Ebene einen Kreisdurchmesser von 77 mm auf.

Der Standbereich und die Nut sowie der Nutgrund sind unverändert zu den in den Figuren 5-10 gezeigten Bodenbereichen 2 ausgestaltet, so dass das Krümmungsverhalten KV der Bodenlinie BL in diesen Bereichen identisch ist.

In dem Eckbereich E dagegen liegt nunmehr ein verändertes Krümmungsverhalten KV der Bodenlinie BL vor. Beim Übergang vom Standbereich 24 zum Wölbungsbereich 42 erfolgt ein sprunghafter Anstieg des Krümmungswerts (und des Krümmungsbetrags) KV, welcher sodann stetig abnimmt, bis der Abflachungsbereich 40 erreicht ist. In diesem liegt keine Krümmung vor, weswegen der Krümmungswert Null ist. Nach dem in dem Abflachungsbereich verlaufenden Abschnitt der Bodenlinie BL durchläuft die Bodenlinie einen weiteren Abschnitt des, hier den Abflachungsberiech 40 vollumfänglich umgebenden, Wölbungsbereichs 42. In diesem ist die Bodenlinie erneut gekrümmt, wobei die Krümmung dieselbe Orientierung aufweist wie in dem Abschnitt des Wölbungsbereichs 42 zwischen dem Abflachungsbereich 40 und dem Standbereich 24.

Insbesondere Fig. 22 zeigt dabei, dass sowohl der Kurvenverlauf KV1 in dem in dem Abschnitt des Wölbungsbereichs 42, welcher (in Umfangsrichtung U) zwischen dem Abflachungsbereich 40 und dem Standbereich 24 angeordnet ist, als auch der Kurvenverlauf KV2, in dem in dem Abschnitt des Wölbungsbereichs 42, welcher (in Umfangsrichtung U) zwischen dem Abflachungsbereich 40 und der benachbarten Nut und/oder Nutgrund angeordnet ist, einen Maximalwert annehmen, welcher größer ist als ein Maximalwert des Krümmungsbetrags bzw. Krümmungswerts innerhalb des Abflachungsbereichs 40.

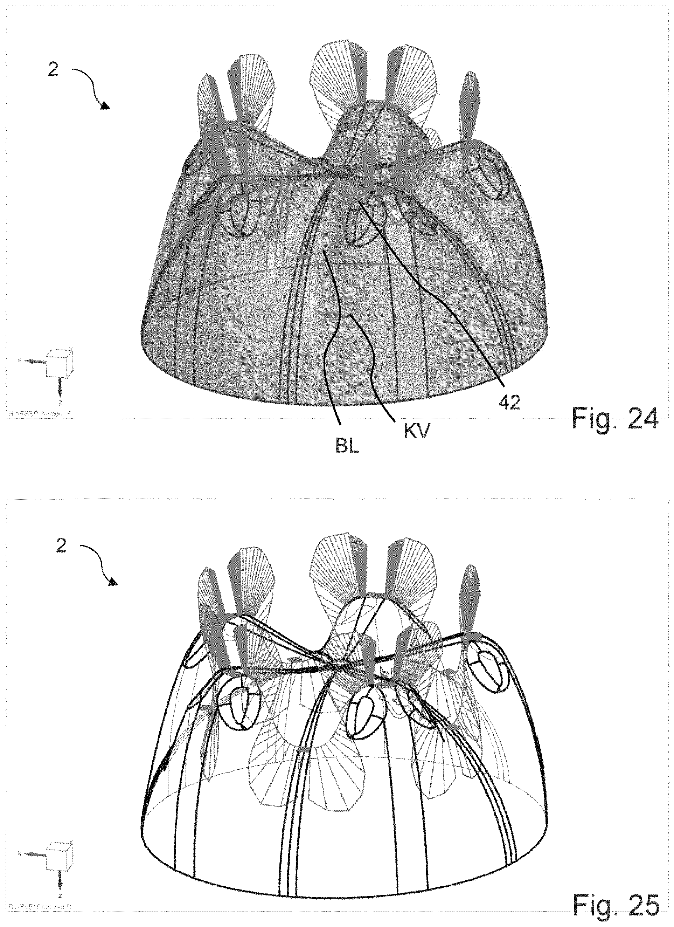

Die beiden Figuren 24 und 25 zeigen einen entsprechenden Kurvenverlauf KV für eine Bodenlinie BL, welche durch die Standfläche 23 und einen äußeren Rand des Wölbungsbereichs 42, nicht aber durch den Abflachungsbereich 40 verläuft.

Die in dem Beispiel gezeigte Bodenlinie weist für das im Rahmen der Figuren 5-10 beschriebene beispielhafte Behältnis mit dem nun abgeänderten erfindungsgemäßen Bodenbereich bei ihrer Projektion auf eine zur Mittelachse senkrecht verlaufenden Ebene einen Kreisdurchmesser von 64,50 mm auf.

In dem äußeren Rand nimmt der Wölbungsverlauf bereits im Wesentlichen wieder den Krümmungsverlauf des Bodenbereichs gemäß dem Stand der Technik an, weswegen der Krümmungsverlauf KV der Bodenlinie BL hier einen, den Figuren 9 und 10 entsprechenden, Krümmungsverlauf (mit zwischen dem Standbereich 24 und dem Wendepunkt WP) lediglich einem auftretenden maximalen Krümmungswerts bzw. Krümmungsbetrags aufweist.

Figur 25 stellt eine Strichliniendarstellung von Fig. 24 dar.

Die Figuren 20 und 21 (Strichliniendarstellung der Figur 20) zeigen einen Krümmungsverlauf KV entlang einer Längsschnittkontur LKA, analog zu den Figuren 5 und 6. Dabei verläuft die Längsschnittkontur LKA durch den Wölbungsbereich 42 und den Abflachungsbereich 40.

Auch hier ist ein deutlich veränderter Krümmungsverlauf im Vergleich zu dem in dem Eckbereich E vorliegender Krümmungsverlauf KV in dem in den Figuren 5 und 6 gezeigten Bodenbereich gemäß dem Stand der Technik ersichtlich. Auch hier nimmt der Krümmungsverlauf innerhalb dem Abflachungsbereich 40 innerhalb des durch den Wölbungsbereich 42 und dem Abflachungsbereich gebildeten Eckbereich E ein (absolutes) Minimum ein. Auch hier ist der Abschnitt der Längsschnittkontur LKA, welcher in dem Abflachungsbereich 40 verläuft, umgeben von einem angrenzenden Abschnitt der Längsschnittkontur LKA (innerhalb des Wölbungsbereichs 42), in welchem diese in derselben Orientierung gekrümmt ist (konvex) und jeweils einen im Vergleich zu den Krümmungswerten innerhalb des Abflachungsbereichs 40 jeweils größeren Krümmungswert und/oder Krümmungsbetrag annimmt.

Die Figuren 26 - 31 zeigen zu den Figuren 20 - 25 analoge Darstellungen von Krümmungsverläufen eines erfindungsgemäßen Bodenbereichs 2 gemäß einer zweiten Ausführungsform, in welcher ein Trapez (im Unterschied zu einem Dreieck im Falle der Figuren 20 - 25) als Querkontur zur Konstruktion verwendet wurde.

Dabei zeigen die Figuren 26 und 27 (Fig. 27 ist eine Strichliniendarstellung der Fig. 26) den Krümmungsverlauf entlang einer Bodenlinie BL, welche durch die Standfläche 23, nicht aber durch den Abflachungsbereich 40 (und am Rande des Wölbungsverlaufs 42) verläuft.

Die in dem Beispiel gezeigte Bodenlinie weist für das im Rahmen der Figuren 5-10 beschriebene beispielhafte Behältnis mit dem nun abgeänderten erfindungsgemäßen Bodenbereich bei ihrer Projektion auf eine zur Mittelachse senkrecht verlaufenden Ebene einen Kreisdurchmesser von 66 mm auf.

Hier ähnelt der Krümmungsverlauf wieder demjenigen aus dem Stand der Technik.

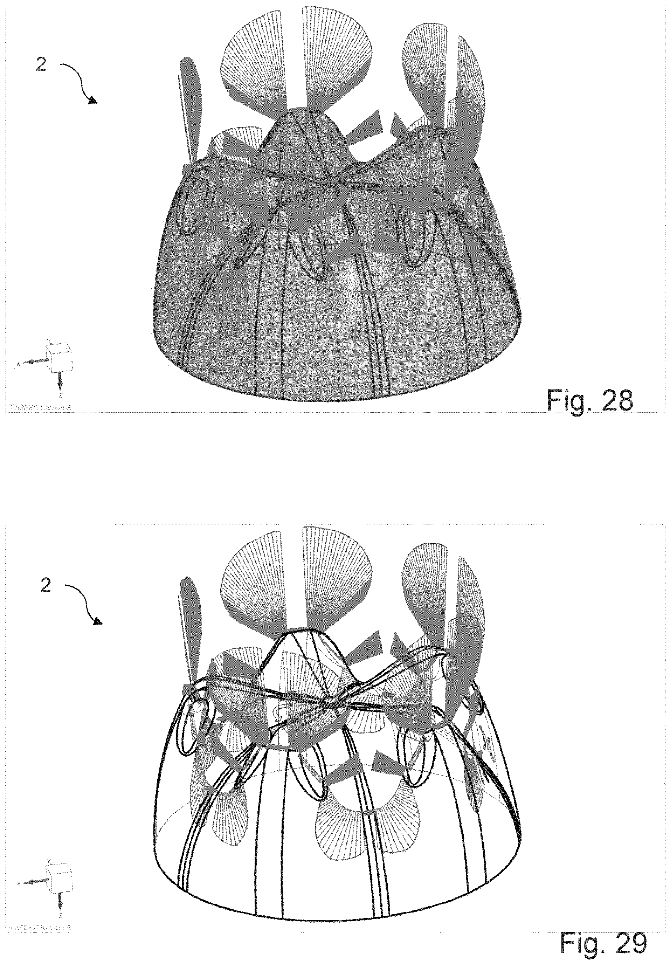

Dabei zeigen die Figuren 28 und 29 (Fig. 29 ist eine Strichliniendarstellung der Fig. 28) den Krümmungsverlauf entlang einer Bodenlinie BL, welche durch den Standbereich 24, nicht durch die Standfläche 23 verläuft. Weiterhin verläuft die Bodenlinie BL durch den Abflachungsbereich 40 und durch den Wölbungsverlauf 42.

Die in dem Beispiel gezeigte Bodenlinie weist für das im Rahmen der Figuren 5-10 beschriebene beispielhafte Behältnis mit dem nun abgeänderten erfindungsgemäßen Bodenbereich bei ihrer Projektion auf eine zur Mittelachse senkrecht verlaufenden Ebene einen Kreisdurchmesser von 77 mm auf.

In dem Eckbereich E dagegen liegt hier wiederum ein gegenüber dem Stand der Technik verändertes Krümmungsverhalten KV der Bodenlinie BL vor. Beim Übergang vom Standbereich 24 zum Wölbungsbereich 42 erfolgt ein sprunghafter Anstieg des Krümmungswerts (und des Krümmungsbetrags) KV, welcher sodann stetig abnimmt, bis der Abflachungsbereich 40 erreicht ist. In diesem liegt keine Krümmung vor, weswegen der Krümmungswert Null ist. Nach dem in dem Abflachungsbereich verlaufenden Abschnitt der Bodenlinie BL durchläuft die Bodenlinie einen weiteren Abschnitt des, hier den Abflachungsberiech 40 vollumfänglich umgebenden, Wölbungsbereichs 42. In diesem ist die Bodenlinie erneut gekrümmt, wobei die Krümmung dieselbe Orientierung aufweist wie in dem Abschnitt des Wölbungsbereichs 42 zwischen dem Abflachungsbereich 40 und dem Standbereich 24.

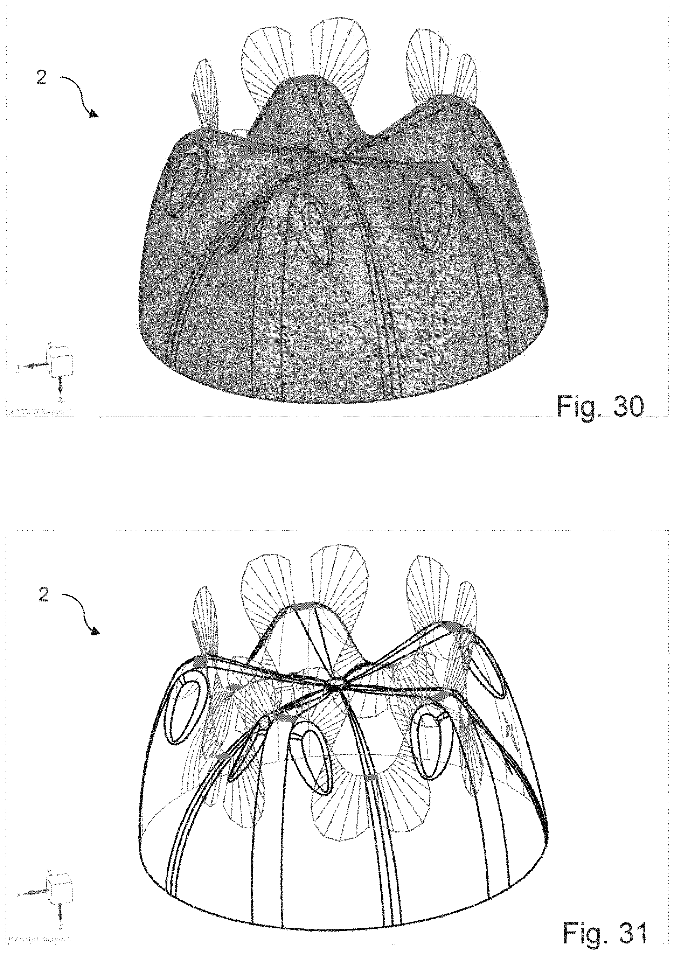

Die in den Figuren 30 und 31 (Figur 31 stellt die Strichliniendarstellung von Figur 30 dar) gezeigte Bodenlinie BL verläuft außerhalb des Wölbungsbereichs und außerhalb des Abflachungsverlaufs und weist daher einen, dem Stand der Technik vergleichbaren Krümmungsverlauf auf.

Die in dem Beispiel gezeigte Bodenlinie weist für das im Rahmen der Figuren 5-10 beschriebene beispielhafte Behältnis mit dem nun abgeänderten erfindungsgemäßen Bodenbereich bei ihrer Projektion auf eine zur Mittelachse senkrecht verlaufenden Ebene einen Kreisdurchmesser von 64,50 mm auf.

Figur 32 zeigt dabei eine zur Verwendung eines Dreiecks als Querkontur alternative Verwendung eines Trapezes mit Schenkeln TS als Querkontur, welche bei der Konstruktion der Bodenbereiche gemäß der Figuren 26 - 31 verwendet wurde.

Fig. 33 zeigt dabei das verwendete Trapez, welches hier einen Öffnungswinkel von 130°, eine bevorzugte Höhe von 15 mm, eine bevorzugte kleine Seitenlänge von 5, 0 mm aufweist.

Begrenzung in radialer und Umfangsrichtung:
Die Abflachungen sind am Fuß symmetrisch, radial bewegen sie sich zwischen Durchmesser des Bodens * 60% (D*60%) und Durchmesser des Bodens * 90% (D*90%). Und von Mitte des Fußes gemessen von 2,5° bis 22° nach rechts und nach links.

Die Fig. 34 - 36 veranschaulichen eine bevorzugte relative geometrische Lage bezogen auf die Umfangsrichtung U der Abflachungsbereiche 40 in Bezug auf den Standbereich 24, den Nutgrund 32 und den Wendepunktbereich W zusammen mit den jeweiligen Winkelabmessungen einer bevorzugten Ausführungsform.

Figur 34 zeigt dabei, dass der (bevorzugt gesamte) Abflachungsbereich 40 zwischen 5° und 22°, (in Umfangsrichtung U) gemessen ab der geometrischen Mitte der Standfläche 24 angeordnet ist.

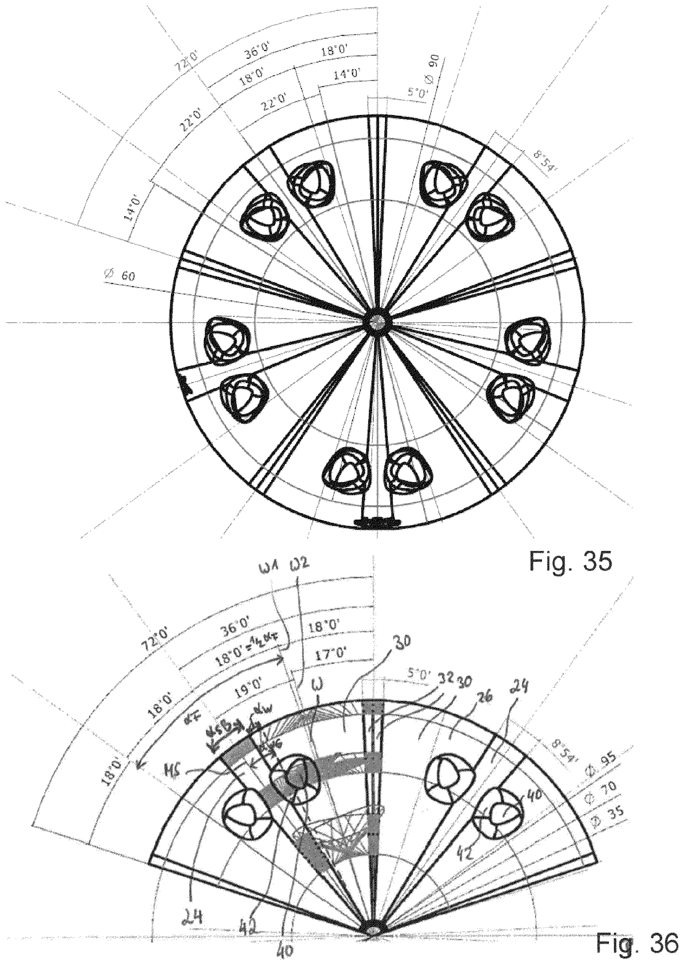

Figur 35 zeigt eine radiale Lage des Abflachungsbereichs 40. Dabei liegt bevorzugt der Abflachungsbereich in radiale Richtung gesehen in einem Bereich zwischen 60% und 90% des Radius des Behältnisses und/oder des Bodenbereichs (halber Bodendurchmesser)

Figur 36 illustriert, dass die Wendepunkte W der Krümmung (insbesondere der Bodenlinien BL) nicht auf 18° liegen, sondern auf 19° von links vom Fuß (geometrische Mitte des Standbereichs) kommenden betrachtet und 17° vom Zugband (insbesondere von der geometrischen Mitte des Nutgrunds 32 der Nut 30, kommenden betrachtet.

Die Fläche zwischen den Zugband 5° und dem Fußwinkel 8,54° wird bevorzugt über die Hilfsgeometrie von Durchmesser*35%, Durchmesser*70% und Durchmesser*95% aufgebaut. Im Beispiel ist der Durchmesser 100mm.

Figur 36 veranschaulicht weiterhin den mit α_{SB} gekennzeichneten Standbereich-Umfangswinkel, über welchen sich der Standbereich 24 erstreckt und welcher die Ausdehnung des Standbereichs 24 kennzeichnet bzw. definiert, den mit α_{F} gekennzeichneten Standfuß-Umfangswinkel, über welchen sich ein einzelner Standfuß 22 in Umfangsrichtung gesehen ausdehnt und den mit α_{W} gekennzeichneten Wölbungsbereich-Umfangswinkel, über welchen sich der (in Umfangsrichtung betrachtet) zwischen dem Abflachungsbereich 40 und dem Standbereich 24 angeordnete Bereich des Wölbungsbereichs 42 ausdehnt.

W1 und W2 kennzeichnen Linien, welches ein Winkelsegment definieren, in welchem die jeweiligen Wendepunkte WP (eines Krümmungsverlaufs entlang einer Bodenlinie) zwischen dem Standfuß 22 und der Nut 30 bzw. Nutgrund 32 angeordnet sind. Wie ersichtlich, ist dieses sehr schmal, bzw. hat lediglich eine Ausdehnung von 1° (in Umfangsrichtung).

Fig. 37 - 39 zeigen weitere dreidimensionale Darstellungen von Bodenbereichen gemäß bevorzugter Ausführungsformen. Dargestellt sind verschiedene Bodenlinien und deren Krümmungsverläufe.

Fig. 40 illustriert eine, den Figuren 34 - 36 entsprechende Abbildung für einen Bodenbereich aus dem Stand der Technik, wie durch Figuren 5 - 10 dargestellt. Auch hier beträgt die Winkelausdehnung eines Standfußes 19°, im Falle von 5 Standfüßen.

Die Figuren 41 - 48 zeigen jeweils zwei Bodenlinien eines Bodenbereichs gemäß der vorliegenden Erfindung in einer bevorzugten Ausführungsform im Vergleich zu einer Bodenlinie eines entsprechenden Bodenbereichs aus dem Stand der Technik. Die Bodenlinien sind in Fig. 41 entlang des Bodenbereichs und ebenfalls in (entlang der Zylindermantelfläche) abgewickeltem Zustand dargestellt.

Die Bodenlinie BLS aus dem Stand der Technik ist punktiert dargestellt.

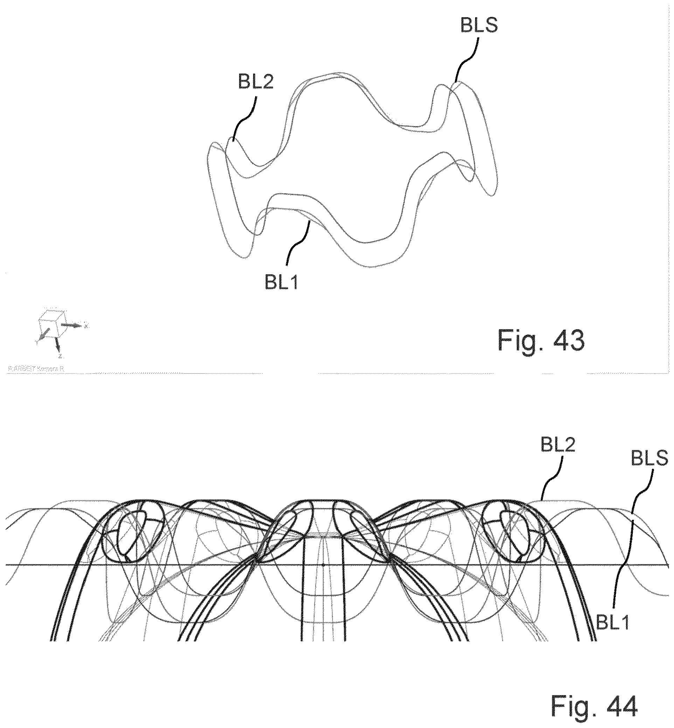

Fig. 43 illustriert die Bodenlinien aus Fig. 41 ohne Darstellung des Bodenbereichs. Deutlich erkennbar ist die Abflachung der Bodenline BL1 im Vergleich zur entsprechenden Bodenlinie BLS aus dem Stand der Technik im Eckbereich der Standfüße.

BLS kennzeichnet hier eine Bodenlinie mit demselben Durchmesser wie der Standkreisdurchmesser (hier ist der Standkreisdurchmesser 64,5mm).

BLS kennzeichnet den Standardboden gemäß dem Stand der Technik ohne Abflachung bei 75mm (Kreisdurchmesser der Bodenlinie in ihrer Projektion auf eine senkrecht zur Mittelachse verlaufenden Ebene).

BL1 kennzeichnet eine Bodenlinie eines Boden mit Abflachung bei 75mm (Kreisdurchmesser der Bodenlinie in ihrer Projektion auf eine senkrecht zur Mittelachse verlaufenden Ebene).

Fig. 44 veranschaulicht die Abwicklung der Bodenlinien BL1, BL2, BLS aus Fig. 41.

Fig. 45, 49 und 50 veranschaulichen durch die Darstellung von Schnittkurven durch den Bodenbereich und den Bodenlinien, dass ein Punkt der Bodenlinie des Bodens aus dem Stand der Technik um 1,4 mm (abgewickelt) weiter von der geometrischen Mitte des Standfußes und/oder Standbereichs entfernt ist als ein in der Mitte des Abflachungsbereichs gelegener Punkt der Bodenlinie, wobei der Bodenbereich um die beiden Punkte dieselbe Tangente aufweist.

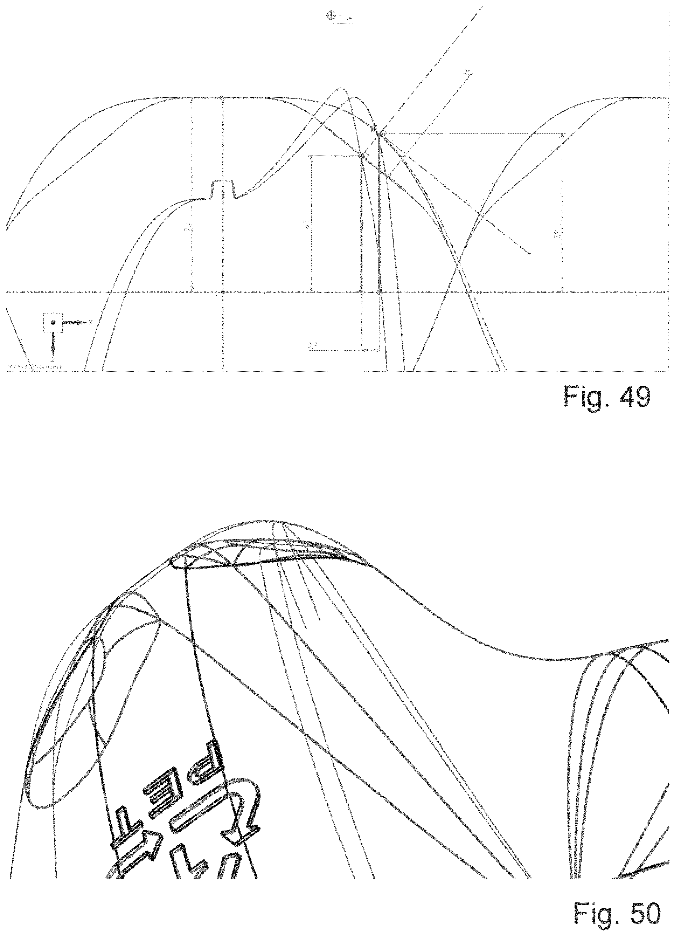

Figur 50 zeigt dabei radiale Schnitte um den Winkel zu bestimmen.

Fig. 45 veranschaulicht, dass in dem hier gezeigten bevorzugten Beispiel des vorher beschriebenen Behältnisses die Höhe des Wendepunktes 9,6mm ist.

Weiterhin ist der Abstand vom Originalboden zu Boden mit Abflachung 1,4mm auf dem Durchmesser abgewickelt bei 75mm.

Der horizontale Abstand des Originalbodens zu Boden mit Abflachung ist 0,9mm, was ca. 1,2° entspricht.

Der vertikale Abstand der Abflachung zur Höhenlinie des Wendepunkts ist 6,7mm, und damit ein Verhältnis von ca. 6,7/9,6 = 0,69791666, 69,79%.

Der vertikale Abstand der Originalboden BLS zur Höhenlinie des Wendepunkts ist 7,9mm, ist ca. 7,9/9,6=0,8229, 82,29%.

Wie obig beschrieben, ist für dieses Beispiel eines Behältnisses mit einem Bodenberich- und/oder Behältnis-Durchmesser 100mm, mit Standkreisdurchmesser 64,5mm, die Bodenfreiheit 5,507mm. Die Bodenfreiheit wird dabei gemessen von der Aufstandsfläche zum Anspritzpunkt.

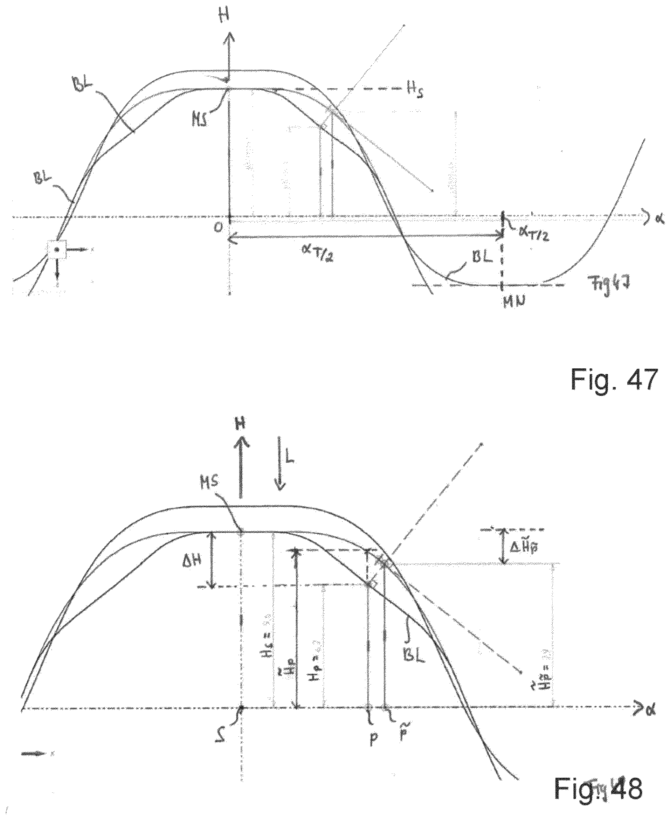

Fig. 46 - 48 veranschaulichen den Verlauf der Höhenwerte der verschiedenen Bodenlinien BL1, BL2 und BLS aus den vorherigen Figuren. Die Höhenwerte sind dabei in der in der Figurenebene nach oben gerichteten Achse H (siehe auch Fig. 48) aufgetragen. A bezeichnet einen maximalen Unterschied der Höhenwerte der Bodenlinie in dem Bereich des Standbereichs und der Bodenlinie in dem Bereich der Nutgrund (maximale Amplitude). Die Höhenachse H ist dabei bevorzugt entgegen der Längsrichtung L gerichtet, verläuft aber parallel zu ihr.

Die Höhenwerte können beispielsweise jeweils als Abstand eines Punkts der Bodenlinie zu einer senkrecht auf die Mittelachse stehenden Ebene, welche beispielsweise durch den Grenzbereich zwischen dem Bodenbereich und dem Grundkörper des Behältnisses verläuft und/oder welche parallel zu einer Standebene, auf welchem das Behältnis aufrecht steht, ist, gemessen werden.

P kennzeichnet dabei einen Punkt auf der Bodenlinie in einem Abschnitt innerhalb des Abflachungsbereichs 40. Punkt *P̃* bezeichnet den entsprechenden Punkt auf der Bodenlinie BLS des Bodens aus dem Stand der Technik, welcher dieselbe Tangente wie Punkt P in der Bodenlinie PL1 aufweist.

Die Figuren 47 und 48 illustrieren dabei die durch die Abflachung bewirkte, starke Verringerung des Höhenwerts H einer durch den Abflachungsbereich 40 laufenden Bodenlinie im Vergleich zu einer Bodenlinie aus dem Stand der Technik mit gleichem Durchmesser bzw. gleichem Abstand zur Mittelachse.

Die in der Figurenebene nach oben gerichtete Achse ist dabei die Höhenachse H, auf welcher die Höhenwerte der Bodnlinien aufgetragen sind. Als Referenz dient dabei der jeweilige Wendepunkt der Bodenlinie, d.h. hier werden die Höhenwerte als Abstand zu einer Ebene (senkrecht zur Mittelachse verlaufend) gemessen, welche durch den Wendepunkt der jeweiligen Bodenlinie zwischen dem Standfuß und der benachbarten Nut verläuft.

Die in der Figurenebene nach rechts gerichtete Achse stellt einen Verlauf des Umfangswinkels α, gemessen ab der geometrischen Mitte des Standbereichs. Die gezeigten Kurven entsprechen den in Fig. 46 gezeigten abgewickelten Bodenlinien. Das Bezugszeichen MS kennzeichnet die geometrische Mitte des Standbereichs. Das Bezugszeichen Hs kennzeichnet den Höhenwert der geometrischen Mitte des Standbereichs MS.

α_{T/2} kennzeichnet den Winkel zwischen der geometrischen Mitte des Standbereichs und der geometrischen Mitte der benachbarten Nut und/oder des benachbarten Nutgrunds MN.

ΔH bezeichnet den Höhenunterschied des Höhenwerts des Punkts P und MS.

Die Figuren 46 - 48 stellen dabei keine schematischen Abbildungen sondern maßstabsgetreue Abbildungen dar.

Die Figuren 51 und 52 zeigen dabei eine Heatmap-Darstellung einer Flächenkrümmung des Standfußes im Bereich zwischen dem Standbereich und dem Beginn des Nutgrunds (maßstabsgetreue Abbildung) für einen Bodenbereich gemäß dem Stand der Technik (Fig. 51), wie beispielsweise in den Fig. 5-10 beschreiben und veranschaulicht, und für einen erfindungsgemäßen Bodenbereich 2 gemäß der in den Fig. 20 - 25 gezeigten Ausführungsform.

Deutlich ersichtlich ist, dass der in Fig. 52 gezeigte Boden mit Abflachungsbereich 40 im Bereich des Abflachungsbereichs 40 eine minimale Flächenkrümmung (in dem gesamten Bereich des Abflachungsbereichs 40) aufweist (hier ist die Flächekrümmung jeweils Null). Weiter ersichtlich ist, dass dieser Bereich von einem Bereich mit (zumindest) lokal maximalen Krümmungswertbeträgen bzw. Krümmungswerten (vollumfänglich) umgeben ist. Dieser Bereich stellt den Wölbungsbereich 42 dar.

Im Gegensatz hierzu werden in dem Standfuß maximale Krümmungswerte nicht in einem (kreis-)ringartigen Bereich sondern in einem, insbesondere kreisförmigen oder kreisartigen, Bereich maximaler Flächenkrümmungswerte, in welchem jede entlang des Bodenbereichs verlaufende, kürzeste Verbindungslinie zwischen zwei Punkten des Bereichs ebenfalls innerhalb des Bereichs maximaler Flächenkrümmungswerte verläuft.

Die Figuren 53 - Fig. 60 zeigen verschiedene bevorzugte Ausführungsformen einer erfindungsgemäßen Blasformeinrichtung 100, welche hier zur Ausbildung eines Bodenbereichs 2 eines Kunststoffbehältnisses 1 ausgebildet sind. Bei der in den Figuren 53 - Fig. 60 gezeigten Blasformeinrichtung handelt es sich um ein Bodenteil, welches nur zur Herstellung eines Bodenbereichs geeignet und bestimmt ist und welche nur eine zur Außenfläche eines Bodenbereichs eines herzustellenden Kunststoffbehältnisses korrespondierende Innenkontur bzw. Innenoberfläche aufweist. Die Blasformeinrichtung 100 kann (jeweils) zusätzlich zwei Seitenteile zur Herstellung des Grundkörpers bzw. der Seitenwandung des Kunststoffbehältnisses 1 aufweisen. Bevorzugt sind das Bodenteil und das wenigstens eine Seitenteil bzw. die beiden Seitenteile lösbar miteinander (bevorzugt paarweise) verbindbar.

Jede der hier in den Figuren 53 - 60 dargestellten Blasformeinrichtungen 100 weist, hier fünf, Standfußausbildungsbereiche 122 zur jeweiligen Ausbildung bzw. Herstellung eines Standfußes 22 eines herzustellenden Kunststoffbehältnisses 1 auf.

Jeder Standfußausbildungsbereich weist dabei einen Standbereich 124 zur Ausbildung eines (obig erläuterten) Standbereichs eines Standfußes 22 eines herzustellenden Kunststoffbehältnisses 1 auf.

In und entgegen der Umfangsrichtung (bezogen auf die Mittelachse des herzustellenden Kunststoffbehältnisses 1) neben dem Standbereich ist jeweils ein Abflachungsbereich 140 angeordnet, welcher korrespondierend zu dem obig beschriebenen Abflachungsbereich 40 (insbesondere gemäß einer bevorzugten Ausführungsform) ausgestaltet ist.

Die Figuren 53 - 60 zeigen, dass in dem Abflachungsbereich bevorzugt (genau eine) eine Öffnung zur Entlüftung der Blasformeinrichtung angeordnet ist. Bevorzugt weist die in dem Abflachungsbereich 140 angeordnete Öffnung 130 einen größeren Entlüftungs- und/oder Strömungsquerschnitt auf, als die weiteren Öffnungen. Hierdurch wird vorteilhaft dem Rechnung getragen, dass dieser Bereich des Standfußes beim Blasformprozess des Behältnisses nicht so schnell ausgeformt wird wie die übrigen Bereiche des Standfußes. Hierdurch kann eine besonders hohe Güte der Ausformung des Standfußbereichs erreicht werden.

Die Öffnungen 130 weisen bevorzugt einen Durchmesser zwischen 0,8 mm und 5 mm auf.

Die Figuren 53 - 60 zeigen weiterhin, dass wenigstens teil-umfänglich um den Abflachungsbereich 140 ein Wölbungsbereich 142 vorgesehen ist (welcher stärker gekrümmt ist als der Abflachungsbereich), welcher bevorzugt korrespondierend zu dem obig beschriebenen Wölbungsbereich 42 (insbesondere gemäß einer bevorzugten Ausführungsform) ausgestaltet ist. In den gezeigten Darstellungen umgibt der Wölbungsbereich jeweils vollumfänglich den jeweiligen Abflachungsbereich 140 und grenzt besonders bevorzugt an diesen vollumfänglich an.

Die Figuren 53 und 54 zeigen zwei verschiedene perspektivische Ansichten einer Blasformeinrichtung 100, in welcher eine Öffnung 132 als gekrümmter Schlitz ausgestaltet ist. Dieser mündet bevorzugt in die in dem Abflachungsbereich 140 angeordnete Öffnung. Eine weitere Öffnung ist in dem, im Vergleich zum Abflachungsbereich näher an dem Bodenzentrum angeordneten Abschnitt des Wölbungsbereichs 142 angeordnet.

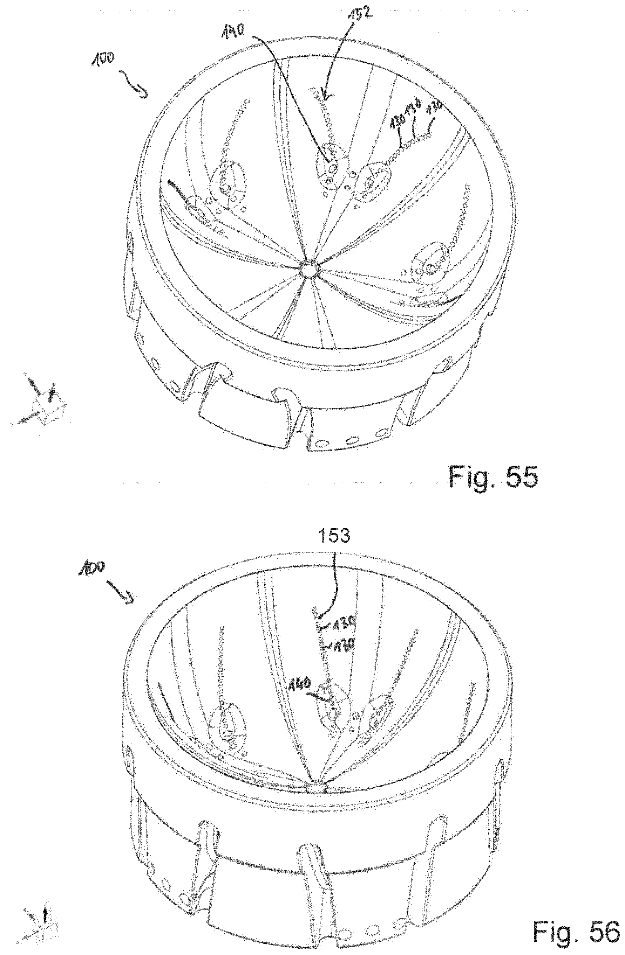

Figur 55 zeigt eine Blasformeinrichtung 100 mit einer Vielzahl im Querschnitt wesentlich kreisrund ausgestalteter Öffnungen 130 (zur Entlüftung der Blasformeinrichtung), bei welchen es sich bevorzugt um Bohrungen handelt. Die Öffnungen 100 sind dabei entlang einer (einzigen) gekrümmten (insbesondere sich in Umfangsrichtung in Bezug auf die Mittelachse des herzustellenden Kunststoffbehältnisses erstreckenden) Linie 152 angeordnet. Bevorzugt nimmt die Krümmung der Linie mit dem radialen Abstand zur Mittelachse zu.

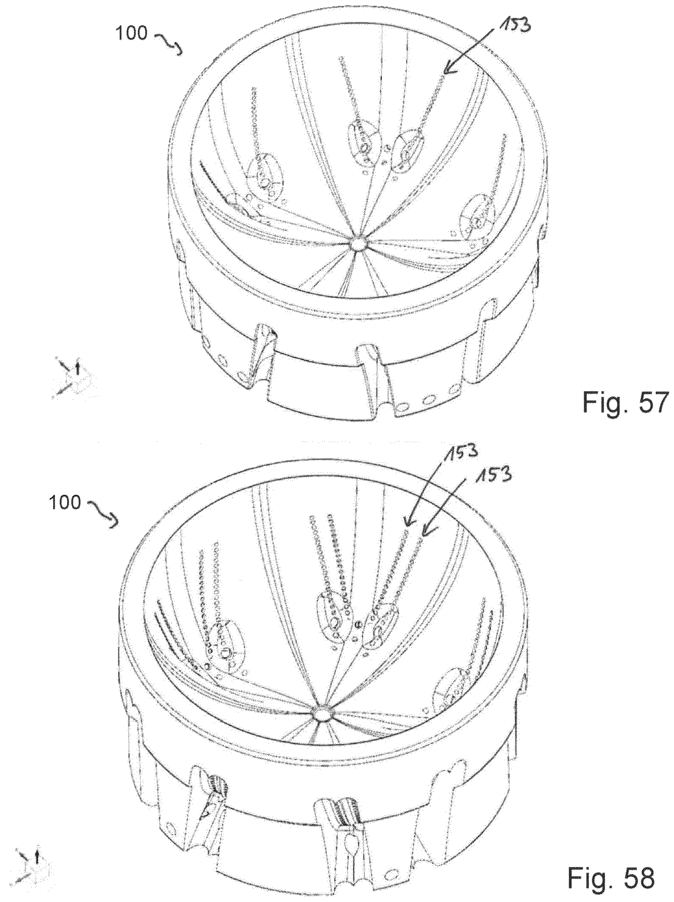

Die Figuren 56 und 57 zeigen zwei verschiedene perspektivische Ansichten einer Blasformeinrichtung 100 mit einer Vielzahl im Querschnitt wesentlich kreisrund ausgestalteter Öffnungen 130 (zur Entlüftung der Blasformeinrichtung), bei welchen es sich bevorzugt um Bohrungen handelt. Die Öffnungen 100 sind dabei entlang einer (einzigen) im Wesentlichen innerhalb einer Ebene verlaufenden und/oder geradlinig verlaufenden Linie 153 angeordnet. Bevorzugt ist die Ebene bzw. der geradlinige Verlauf schräg gegenüber der Mittelachse angeordnet, wobei bevorzugt die Ebene bzw. der geradlinige Verlauf der Linie entlang der Umfangsrichtung erstreckt. Bevorzugt sind die Vielzahl an Öffnungen 130 einreihig angeordnet.

Figur 58 zeigt eine Blasformeinrichtung 100 mit einer Vielzahl im Querschnitt wesentlich kreisrund ausgestalteter Öffnungen 130 (zur Entlüftung der Blasformeinrichtung), bei welchen es sich bevorzugt um Bohrungen handelt. Die Öffnungen 100 sind dabei zweireihig entlang jeweils einer im Wesentlichen innerhalb einer Ebene verlaufenden und/oder geradlinig verlaufenden Linie 153 angeordnet. Bevorzugt ist die jeweilige Ebene bzw. der jeweilige geradlinige Verlauf schräg gegenüber der Mittelachse angeordnet, wobei bevorzugt die Ebene bzw. der geradlinige Verlauf der Linie entlang der Umfangsrichtung erstreckt. Bevorzugt sind die beiden Reihen im Wesentlichen nebeneinander und/oder im Wesentlichen parallel zueinander angeordnet.

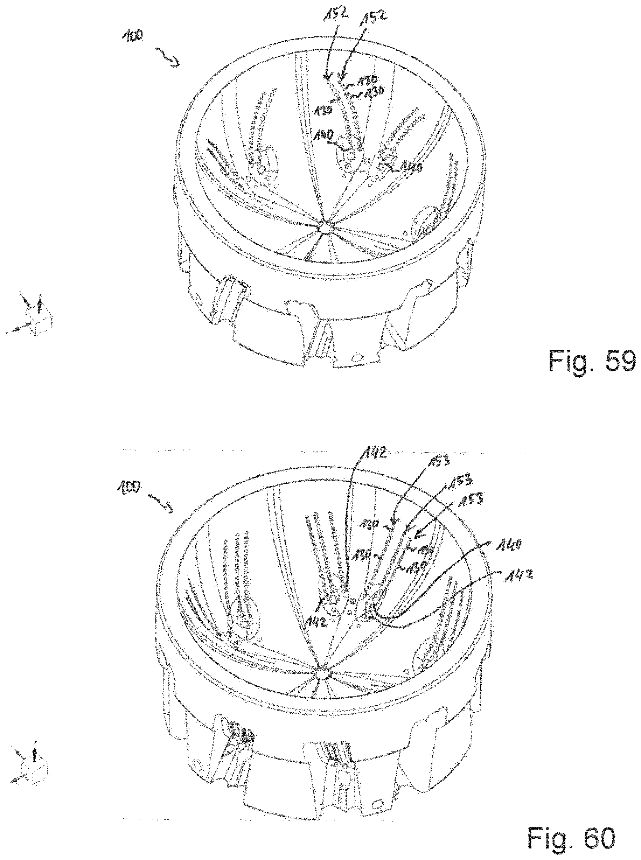

Figur 59 zeigt eine Blasformeinrichtung 100 mit einer Vielzahl im Querschnitt wesentlich kreisrund ausgestalteten Öffnungen 130 (zur Entlüftung der Blasformeinrichtung), bei welchen es sich bevorzugt um Bohrungen handelt. Die Öffnungen 100 sind dabei zweireihig entlang jeweils einer gekrümmten (insbesondere sich in Umfangsrichtung in Bezug auf die Mittelachse des herzustellenden Kunststoffbehältnisses erstreckenden) Linie 152 angeordnet. Bevorzugt nimmt die Krümmung der jeweiligen Linie mit dem radialen Abstand zur Mittelachse zu. Bevorzugt sind die beiden Reihen im Wesentlichen nebeneinander und/oder im Wesentlichen parallel zueinander angeordnet.

Figur 60 zeigt eine Blasformeinrichtung 100 mit einer Vielzahl im Querschnitt wesentlich kreisrund ausgestalteter Öffnungen 130 (zur Entlüftung der Blasformeinrichtung), bei welchen es sich bevorzugt um Bohrungen handelt. Die Öffnungen 100 sind dabei dreireihig entlang jeweils einer im Wesentlichen innerhalb einer Ebene verlaufenden und/oder geradlinig verlaufenden Linie 153 angeordnet. Bevorzugt ist die jeweilige Ebene bzw. der jeweilige geradlinige Verlauf schräg gegenüber der Mittelachse angeordnet, wobei bevorzugt die Ebene bzw. der geradlinige Verlauf der Linie entlang der Umfangsrichtung erstreckt. Bevorzugt sind die drei Reihen im Wesentlichen nebeneinander und/oder im Wesentlichen parallel zueinander angeordnet.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Kunststoffbehältnis
- 2: Bodenbereich
- 4: Grundkörper
- 6: Mündungsbereich
- 8: Behältnismündung
- 18: Anspritzpunkt, Bodenzentrum
- 19: geometrische Mitte der Bodenwandung, Bodenzentrum
- 22: Standfuß
- 23: Standfläche
- 24: Standbereich
- 26: Fußseitenbereich
- 27: Fußuntenbereich
- 28: Fußaußenbereich
- 30: Nut
- 32: Nutgrund
- 40: Abflachungsbereich
- 42: Wölbungsbereich
- 100: Blasformeinrichtung
- 122: Standfußausbildungsbereich
- 124: Standbereich
- 130: Öffnung
- 132: Schlitzförmige Öffnung
- 140: Abflachungsbereich
- 142: Wölbungsbereich
- 152: gekrümmter Verlauf
- 132: geradliniger, schräger Verlauf
- A: maximaler Höhenunterschied der Bodenlinie
- BK: Kante
- BF: "Buchfläche"
- E: Eckbereich
- L: Längsrichtung
- LK: Längsschnittkontur
- LA: Abgrenzungslinie Abflachungsbereich
- LKA: Längsschnittkontur durch Abflachungsbereich
- M: Mittelachse
- MS: geometrische Mitte Standbereich
- K: Kreis
- KV: Krümmungsverlauf
- DS: Schenkel
- W: Wendepunktbereich
- α_{SB}: Standbereich-Umfangswinkel
- α_{F}: Standfuß-Umfangswinkel
- α_{W}: Wölbungsbereich-Umfangswinkel
- α_{T/2}: Wölbungsbereich-Umfangswinkel

## Patentansprüche

1. Kunststoffbehältnis (1), insbesondere für Getränke, mit einem Bodenbereich (2), einem sich in Längsrichtung (L) des Kunststoffbehältnisses (1) an diesen Bodenbereich (2) anschließenden Grundkörper (50) und einem sich in der Längsrichtung (L) an diesen Grundkörper (50) zumindest mittelbar anschließenden Mündungsbereich (6) mit einer Behältnismündung (8), wobei der Bodenbereich (2) wenigstens drei Standfüße (22) aufweist, wobei jeder dieser Standfüße (22) wenigstens einen sich in Umfangsrichtung (U) in Bezug auf die Längsrichtung (L) über einen Standbereich-Umfangswinkel (α_{SB}) erstreckenden Standbereich (24) mit jeweils wenigstens einer, insbesondere im Wesentlichen ebenen, Standfläche (23) zum aufrechten Stehen des Kunststoffbehältnisses (1) aufweist, wobei zwischen zwei, insbesondere benachbarten, dieser Standfüße (22) wenigstens eine Nut (30) mit einem als Zugband wirkenden Nutgrund (32) angeordnet ist, welcher sich in radialer Richtung (R) des Kunststoffbehältnisses (1) nach außen verbreitert, wobei die wenigstens drei Standfüße in Umfangsrichtung (U) von jeweils wenigstens einem Fußseitenbereich (26) und in eine radiale Richtung (R) nach außen hin von einem Fußaußenbereich (28) begrenzt sind, **dadurch gekennzeichnet, dass**
die wenigstens drei Standfüße in einem Eckbereich (E) der Standfüße, in welchem der Standbereich (24), der Fußseitenbereich (26) und der Fußaußenbereich (28) aufeinandertreffen, wenigstens einen Abflachungsbereich (40) aufweist, welcher eine Abflachung des jeweiligen Standfußes (22) in dem Eckbereich (E) bewirkt.

2. Kunststoffbehältnis (1), insbesondere für Getränke, mit einem Bodenbereich (2), einem sich in Längsrichtung (L) des Kunststoffbehältnisses (1) an diesen Bodenbereich (2) anschließenden Grundkörper (50) und einem sich in der Längsrichtung (L) an diesen Grundkörper (50) zumindest mittelbar anschließenden Mündungsbereich (6) mit einer Behältnismündung (8), wobei der Bodenbereich (2) wenigstens drei Standfüße (22) aufweist, welche sich jeweils in Umfangsrichtung (U) in Bezug auf eine sich entlang der Längsrichtung (L) erstreckenden Mittelachse (M) des Bodenbereichs (2) gesehen über einen Standfuß-Umfangswinkel (α_{F}) erstrecken, wobei jeder dieser Standfüße (22) wenigstens einen sich in Umfangsrichtung (U) über einen Standbereich-Umfangswinkel (α_{SB}) erstreckenden Standbereich (24) mit jeweils wenigstens einer, insbesondere im Wesentlichen ebenen, Standfläche (23) zum aufrechten Stehen des Kunststoffbehältnisses (1) aufweist, wobei zwischen zwei insbesondere benachbarten dieser Standfüße (22) wenigstens eine Nut (30) mit einem als Zugband wirkenden Nutgrund (32) angeordnet ist, welcher sich in radialer Richtung (R) nach außen verbreitert,
**dadurch gekennzeichnet, dass**
jeder der wenigstens drei Standfüße wenigstens einen wenigstens teilweise zwischen dem Standbereich (24) und der benachbarten Nut angeordneten Abflachungsbereich (40) und wenigstens einen zwischen dem Abflachungsbereich (40) und dem Standbereich (24) angeordneten Wölbungsbereich (42) aufweist, wobei der Abflachungsbereich (40) im Vergleich zu dem Wölbungsbereich (42) in Bezug auf ein Krümmungsverhalten abgeflacht ist, wobei sich der Wölbungsbereich in Umfangsrichtung (U) gesehen höchstens über den halben Standbereich-Umfangswinkel (α_{SB}) und/oder höchstens über ein Zehntel des Standfuß-Umfangswinkels (α_{F}) hinweg erstreckt.

3. Kunststoffbehältnis (1), insbesondere für Getränke, mit einem Bodenbereich (2), einem sich in Längsrichtung (L) des Kunststoffbehältnisses (1) an diesen Bodenbereich (2) anschließenden Grundkörper (50) und einem sich in der Längsrichtung (L) an diesen Grundkörper (50) zumindest mittelbar anschließenden Mündungsbereich (6) mit einer Behältnismündung (8), wobei der Bodenbereich (2) wenigstens drei Standfüße (22) aufweist, wobei jeder dieser Standfüße (22) wenigstens einen sich in Umfangsrichtung (U) in Bezug auf eine sich entlang der Längsrichtung (L) erstreckenden Mittelachse (M) des Bodenbereichs (2) über einen Standbereich-Umfangswinkel (α_{SB}) erstreckenden Standbereich (24) mit jeweils wenigstens einer, insbesondere im Wesentlichen ebenen, Standfläche (23) zum aufrechten Stehen des Kunststoffbehältnisses (1) aufweist, wobei zwischen zwei insbesondere benachbarten dieser Standfüße (22) wenigstens eine Nut (30) mit einem als Zugband wirkenden Nutgrund (32) angeordnet ist, welcher sich in radialer Richtung (R) nach außen verbreitert, **dadurch gekennzeichnet, dass**
der Bodenbereich (2) derart ausgebildet ist, dass eine entlang des Bodenbereichs (2) von einer geometrischen Mitte (MS) des Standbereichs (24) eines Standfußes (22) zu dem Nutgrund (32) der benachbarten Nut, mit konstantem Abstand zur Mittelachse (M) verlaufende Bodenlinie (BL) einen geometrischen Verlauf von entlang der Mittelachse (M) betrachteten Höhenwerten (H) in Abhängigkeit eines in Umfangrichtung (U) in Bezug auf die geometrische Mitte (MS) des Standbereichs (24) gemessenen Drehwinkels (α) aufweist, welcher nach Durchlaufen des Standbereichs (24) derart stark abfällt, dass sich ein im Standbereich (24) angenommener maximaler Höhenwert (H_{S}) innerhalb eines Linienabschnitts, welcher höchstens 30% eines Drehwinkels (α_{T/2}) zwischen der geometrischen Mitte des Standbereichs (MS) und der geometrischen Mitte des Nutgrunds (MN) der benachbarten Nut (30) einnimmt, um wenigstens 8%, bevorzugt wenigstens 10%, bevorzugt wenigstens 12% und besonders bevorzugt um wenigstens 14% in Bezug auf einen maximalen Höhenunterschied (A) der Bodenlinie (BL) verringert.

4. Kunststoffbehältnis (1) nach einem der vorangegangenen Ansprüche,
**dadurch gekennzeichnet, dass**
der Bodenbereich (2) derart ausgebildet ist, dass eine entlang des Bodenbereichs (2) von einer geometrischen Mitte des Standbereichs (MS) eines Standfußes (22) über einen Wendepunktbereich (W), in welchem sich eine Orientierung der Krümmung des Bodenbereichs (2) ändert, zu dem Nutgrund (32) der benachbarten Nut, mit konstantem Abstand zur Mittelachse (M) verlaufende Bodenlinie (BL) einen geometrischen Verlauf von entlang der Mittelachse betrachteten Höhenwerten (H) in Abhängigkeit eines in Umfangrichtung (U) in Bezug auf die geometrische Mitte des Standbereichs (24) gemessenen Drehwinkels (α) aufweist, welcher in einem an den Standbereich ( 24) angrenzenden Bereich derart stark abfällt, dass sich ein im Standbereich (24) angenommener maximaler Höhenwert (H_{S}) innerhalb eines Linienabschnitts der Bodenlinie (BL), welcher höchstens 30% eines Drehwinkels zwischen der geometrischen Mitte des Standbereichs (MS) und der geometrischen Mitte des Nutgrunds (MN) der benachbarten Nut einnimmt, um wenigstens 15%, bevorzugt wenigstens 20%, bevorzugt wenigstens 25% und besonders bevorzugt um wenigstens 30% in Bezug auf einen Höhenunterschied der Bodenlinie (BL) zum in dem Wendepunktbereich (W) angenommenen Höhenwert verringert.

5. Kunststoffbehältnis (1) nach einem der vorangegangenen Ansprüche,
**dadurch gekennzeichnet, dass**
an den Abflachungsbereich des Standfußes, sowohl in Richtung der benachbarten Nut und/oder des Nutgrunds der benachbarten Nut gesehen als auch in Richtung des Standbereichs des Standfußes gesehen, jeweils ein Wölbungsbereich mit einem Krümmungsverlauf derselben Orientierung angrenzt, wobei der Betrag der Krümmung innerhalb der Wölbungsbereiche wenigstens ein Maximum in Bezug auf die innerhalb des Abflachungsbereichs angenommenen Krümmungsbeträge annimmt.

6. Kunststoffbehältnis (1) nach wenigstens einem der vorangegangenen Ansprüche, **dadurch gekennzeichnet, dass**
der Wölbungsbereich den Abflachungsbereich wenigstens im Wesentlichen halbumfänglich und bevorzugt im Wesentlichen vollumfänglich umgibt.

7. Kunststoffbehältnis (1) nach dem vorangegangenen Anspruch,
**dadurch gekennzeichnet, dass**
der Betrag der Flächenkrümmung innerhalb des gesamten Abflachungsbereichs kleiner ist als der Betrag der Flächenkrümmung des den Abflachungsbereich wenigstens halbumfänglich und bevorzugt vollumfänglich umgebenden Wölbungsbereichs.

8. Kunststoffbehältnis (1) nach wenigstens einem der vorangegangenen Ansprüche, **dadurch gekennzeichnet, dass**
eine durch einen Längsschnitt durch den Bodenbereich gebildete Querschnittskontur, dessen Längsschnittebene durch den Abflachungsbereich eines Standfußes sowie durch die Mittelachse (M) des Kunststoffbehältnisses (1) verläuft, einen Krümmungsverlauf aufweist, welcher im Vergleich zu den umgebenden Abschnitten, bevorzugt im Vergleich zu dem Wölbungsbereich, in dem Abflachungsbereich ein lokales Minimum einnimmt.

9. Kunststoffbehältnis (1) nach einem der vorangegangenen Ansprüche,
**dadurch gekennzeichnet, dass**
sich der Abflachungsbereich (40) in Richtung des Nutgrunds (32) verjüngt.

10. Kunststoffbehältnis (1) nach einem der vorangegangenen Ansprüche,
**dadurch gekennzeichnet, dass**
der Abflachungsbereich (40) im Wesentlichen eben ausgebildet ist.

11. Kunststoffbehältnis (1) nach einem der vorangegangenen Ansprüche,
**dadurch gekennzeichnet, dass**
der Abflachungsbereich (40) einen Flächeninhalt aufweist, welcher wenigstens ein Viertel, bevorzugt wenigstens ein Drittel, bevorzugt wenigstens die Hälfte des Flächeninhalts, bevorzugt wenigstens denselben Flächeninhalt, bevorzugt wenigstens den doppelten und besonderes bevorzugt wenigstens den dreifachen Flächeninhalt der, insbesondere im Wesentlichen ebenen, Standfläche des Standbereichs des Standfußes zum aufrechten Stehen des Kunststoffbehältnisses beträgt.

12. Kunststoffbehältnis (1) nach einem der vorangegangenen Ansprüche,
**dadurch gekennzeichnet, dass**
die wenigstens drei Standfüße jeweils zwei, insbesondere symmetrisch angeordnete, Abflachungsbereiche (40) aufweisen, welche im Querschnitt wenigstens abschnittsweise dem Verlauf der Schenkel eines, bevorzugt gleichschenkligen, Dreiecks folgen.

13. Kunststoffbehältnis (1) nach dem vorangegangenen Anspruch,
**dadurch gekennzeichnet, dass**
ein Abstand zwischen einer Spitze (S) des, bevorzugt gleichschenkligen, Dreiecks und dem Standfuß, insbesondere dem Standbereich des Standfußes, zwischen 0 und 20 mm beträgt, bevorzugt zwischen 2 mm und 10 mm.

14. Kunststoffbehältnis (1) nach einem der beiden vorangegangenen Ansprüche,
**dadurch gekennzeichnet, dass**
ein Öffnungswinkel des Dreiecks, welcher die Spitze des Dreiecks einschließt, zwischen 45° und 170°, bevorzugt zwischen 80° und 150°, bevorzugt zwischen 80° und 120° und besonders bevorzugt zwischen 90° und 120° liegt.

15. Kunststoffbehältnis (1) nach wenigstens einem der vorangegangenen Ansprüche, **dadurch gekennzeichnet, dass**
der Abflachungsbereich einem im Wesentlichen parabelförmigen Verlauf folgt.

16. Kunststoffbehältnis (1) nach wenigstens einem der vorangegangenen Ansprüche, **dadurch gekennzeichnet, dass**
der Standfuß wenigstens zwei, insbesondere symmetrisch angeordnete, Abflachungsbereiche aufweist und die beiden Abflachungsbereiche und der Standbereich (24) des Standfußes im Querschnitt wenigstens abschnittsweise einem Verlauf eines offenen, insbesondere gleichschenkligen, Trapezes folgt.

17. Kunststoffbehältnis (1) nach wenigstens einem der vorangegangenen Ansprüche, **dadurch gekennzeichnet, dass**
die, insbesondere beiden, Fußseitenbereiche des Standfußes abschnittsweise als durch eine Freiformfläche gebildete Fußflankenflächen ausgebildet sind, wobei bevorzugt die Fußseitenbereich im Wesentlichen vollständig außerhalb des Wölbungsbereichs als Freiformflächen ausgebildet sind.

18. Blasformeinrichtung (100) zur Herstellung, insbesondere eines Bodenbereichs (2), von Kunststoffbehältnissen (1) mit einer Innenwandung, gegen welche ein Kunststoffbehältnis (1) im Rahmen eines Blasformvorgangs expandierbar ist,
**dadurch gekennzeichnet, dass**
die Innenwandung eine Kontur aufweist, welche geeignet und bestimmt ist, ein Kunststoffbehältnis (1) nach wenigstens einem der vorangegangenen Ansprüche zu erzeugen.

19. Blasformeinrichtung gemäß dem vorhergehenden Anspruch,
**dadurch gekennzeichnet, dass**
die Blasformeinrichtung wenigstens einen Standfußausbildungsbereich (122) zur Herstellung eines Standfußes (22) des Kunststoffbehältnisses (1) aufweist, wobei die Innenwandung der Blasformeinrichtung im Bereich des Standfußausbildungsbereichs (122) wenigstens einen Abflachungsbereich (140) und bevorzugt zwei Abflachungsbereiche (140) aufweist.

20. Blasformeinrichtung gemäß dem vorhergehenden Anspruch,
**dadurch gekennzeichnet, dass**
jeder zur Ausbildung eines Standfußes ausgestaltete Standfußausbildungsbereich (122) der Blasformeinrichtung wenigstens eine Öffnung (130), insbesondere zur Entlüftung der Blasformeinrichtung, aufweist, wobei die wenigstens eine Öffnung (130) wenigstens bereichsweise und bevorzugt vollständig in dem Abflachungsbereich (140) der Blasform angeordnet ist.
